# EUROPEAN PATENT SPECIFICATION

(11) **EP 3 747 617 B1**
(45) Date of publication and mention of the grant of the patent: **01.06.2022**
(21) Application number: 19746698.0
(22) Date of filing: 31.01.2019
(51) Int. Cl.: B29C 45/16, B29C 45/14, B29C 45/76, B65G 61/00, B29L 11/00

(54) **INJECTION MOLDING MACHINE AND INJECTION MOLDING SYSTEM**
SPRITZGIESSMASCHINE UND SPRITZGIESSSYSTEM
MACHINE ET SYSTÈME DE MOULAGE PAR INJECTION

(30) Priority: 31.01.2018 JP 2018016004
(43) Date of publication of application: 09.12.2020
(73) Proprietor: Sumitomo Heavy Industries, Ltd., Tokyo 141-6025 (JP)
(72) Inventor: SUKEDA, Naofumi, Chiba-shi, Chiba 263-0001 (JP)
(74) Representative: Louis Pöhlau Lohrentz
(86) International application number: PCT/JP2019/003419
(87) International publication number: WO 2019/151410

(56) References cited:
- JP-A- 2013 049 143
- JP-A- 2013 049 143
- US-A1- 2014 332 991
- US-A1- 2014 332 991
- US-A1- 2017 341 282

## Description

### Technical Field

The present invention relates to an injection molding machine and an injection molding system.

### Background Art

An injection molding method disclosed in PTL 1 includes a process A of injecting a melted resin into a cavity of a mold so as to mold a primary molding product and a process B of inj ecting the same resin as that used in the process A to a portion of the primary molding product or the entire primary molding product and molding a molding product obtained by melting the primary molding product and the injected resin to integrate the primary molding product and the injected resin with each other. The finished product is molded in several stages, and thus, a cycle time is shortened and productivity is improved. In addition, by making a thickness to be molded at a final injection thinner than a thickness of the finished product, a finished product having a target shape and high surface precision can be obtained. PTL 2 discloses a method for manufacturing a multilayer plastic lens, with which a corresponding plastic lens can be manufactured with high quality rapidly and in a cost-effective manner. PTL 3 discloses a control method for starting and ending continuous molding of a rotary injection molding machine. PTL 4 discloses a method for the production of an injection-moulded part as well as a device for the production of an injection-moulded part.

### Citation List

### Patent Literature

[PTL 1] Japanese Unexamined Patent Publication No. 09-225961
[PTL 2] United States Patent Publication No. 2017/341282
[PTL 3] Japanese Unexamined Patent Publication No. 2013/049143
[PTL 4] United States Patent Publication No. 2014/332991

### Summary of Invention

### Technical Problem

The mold disclosed in PTL 1 has a two-step upper and lower structure and includes a cavity space for molding a secondary molding product on an upper side and a cavity space for molding a tertiary molding product on a lower side. The two cavity spaces are filled with a melted resin at the same time. In addition, the primary molding product is molded by a separate mold.

The tertiary molding product is molded by disposing the secondary molding product in a portion of the lower cavity space and filling another portion of the lower cavity space with the melted resin. Therefore, the tertiary molding product cannot be obtained if the secondary molding product is not in stock.

If the entire lower cavity is filled with the molten resin when the secondary molding product is not in stock, a volume of the lower cavity space is large. Accordingly, unevenness of cooling shrinkage occurs, and wrinkles called sink marks are generated on a surface of the molding product. Moreover, since a defective product is manufactured, a molding material is wasted.

A main object of an aspect of an embodiment is to improve a quality of the molding product and reduce the waste of the molding material.

### Solution to Problem

According to an aspect of an embodiment, there is provided an injection molding machine including: an injection unit configured to fill a plurality of cavity spaces of a mold unit with a molding material; and a controller configured to control the injection unit, in which an nth molding product which is obtained by sequentially moving a molding product between n cavity spaces of the plurality of cavity spaces to perform insert molding is molded as a finished product, the n being a natural number of 2 or more, the controller has a setting storage unit in which a setting of a control to fill the plurality of cavity spaces with the molding material is stored, the setting storage unit is configured to store a setting of a control of filling a predetermined cavity space of the plurality of cavity spaces with the molding material and of not filling a cavity space other than the predetermined cavity space with the molding material, and the controller is configured to monitor the number of stocks of an mth molding product, and select a setting of a control stored in the setting storage unit based on the number of stocks of the mth molding product, the m being a natural number of 1 or more and n-1 or less.

### Advantageous Effects of Invention

According to an aspect of the embodiment, it is possible to improve a quality of a molding product and reduce waste of a molding material.

### Brief Description of Drawings

Fig. 1 is a view showing a state when a mold opening of an injection molding machine according to an embodiment is completed.
Fig. 2 is a view showing a state when a mold of the injection molding machine according to the embodiment is clamped.
Fig. 3 is a plan view showing an injection molding system according to an embodiment.
Figs. 4A to 4C are views showing a primary molding product which is manufactured by the injection molding system according to the embodiment.
Figs. 5A to 5C are views showing a secondary molding product which is manufactured by the injection molding system according to the embodiment.
Figs. 6A to 6C are views showing a tertiary molding product which is manufactured by the injection molding system according to the embodiment.
Figs. 7A and 7B are sectional views showing a head light unit having the tertiary molding product according to the embodiment.
Fig. 8 is a view when a movable mold according to the embodiment is viewed from a stationary mold side.
Fig. 9 is a sectional view of a mold unit taken along line IX-IX of Fig. 8.
Fig. 10 is a sectional view of the mold unit taken along line X-X of Fig. 8.
Fig. 11 is a perspective view showing a temperature control flow path of the mold unit according to the embodiment.
Fig. 12 is a view showing the overall conveyance machine according to an embodiment.
Fig. 13 is a perspective view showing a holding unit which is a distal end portion of the conveyance machine of Fig. 12.
Fig. 14 is a view when the holding unit shown in Fig. 13 is viewed from a negative side in an x direction.
Fig. 15 is a view when the holding unit shown in Fig. 13 is viewed from a positive side in the x direction.
Figs. 16A and 16B are views showing an operation of the holding unit shown in Fig. 13.
Figs. 17A and 17B are plan views showing an operation of a gate cutting machine according to an embodiment.
Figs. 18A and 18B are views showing an operation of an inverting machine according to an embodiment.
Fig. 19 is a plan view showing a state of the gate cutting machine when the conveyance machine according to the embodiment picks up the cut molding product, which is separated from a disused product, from the gate cutting machine.
Fig. 20 is a plan view showing a cooling table according to an embodiment.
Figs. 21A and 21B are sectional views showing a main portion of the cooling table according to the embodiment.
Fig. 22 is a plan view showing an alignment machine according to an embodiment.
Fig. 23 is a flowchart showing operation flows of the injection molding machine, the conveyance machine, and the gate cutting machine according to the embodiment.
Fig. 24 is a flowchart showing the operation flows of the injection molding machine, the conveyance machine, and the gate cutting machine subsequent to Fig. 23.
Fig. 25 is a sectional view showing a valve of the mold unit according to the embodiment.
Fig. 26 is a functional block diagram showing components of a controller according to an embodiment.
Fig. 27 is a flowchart showing processing of a setting selection unit based on a detection result of a total production number detecting unit according to an embodiment.
Fig. 28 is a flowchart showing processing of the setting selection unit based on a monitoring result of a stock number monitoring unit according to an embodiment.
Fig. 29 is a flowchart showing processing of the setting selection unit based on a detection result of a delivery detection unit according to an embodiment.
Fig. 30 is a flowchart showing a process from molding of the primary molding product to immediately before gate cutting of the secondary molding product.
Fig. 31 is a flowchart showing a process from the gate cutting of the secondary molding product to discharging of the tertiary molding product.
Fig. 32 is a flowchart showing processing of a setting selection unit according to a first modification example.
Fig. 33 is a flowchart showing processing of a setting selection unit according to a second modification example.

### Description of embodiments

Hereinafter, an embodiment of the present invention is described with reference to the drawings. In each drawing, the same or corresponding reference numerals are assigned to the same or corresponding configurations, and descriptions thereof are omitted.

### (Injection Molding Machine)

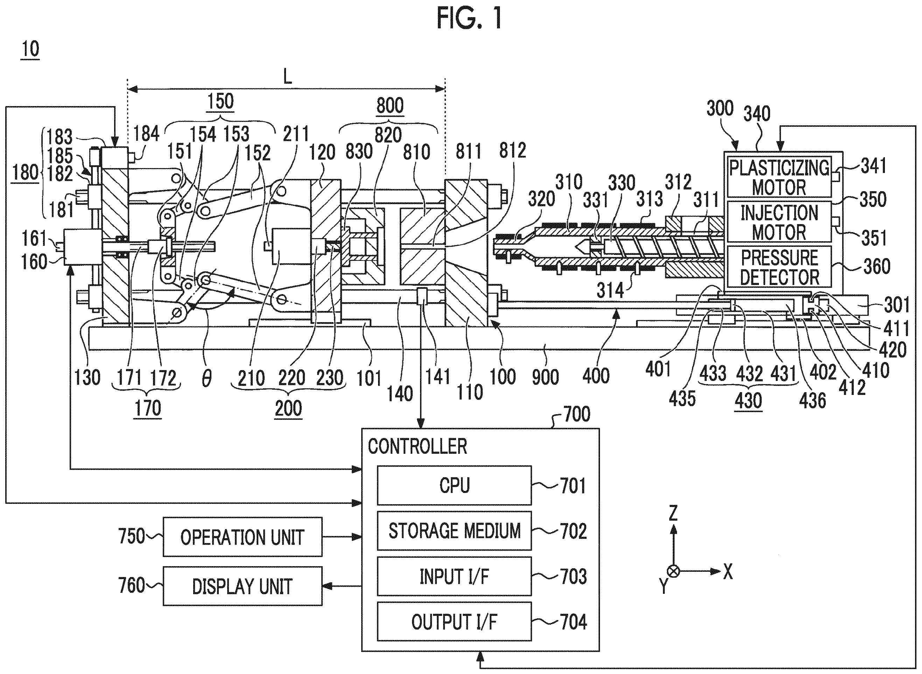

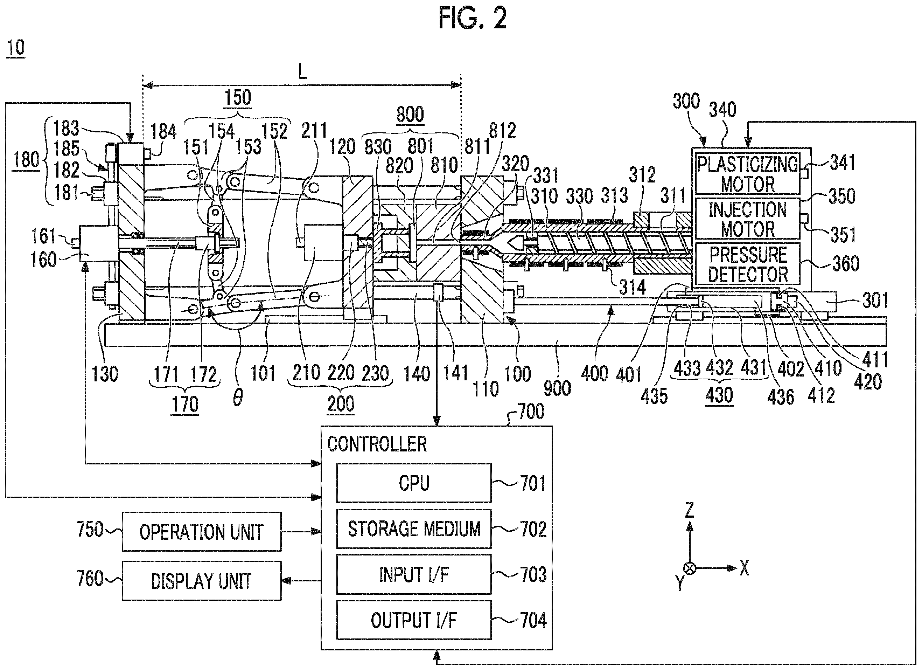

Fig. 1 is a view showing a state when a mold opening of an injection molding machine according an embodiment is completed. Fig. 2 is a view showing a state when a mold of the injection molding machine according to the embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. A negative side in the Y direction is referred to as an operation side, and a positive side in the Y direction is referred to as a counter operation side. The injection molding machine 10 molds an nth (n is a natural number of 2 or more) molding product as a finished product. The nth molding product is obtained by sequentially moving the molding product between n (n is a natural number of 2 or more) cavity spaces of a plurality of cavity spaces and performing insert molding. The insert molding is a molding in which an insert material is disposed in a portion of the cavity space and a remaining portion of the cavity space is filled with a molding material. In the present embodiment, n is 3. However, n may be any natural number of 2 or more, and may be 2 or 4 or more, for example. In the present embodiment, the number of times of the insert molding is n-1 times, but is not limited to n-1 times . A primary molding product may be insert-molded, and in this case, the number of times of the insert molding is n. As shown in Figs. 1 and 2, the injection molding machines 10 include the mold clamping unit 100, an ejector unit 200, an injection unit 300, a moving unit 400, a controller 700, and a frame 900. Hereinafter, each component of the injection molding machine 10 will be described.

### (Mold Clamping Unit)

In descriptions of the mold clamping unit 100, a movement direction (for example, X positive direction) of a movable platen 120 when a mold is closed is defined as a front side, and a movement direction (for example, X negative direction) of the movable platen 120 when the mold is open is defined as a rear side.

The mold clamping unit 100 performs mold closing, pressurization, mold clamping, depressurization, and mold opening of a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, pressurization, clamping, depressurization, and opening of the mold are performed. The mold unit 800 includes the stationary mold 810 and the movable mold 820.

The toggle support 130 is disposed so as to be separated from the stationary platen 110, and is placed on the frame 900 to be movable in mold opening and closing directions. In addition, the toggle support 130 may be movably disposed along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movably disposed in the mold opening and closing directions with respect to the frame 900. However, the toggle support 130 may be fixed to the frame 900, and the stationary platen 110 may be movably disposed in the mold opening and closing directions with respect to the frame 900.

The stationary platen 110 and the toggle support 130 are connected to each other with a gap L in the mold opening and closing directions by the tie bar 140. A plurality of (for example, four) tie bars 140 may be used. The plurality of tie bars 140 are disposed to be parallel in the mold opening and closing directions and extend according to a mold clamping force . A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated. In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other. In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are arranged in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are arranged in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle q (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the gap L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drive gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. As a result, the position of the toggle support 130 with respect to the tie bar 140 is adjusted, and the gap L between the stationary platen 110 and the toggle support 130 is adjusted.

In addition, in the present embodiment, the screw nut 182 is rotatably held with respect to the toggle support 130 and the tie bar 140 in which the screw shaft 181 is formed is fixed to the stationary platen 110. However, the present invention is not limited to this.

For example, the screw nut 182 may be rotatably held with respect to the stationary platen 110 and the tie bar 140 may be fixed to the toggle support 130. In this case, the gap L can be adjusted by rotating the screw nut 182.

Moreover, the screw nut 182 may be fixed to the toggle support 130 and the tie bar 140 may be rotatably held with respect to the stationary platen 110. In this case, the gap L can be adjusted by rotating the tie bar 140.

Moreover, the screw nut 182 may be fixed to the stationary platen 110 and the tie bar 140 may be rotatably held with respect to the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 rotates one of the screw shaft 181 and the screw nut 182 which are screwed to each other to adjust the gap L. A plurality of mold space adjustment mechanisms 180 may be used, and a plurality of mold space adjustment motor 183 may be used.

Moreover, in order to adjust the gap L, the mold space adjustment mechanism 180 of the present embodiment includes the screw shaft 181 formed on the tie bar 140 and the screw nut 182 screwed to the screw shaft 181. However, the present invention is not limited to this.

For example, the mold space adjustment mechanism 180 may include a tie bar temperature controller which controls the temperature of the tie bar 140. The tie bar temperature controller is attached to each tie bar 140 and coordinates the temperatures of the plurality of tie bars 140. The tie bar 140 is lengthened by heat expansion and the gap L increases as the temperature of the tie bar 140 increases. The temperatures of the plurality of tie bars 140 can be adjusted independently.

For example, the tie bar temperature controller includes a heating unit such as a heater and controls the temperature of the tie bar 140 by heating. The tie bar temperature controller may include a cooler such as a water cooling jacket and may control the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions. The vertical type mold clamping unit includes a lower platen, an upper platen, a toggle support, tie bars, a toggle mechanism, a mold clamping motor, or the like. Any one of the lower platen and the upper platen is used as a stationary platen and the other is used as a movable platen. A lower mold is attached to the lower platen and an upper mold is attached to the upper platen. The mold unit includes the lower mold and the upper mold. The lower mold may be attached to the lower platen via a rotary table. The toggle support is disposed below the lower platen and is connected to the upper platen via the tie bars. The upper platen and the toggle support are connected to each other with a gap in mold opening and closing directions by the tie bars. The toggle mechanism is disposed between the toggle support and the lower platen and lifts or lowers the movable platen. The mold clamping motor operates the toggle mechanism. In a case where the mold clamping unit is a vertical mold clamping unit, in general, the number of the tie bars is three. In addition, the number of the tie bars is not particularly limited.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (for example, X positive direction) of the movable platen 120 when the mold is closed is defined as the front side, and the movement direction (for example, X negative direction) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the controller 700.

In the ejection process, the ejector motor 210 is driven to move the ejector rod 230 forward from a standby position to an ejection position at a set movement speed, and thus, the movable member 830 moves forward and the molding product is ejected. Thereafter, the ejector motor 210 is driven to move the ejector rod 230 rearward at a set movement speed, and thus, the movable member 830 moves rearward to an original standby position. For example, a position or movement speed of the ejector rod 230 is detected using an ejector motor encoder 211. The ejector motor encoder 211 detects the rotation of the ejector motor 210 and sends a signal indicating a detection result to the controller 700. In addition, an ejector rod position detector which detects the position of the ejector rod 230 and an ejector rod movement speed detector which detects the movement speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (for example, X negative direction) of a screw 330 during filling is referred to as a front side, and a movement direction (for example, X positive direction) of the screw 330 during plasticizing is referred to as a rear side.

The injection unit 300 is installed on a slide base 301, and the slide base 301 is disposed so as to be movable forward or rearward with respect to the frame 900. The injection unit 300 is disposed to be movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a feed port 311 to the inner portion of the cylinder 310. For example, the molding material includes a resin or the like. For example, the molding material is formed into pellets and is supplied to the feed port 311 in a solid state. The feed port 311 is formed on a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are arranged in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. If the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are arranged in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the set pressure, in order to protect the mold, the screw 330 moves forward at a movement speed slower than the set movement speed such that the detection value of the pressure detector 360 is the set pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Moving Unit)

Similarly to the descriptions of the injection unit 300, in descriptions of the moving unit 400, the movement direction (for example, X negative direction) of the screw 330 during filling is referred to as a front side, and the movement direction (X positive direction) of the screw 330 during plasticizing is referred to as a rear side.

The moving unit 400 moves the injection unit 300 rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Controller)

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the molding clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process . The start of the mold clamping process may coincide with the start of the filling process. The end of the depressurization process coincides with the start of the mold opening process. In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the molding closing process . Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 or a display unit 760. The operation unit 750 receives an input operation from a user and outputs a signal corresponding to the input operation to the controller 700. The display unit 760 displays a display screen corresponding to the input operation of the operation unit 750 under the control of the controller 700.

The display screen is used for the setting of the injection molding machine 10 or the like. A plurality of display screens are provided, and thus, are displayed to be switched or to overlap each other. A user operates the operation unit 750 while viewing the display screen displayed by the display unit 760 to perform the setting (including an input of a set value) of the injection molding machine 10 or the like.

For example, the operation unit 750 and the display unit 760 may include a touch panel to be integrated with each other. In addition, in the present embodiment, the operation unit 750 and the display unit 760 are integrated with each other. In addition, a plurality of operation units 750 may be provided. The operation unit 750 and the display unit 760 are disposed on the negative side in the Y direction of the mold clamping unit 100 (more specifically, the stationary platen 110). The negative side in the Y direction is referred to as the operation side, and the positive side in the Y direction is referred to as the counter operation side.

### (Injection Molding System)

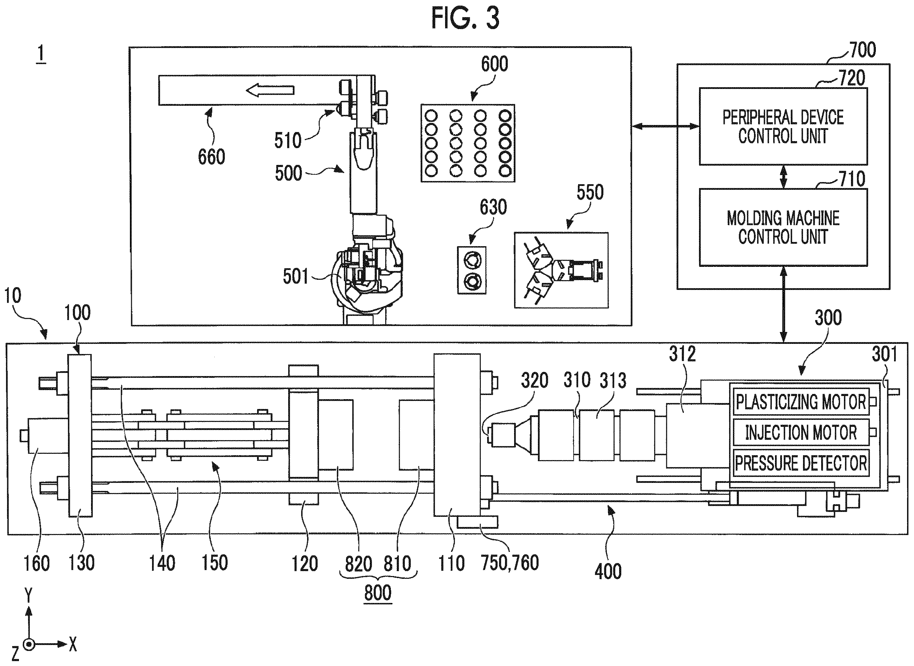

Fig. 3 is a plan view showing an injection molding system according to an embodiment. An injection molding system 1 includes a conveyance machine 500, a gate cutting machine 550, a cooling table 600, an alignment machine 630, a finished product conveyance machine 660 in addition to the injection molding machine 10 and the mold unit 800. For example, the conveyance machine 500, the gate cutting machine 550, the cooling table 600, the alignment machine 630, and the finished product conveyance machine 660 are disposed on a positive side in the Y direction based on the injection molding machine 10. The positive side in the Y direction is also referred to as a "counter operation side", and a negative side in the Y direction is also referred to an "operation side". Accordingly, as shown in Fig. 3, the operation unit 750 is disposed on the negative side in the Y direction of the stationary platen 110.

The conveyance machine 500 conveys the molding product molded inside the mold unit 800 to the mold unit 800, the gate cutting machine 550, the cooling table 600, the alignment machine 630, and the finished product conveyance machine 660. The mold unit 800, the gate cutting machine 550, the cooling table 600, the alignment machine 630, and the finished product conveyance machine 660 are disposed so as to surround a conveyance base 501 of the conveyance machine 500. Details of the conveyance machine 500 will be described later.

The gate cutting machine 550 separates the molding product from a disused product. For example, the disused product is a molding material which is solidified in a flow path from an injection port 812 (an upstream end of a sprue 811) for injecting the molding material of the mold unit 800 to an inlet of the cavity space 801. The disused product may be crushed and recycled as a molding material or may be discarded. The gate cutting machine 550, the alignment machine 630, and the conveyance base 501 are adjacent to the injection molding machine 10 so as to be arranged in a line from a positive side in the X direction to a negative side in the X direction in this order. Details of the gate cutting machine 550 will be described later.

The cooling table 600 cools the molding product. The cooling table 600 cools a primary molding product and a secondary molding product, and details of the cooling table 600 will be described later. The primary molding product is an insert material (hereinafter, also referred to as an "insert material for a secondary molding product") for molding the secondary molding product, and is inserted into the mold unit 800. Similarly, the secondary molding product is used as an insert material (hereinafter, also referred to as an "insert material for a tertiary molding product") for molding the tertiary molding product, and is inserted into the mold unit 800. That is, the cooling table 600 cools the insert material. The cooling table 600 is disposed on the positive side in the Y direction (a side opposite to the injection molding machine 10) based on the alignment machine 630. Details of the cooling table 600 will be described later.

The alignment machine 630 aligns the insert material before the insert material is inserted into the mold unit 800. For example, the alignment includes centering and a rotation around a core. The centering, a center line of the insert material is matched to a preset position. In the rotation around the core, a direction of the insert material coincides with a preset direction by rotating the insert material about the center line of the insert material. As described above, the alignment machine 630 is adjacent to the injection molding machine 10. Details of the alignment machine 630 will be described later.

The finished product conveyance machine 660 conveys a finished product (for example, the tertiary molding product) to the outside of the injection molding system 1. For example, the finished product conveyance machine 660 includes a belt conveyor. The finished product conveyance machine 660 forms a conveyance path which extends in the X direction, and conveys the finished product toward the positive side in the X direction and the negative side in the X direction. The finished product conveyance machine 660 and the cooling table 600 are disposed to be arranged in a line from the positive side in the X direction toward the negative side in the X direction in this order.

The controller 700 may be provided as a portion of the injection molding machine 10 or may be provided to be separated from the injection molding machine 10. The controller 700 includes a molding machine control unit 710 which controls the injection molding machine 10 and a peripheral device control unit 720 which controls peripheral units of the injection molding machine 10. The peripheral device control unit 720 controls the gate cutting machine 550, the cooling table 600, the alignment machine 630, the finished product conveyance machine 660, or the like. In addition, the molding machine control unit 710 and the peripheral device control unit 720 may include an independent computer.

### (Molding Product Manufactured by Injection Molding System)

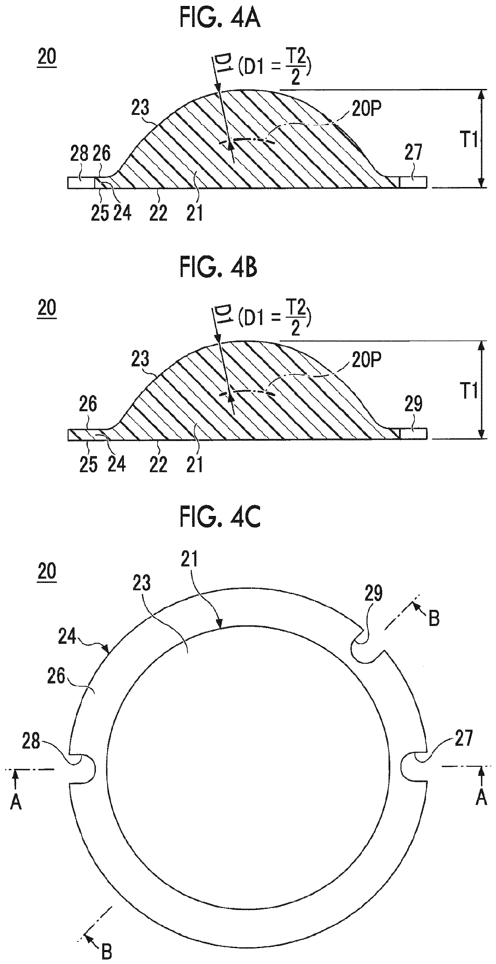

Figs. 4A to 4C are views showing a primary molding product which is manufactured by the injection molding system according to the embodiment. Fig. 4A is a sectional view of the primary molding product taken along line A-A of Fig. 4C, Fig. 4B is a sectional view of the primary molding product taken along line B-B of Fig. 4C, and Fig. 4C is a plan view of the primary molding product. In addition, a configuration of a primary molding product 20 is not limited to the configuration shown in Figs. 4A to 4C.

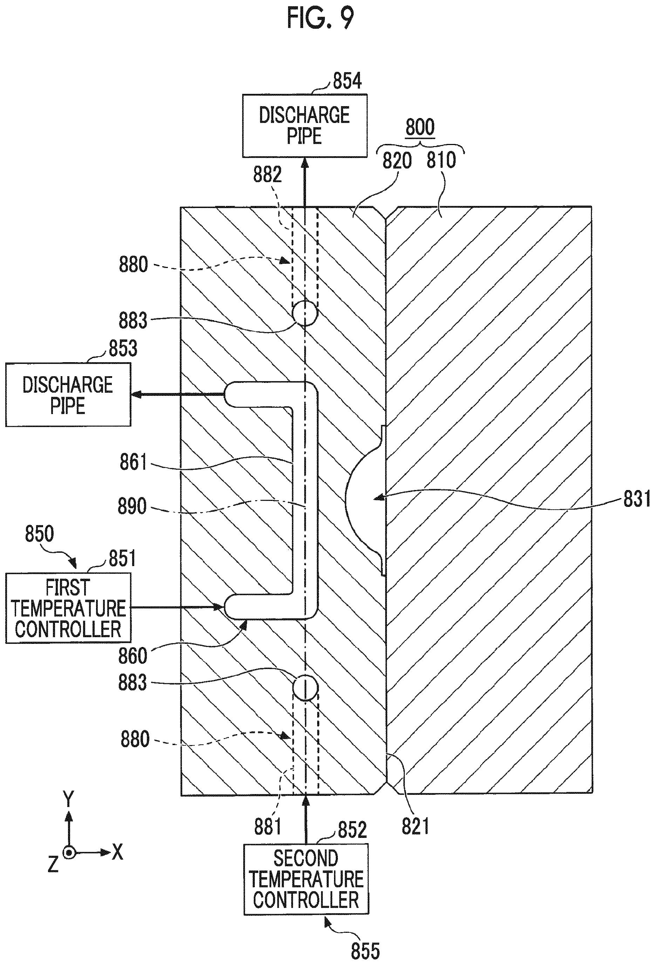

Although the primary molding product 20 will be described in detail later, the primary molding product 20 is molded in a first cavity space 831 (refer to Fig. 9) of the mold unit 800. For example, the primary molding product 20 includes a lens portion 21 and a flange portion 24. The lens portion 21 include a circular flat surface 22 and a domed convex curved surface 23 which protrudes toward one side of the flat surface 22. The lens portion 21 is formed line-symmetrically. A symmetric center line is a line which passes through a center of the circular flat surface 22 and is perpendicular to the flat surface 22.

The flange portion 24 is formed in an annular shape and protrudes radially outward from the lens portion 21. The flange portion 24 is a first plate surface 25 which is flush with the flat surface 22 of the lens portion 21 and a second plate surface 26 which is disposed on the same side (an upper side in Figs. 4A and 4B) as the convex curved surface 23 based on the first plate surface 25. The first plate surface 25 and the second plate surface 26 are parallel to each other. A first notch 27, a second notch 28, and a third notch 29 are formed on an outer periphery of the flange portion 24 with gaps in a circumferential direction. For example, the first notch 27 and the second notch 28 are formed at a pitch of 180°.

The primary molding product 20 is gradually cooled inside the mold unit 800 and is gradually solidified from a surface coming into contact with the mold unit 800 toward the inside. In the present specification, a distance from a portion solidified initially to a portion solidified last is referred to as a cooling distance. The cooling distance is used to set the cooling time. The cooling time is set to be increased as the cooling distance increases.

For example, a cooling distance D1 of the primary molding product 20 is obtained as a depth when the entire surface of the primary molding product 20 is evenly scraped until a volume of the primary molding product 20 reaches zero. If the entire surface of the primary molding product 20 is evenly scraped gradually, for example, finally, the primary molding product 20 becomes a surface 20P (refer to Figs. 4A and 4B). The surface 20P is the portion which is solidified last.

When the volume of the primary molding product 20 reaches zero, in a case where the primary molding product 20 becomes the surface 20P, an operation of making the surface 20P into a line or a point is not performed. This is because the entire surface 20P is a portion of the primary molding product 20 which is solidified last. In addition, when the volume of the primary molding product 20 reaches zero, in the present embodiment, the primary molding product 20 becomes the surface 20P. However, the primary molding product 20 may be a line or a point.

When the cooling distance D1 of the primary molding product 20 is obtained, a direction in which the surface of the primary molding product 20 is scraped is a direction perpendicular to the surface of the primary molding product 20.

The cooling distance D1 of the primary molding product 20 is the same as a half of a thickness T1 of the lens portion 21.

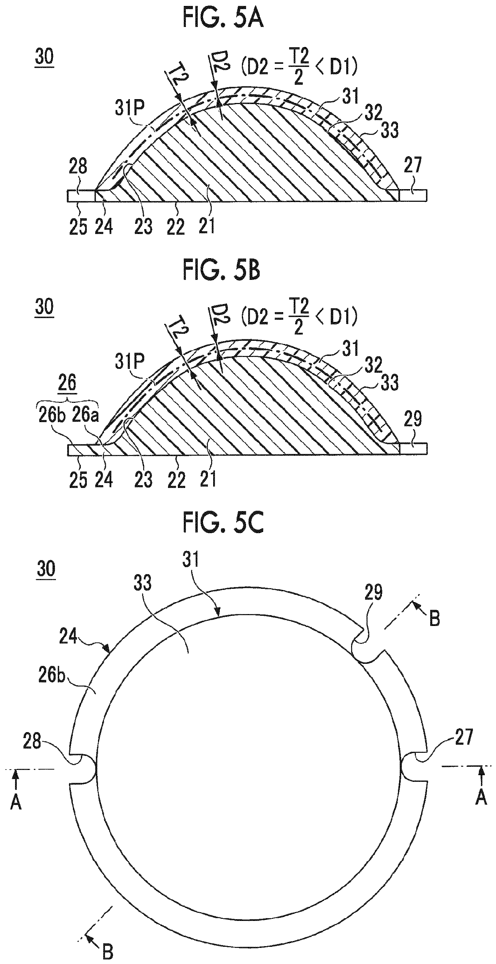

Figs. 5A to 5C are views showing a secondary molding product which is manufactured by the injection molding system according to the embodiment. Fig. 5A is a sectional view of the secondary molding product taken along line A-A of Fig. 5C, Fig. 5B is a sectional view of the secondary molding product taken along line B-B of Fig. 5C, and Fig. 5C is a plan view of the secondary molding product. In addition, a configuration of the secondary molding product 30 is not limited to the configuration shown in Figs. 5A to 5C.

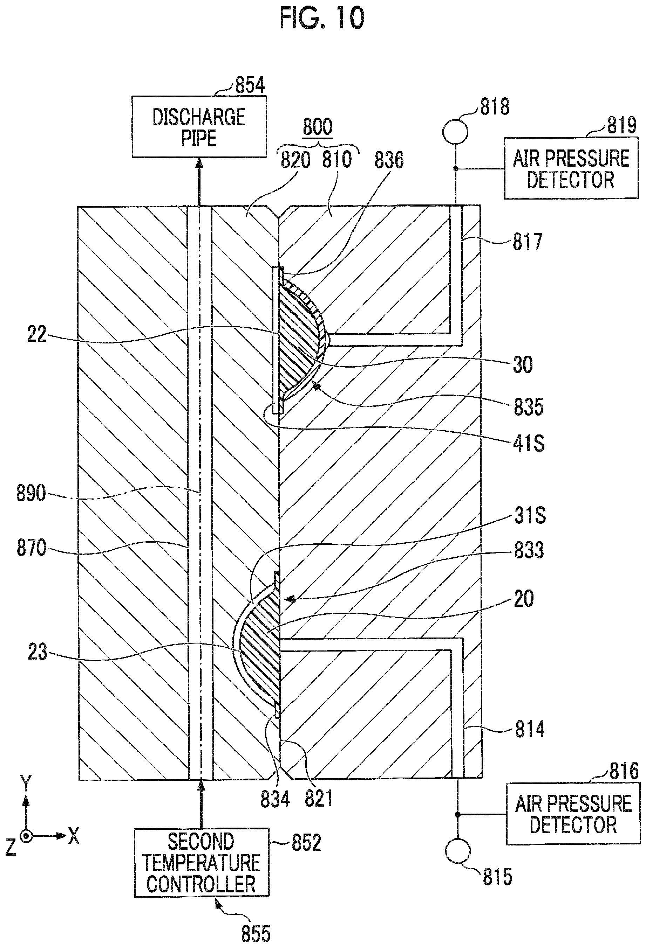

Although described later, the secondary molding product 30 is molded by disposing the primary molding product 20 in a portion of a second cavity space 833 (refer to Fig. 10) of the mold unit 800 as an insert material and filling another portion of the second cavity space 833 with the liquid molding material. For example, the secondary molding product 30 is a secondary lamination portion 31 which is laminated on the surface of the primary molding product 20 in addition to the primary molding product 20. The secondary lamination portion 31 is molded of the same type of resin as that of the primary molding product 20 and may be integrated with the primary molding product 20.

A thickness T2 of the secondary lamination portion 31 is constant. In the present specification, the thickness T2 being constant means that a maximum value of the thickness T2 is 105% or less of an average value of the thickness T2 and a minimum value of the thickness T2 is 95% or more of the average value of the thickness T2.

The secondary lamination portion 31 covers the entire convex curved surface 23 of the lens portion 21. In addition, the secondary lamination portion 31 covers an inner peripheral portion 26a of the second plate surface 26 of the flange portion 24. An outer peripheral portion 26b of the second plate surface 26 is not covered with the secondary lamination portion 31. Accordingly, the first notch 27, the second notch 28, the third notch 29, or the like is formed on the outer peripheral portion 26b of the second plate surface 26.

The secondary lamination portion 31 includes a concave curved surface 32 which is in contact with the convex curved surface 23 of the lens portion 21 and a convex curved surface 33 which is in contact with the mold unit 800. The convex curved surface 33 of the secondary lamination portion 31 has the same shape as that of the convex curved surface 23 of the lens portion 21. That is, the convex curved surface 33 of the secondary lamination portion 31 is obtained by similarly magnifying the convex curved surface 23 of the lens portion 21.

The secondary lamination portion 31 is gradually cooled from both sides of the convex curved surface 33 which is in contact with the mold unit 800 and the concave curved surface 32 which is in contact with the primary molding product 20. Since the thickness T2 between the convex curved surface 33 and the concave curved surface 32 is constant, a half of the thickness T2 becomes a cooling distance D2 (D2 = T2/2).

The cooling distance D2 of the secondary molding product 30 is obtained as a depth when the entire surface of the secondary lamination portion 31 is evenly scraped until a volume of a portion (here, secondary lamination portion 31) solidified from a liquid in the secondary molding reaches zero.

If the entire surface of the secondary lamination portion 31 is evenly scraped gradually, for example, finally, the secondary lamination portion 31 becomes a surface 31P (refer to Figs. 5A and 5B). The surface 31P is the portion which is solidified last in the secondary molding.

The cooling distance D2 (D2 = T2/2) of the secondary molding product 30 is shorter than the cooling distance D1 of the primary molding product 20. That is, the thickness T2 of the secondary lamination portion 31 is smaller than twice the cooling distance D1 of the primary molding product 20.

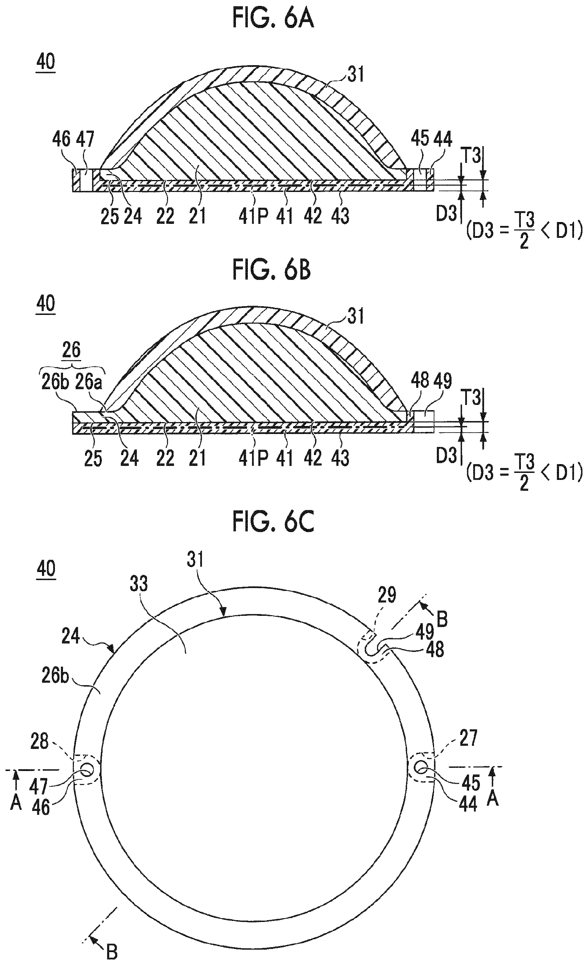

Figs. 6A to 6C are views showing a tertiary molding product which is manufactured by the injection molding system according to the embodiment. Fig. 6A is a sectional view of the tertiary molding product taken along line A-A of Fig. 6C, Fig. 6B is a sectional view of the tertiary molding product taken along line B-B of Fig. 6C, and Fig. 6C is a plan view of the tertiary molding product. In addition, a configuration of a tertiary molding product 40 is not limited to the configuration shown in Figs. 6A to 6C.

Although described later, the tertiary molding product 40 is molded by disposing the secondary molding product 30 in a portion of a third cavity space 835 (refer to Fig. 10) of the mold unit 800 as an insert material and filling another portion of the third cavity space 835 with the liquid molding material. For example, the tertiary molding product 40 is a tertiary lamination portion 41 or the like which is laminated on the surface of the secondary molding product 30 in addition to the secondary molding product 30. The tertiary lamination portion 41 is molded of the same type of resin as that of the secondary molding product 30 and may be integrated with the secondary molding product 30.

A thickness T3 of the tertiary lamination portion 41 is constant. In the present specification, the thickness T3 being constant means that a maximum value of the thickness T3 is 105% or less of an average value of the thickness T3 and a minimum value of the thickness T3 is 95% or more of the average value of the thickness T3.

The tertiary lamination portion 41 is formed so as to cover the entire flat surface 22 of the lens portion 21 and the entire first plate surface 25 of the flange portion 24 in the secondary molding product 30 shown in Figs. 5A to 5C. For example, the tertiary lamination portion 41 is formed in a disk shape. The tertiary lamination portion 41 includes a flat surface 42 which is in contact with the secondary molding product 30 and a flat surface 43 which is in contact with the mold unit 800. The flat surfaces 42 and 43 are parallel to each other.

The tertiary molding product 40 is gradually cooled from both sides of the flat surface 43 which is in contact with the mold unit 800 and the flat surface 42 which is in contact with the secondary molding product 30. Since the thickness T3 between the flat surfaces 42 and 43 is constant, a half of the thickness T3 becomes a cooling distance D3 (D3 = T3/2) .

The cooling distance D3 of the tertiary molding product 40 is obtained as a depth when the entire surface of the tertiary lamination portion 41 is evenly scraped until a volume of a portion (here, tertiary lamination portion 41) solidified from a liquid in the tertiary molding reaches zero.

If the entire surface of the tertiary lamination portion 41 is evenly scraped gradually, for example, finally, the tertiary lamination portion 41 becomes a surface 41P. The surface 41P is a center surface in a thickness direction of the tertiary lamination portion 41 and is a portion which is solidified last in the tertiary molding.

The cooling distance D3 (D3 = T3/2) of the tertiary molding product 40 is shorter than the cooling distance D1 of the primary molding product 20. That is, the thickness T3 of the tertiary lamination portion 41 is smaller than twice the cooling distance D1 of the primary molding product 20.

The tertiary molding product 40 may include a first positioning portion 44, a second positioning portion 46, and a third positioning portion 48 in addition to the tertiary lamination portion 41. The first positioning portion 44, the second positioning portion 46, and the third positioning portion 48 are smaller than the tertiary lamination portion 41, and thus, these are solidified before the tertiary lamination portion 41 is solidified. Similarly to the tertiary lamination portion 41, the first positioning portion 44, the second positioning portion 46, and the third positioning portion 48 may be formed of the same type of resin as that of the secondary molding product 30 and may be integrated with the secondary molding product 30.

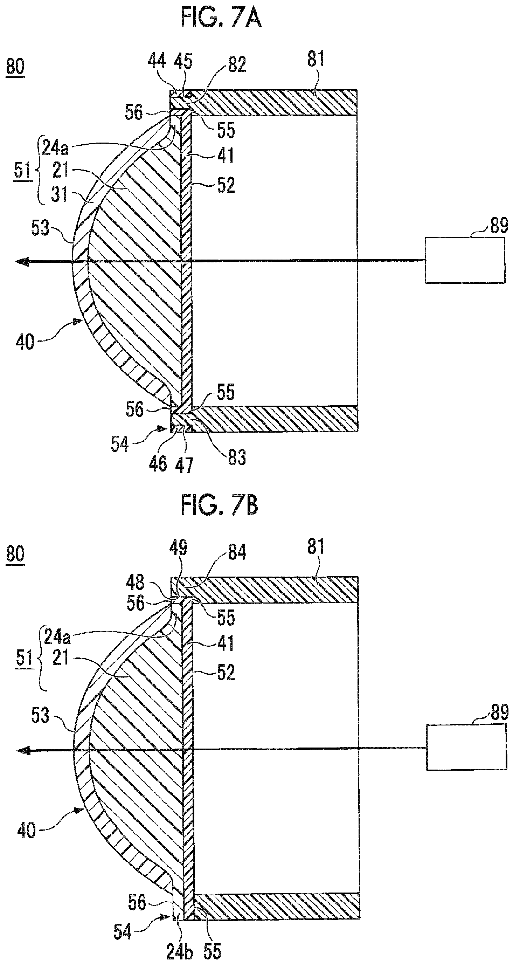

The first positioning portion 44 is formed inside the first notch 27 of the secondary molding product 30 and has a first positioning pin insertion hole 45 having a columnar shape. The first positioning pin insertion hole 45 is smaller than the first notch 27. A first positioning pin 82 (refer to Figs. 7A and 7B) described later is fitted to the first positioning pin insertion hole 45.

The second positioning portion 46 is formed inside the second notch 28 of the secondary molding product 30 and has a second positioning pin insertion hole 47 having a columnar shape . The second positioning pin insertion hole 47 is smaller than the second notch 28. A second positioning pin 83 (refer to Figs. 7A and 7B) described later is fitted to the second positioning pin insertion hole 47.

The third positioning portion 48 is formed inside the third notch 29 of the secondary molding product 30 and has a third positioning pin insertion groove 49 having a U shape in a plan view. The third positioning pin insertion groove 49 is smaller than the third notch 29. A third positioning pin 84 (refer to Figs. 7A and 7B) described later is fitted to the third positioning pin insertion groove 49.

Figs. 7A and 7B are sectional views showing a head light unit having the tertiary molding product according to the embodiment. Fig. 7A shows an attachment state of the tertiary molding product shown in Fig. 6A is attached, and Fig. 7B shows an attachment state of the tertiary molding product shown in Fig. 6B. In Figs. 7A and 7B, an arrow indicates a transmission direction of light. The tertiary molding product 40 shown in Figs. 7A and 7B is used as a portion (specifically, lens) of a head light unit 80 of an automobile. Hereinafter, the tertiary molding product 40 is also referred to as a finished product 40 or a lens 40.

The lens 40 includes a finished product lens portion 51 and a finished product flange portion 54. The finished product lens portion 51 includes the lens portion 21, the inner peripheral portion 24a of the flange portion 24, the secondary lamination portion 31, and a portion of the tertiary lamination portion 41. Meanwhile, the finished product flange portion 54 includes the outer peripheral portion 24b of the flange portion 24, a remaining portion of the tertiary lamination portion 41, the first positioning portion 44, the second positioning portion 46, and the third positioning portion 48.

The finished product lens portion 51 includes a circular flat surface 52 and a domed convex curved surface 53 which protrudes toward one side of the flat surface 52. The finished product lens portion 51 is formed line-symmetrically. A symmetric center line is a line which passes through a center of the circular flat surface 52 and is perpendicular to the flat surface 52.

Meanwhile, the finished product flange portion 54 is formed in an annular shape and protrudes radially outward from the finished product lens portion 51. The finished product flange portion 54 is a first plate surface 55 which is flush with the flat surface 52 of the finished product lens portion 51 and a second plate surface 56 which is disposed on the same side (a left side in Figs. 7A and 7B) as the convex curved surface 53 based on the first plate surface 55. In the finished product flange portion 54, the first positioning pin insertion hole 45, the second positioning pin insertion hole 47, and the third positioning pin insertion groove 49 are formed with gaps in a circumferential direction. For example, the first positioning pin insertion hole 45 and the second positioning pin insertion hole 47 are formed at a pitch of 180°.

The head light unit 80 of an automobile includes the lens 40, a tubular member 81 having a cylindrical shape to which the lens 40 is attached, and a LED 89 which is a light source. The lens 40 is attached to an axial one end surface of the tubular member 81. In addition, like the lens 40, the tubular member 81 may be formed of a resin, and the lens 40 and the tubular member 81 may be welded to each other.

The first positioning pin 82, the second positioning pin 83, and the third positioning pin 84 are provided with gaps in the circumferential direction, on the surface of the tubular member 81 to which the lens 40 is attached. For example, the first positioning pin 82 and the second positioning pin 83 are formed at a pitch of 180°.

The first positioning pin 82 is fitted to the first positioning pin insertion hole 45 of the lens 40, the second positioning pin 83 is fitted to the second positioning pin insertion hole 47 of the lens 40, and the third positioning pin 84 is fitted to the third positioning pin insertion groove 49 of the lens 40. Accordingly, the tubular member 81 and the lens 40 are positioned, and a direction (for example, a rotation angle around an axis) of the lens 40 with respect to the tubular member 81 becomes a preset direction.

The first plate surface 55 of the finished product flange portion 54 is a surface which abuts against the axial one end surface of the tubular member 81, and thus, is formed with high accuracy. In addition, the first positioning pin insertion hole 45, the second positioning pin insertion hole 47, and the third positioning pin insertion groove 49 of the finished product flange portion 54 are used for positioning, and thus, are formed with high accuracy.

Light from the LED 89 is incident to the flat surface 52 of the finished product lens portion 51 through the inside of the tubular member 81 and is emitted from the convex curved surface 53 of the finished product lens portion 51. The flat surface 52 of the finished product lens portion 51 is an incident surface of the light, and thus, is formed with high accuracy. In addition, the convex curved surface 53 of the finished product lens portion 51 is an emitting surface of the light, and thus, is formed with high accuracy. The convex curved surface 53 (that is, the convex curved surface 33 of the secondary lamination portion 31) of the finished product lens portion 51 may have an optical pattern for adjusting an intensity distribution of the light emitted from the convex curved surface 53.

Meanwhile, the second plate surface 56 of the finished product flange portion 54 can be formed with low accuracy. Accordingly, in the present embodiment, in the second plate surface 56 of the finished product flange portion 54, a portion (specifically, the outer peripheral portion 24b of the flange portion 24) of the primary molding product 20 is exposed (refer to Fig. 7B).

### (Mold Unit)

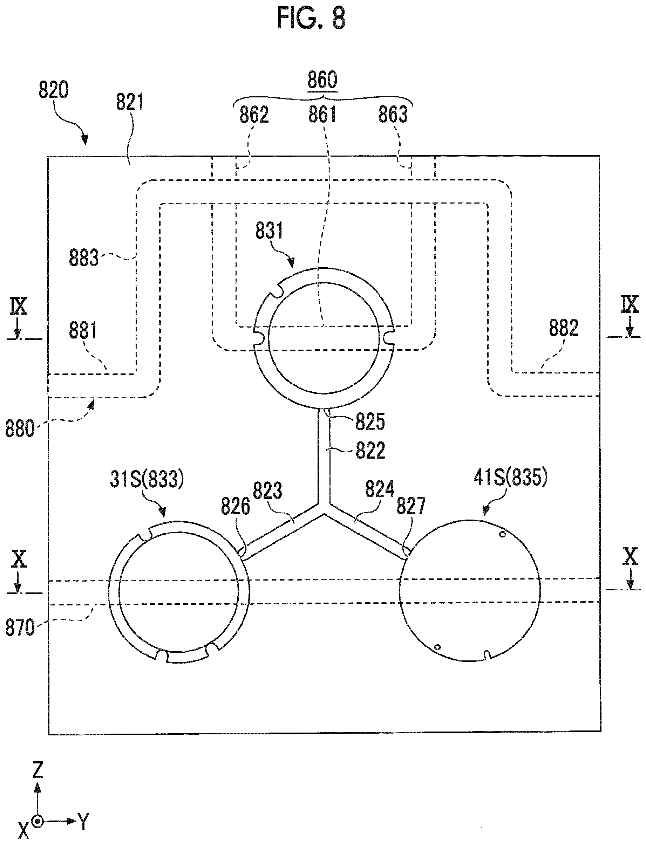

Fig. 8 is a view when the movable mold according to the embodiment is viewed from the stationary mold side. Fig. 9 is a sectional view of the mold unit taken along line IX-IX of Fig. 8. Fig. 10 is a sectional view of the mold unit taken along line X-X of Fig. 8. In addition, a configuration of the mold unit 800 is not limited to the configuration shown in Figs. 8 to 10 or the like. In addition, the mold unit 800 of the present embodiment includes one first cavity space 831, one second cavity space 833, and one third cavity space 835. However, the number of each of the first cavity spaces 831, the second cavity spaces 833, and the third cavity spaces 835 is not limited to one, a plurality of first cavity spaces 831, the plurality of second cavity spaces 833, and the plurality of third cavity spaces 835 may be provided, and the numbers of the first cavity spaces 831, the second cavity spaces 833, and the third cavity spaces 835 may not be the same as each other.

The movable mold 820 includes a first runner 822, a second runner 823, and a third runner 824 (refer to Fig. 8), which extend radially from a lower downstream end of the sprue 811 (refer to Figs. 1 and 2) formed in the stationary mold 810, a division surface 821 between the movable mold 820 and the stationary mold 810. As shown in Figs. 1 and 2, the sprue 811 extends straightly in the X direction from the injection port 812 of the stationary mold 810. The first runner 822, the second runner 823, and the third runner 824 are disposed at an equal pitch (for example, a pitch of 120°) in a circumferential direction.

As shown in Fig. 8, a first gate 825 is provided on a downstream end of the first runner 822. The first gate 825 is an inlet of the first cavity space 831. As shown in Fig. 9, the first cavity space 831 is formed between the movable mold 820 and the stationary mold 810. The first cavity space 831 is a space in which the primary molding product 20 is molded and has the same shape and the same dimensions as those of the primary molding product 20.

As shown in Fig. 8, a second gate 826 is provided on a downstream end of the second runner 823. The second gate 826 is an inlet of the second cavity space 833. As shown in Fig. 10, the second cavity space 833 is formed between the movable mold 820 and the stationary mold 810. The second cavity space 833 is a space in which the secondary molding product 30 is molded and has the same shape and the same dimensions as those of the secondary molding product 30.

As shown in Fig. 10, the second cavity space 833 is connected to a vacuum pump 815 via a suction path 814 formed in the stationary mold 810. If the vacuum pump 815 is operated, the air pressure of the suction path 814 is a negative pressure, and the primary molding product 20 which is the insert material for the secondary molding product is adsorbed to the stationary mold 810. The stationary mold 810 comes into contact with only the flange portion 24 of the primary molding product 20 and a slight gap is formed between the lens portion 21 of the primary molding product 20 and the stationary mold 810. In the primary molding product 20, the convex curved surface 23 of the lens portion 21 faces the movable mold 820 and is adsorbed to the stationary mold 810. In this case, the air pressure of the suction path 814 is detected by an air pressure detector 816, and success or failure of the adsorption may be determined based on a detection value. Thereafter, if the operation of the vacuum pump 815 is released, the air pressure of the suction path 814 is returned to the atmospheric pressure, and the adsorption of the primary molding product 20 with respect to the stationary mold 810 is released.

A portion of the second cavity space 833 is occupied by the primary molding product 20. The primary molding product 20 is adsorbed to the stationary mold 810 when the mold is opened, and in this state, the mold closing, the pressurization, and the mold clamping are performed. When the mold is clamped, a space 31S for molding the secondary lamination portion 31 is formed between the primary molding product 20 and the movable mold 820. The molding material filling the space 31S comes into close contact with the movable mold 820. Accordingly, the secondary molding product 30 moves along with the movable mold 820 in the depressurization process and the mold opening process . In order to reliably move the secondary molding product 30 and the movable mold 820 together, the adsorption of the primary molding product 20 to the stationary mold 810 is released before the depressurization process starts.

A wall surface 834 (refer to Fig. 10) of the second cavity space 833 comes into contact with a portion of the surface of the primary molding product 20 such that a portion of the primary molding product 20 is exposed in the secondary molding product 30. In the finished product, a portion of the primary molding product 20 can be exposed. For example, as described above, the second plate surface 56 of the finished product flange portion 54 can be molded with low accuracy. Accordingly, in the second plate surface 56 of the finished product flange portion 54, a portion (specifically, the outer peripheral portion 24b of the flange portion 24) of the primary molding product 20 is exposed (refer to Fig. 7B). Meanwhile, the convex curved surface 53 of the finished product lens portion 51 is the emitting surface of the light and a surface requiring a high accuracy, and thus, the convex curved surface 53 includes the convex curved surface 33 of the secondary lamination portion 31. In addition, in the present embodiment, the tertiary molding product 40 is the finished product. However, the secondary molding product 30 may be the finished product.

As shown in Fig. 8, a third gate 827 is provided on a downstream end of the third runner 824. The third gate 827 is an inlet of the third cavity space 835. As shown in Fig. 10, the third cavity space 835 is formed between the movable mold 820 and the stationary mold 810. The third cavity space 835 is a space for molding the tertiary molding product 40 and has the same shape and the same dimensions as those of the tertiary molding product 40.

As shown in Fig. 10, the third cavity space 835 is connected to a vacuum pump 818 via a suction path 817 formed in the stationary mold 810. If the vacuum pump 818 is operated, the air pressure of the suction path 817 is a negative pressure, and the secondary molding product 30 which is the insert material for the tertiary molding product is adsorbed to the stationary mold 810. The stationary mold 810 comes into contact with only the flange portion 24 of the secondary molding product 30 and a slight gap is formed between the secondary lamination portion 31 of the secondary molding product 30 and the stationary mold 810. In the secondary molding product 30, the flat surface 22 of the lens portion 21 faces the movable mold 820 and is adsorbed to the stationary mold 810. In this case, the air pressure of the suction path 817 is detected by an air pressure detector 819, and success or failure of the adsorption may be determined based on a detection value. Thereafter, if the operation of the vacuum pump 818 is released, the air pressure of the suction path 817 is returned to the atmospheric pressure, and the adsorption of the secondary molding product 30 with respect to the stationary mold 810 is released.

A portion of the third cavity space 835 is occupied by the secondary molding product 30. The secondary molding product 30 is adsorbed to the stationary mold 810 when the mold is opened, and in this state, the mold closing, the pressurization, and the mold clamping are performed. When the mold is clamped, a space 41S for molding the tertiary lamination portion 41 or the like is formed between the secondary molding product 30 and the movable mold 820. The molding material filling the space 41S comes into close contact with the movable mold 820. Accordingly, the tertiary molding product 40 moves along with the movable mold 820 in the depressurization process and the mold opening process . In order to reliably move the tertiary molding product 40 and the movable mold 820 together, the adsorption of the secondary molding product 30 to the stationary mold 810 is released before the depressurization process starts.

A wall surface 836 (refer to Fig. 10) of the third cavity space 835 comes into contact with a portion of the surface of the primary molding product 20 such that a portion of the primary molding product 20 is exposed in the tertiary molding product 40. In the finished product, a portion of the primary molding product 20 can be exposed. For example, as described above, the second plate surface 56 of the finished product flange portion 54 can be molded with low accuracy. Accordingly, in the second plate surface 56 of the finished product flange portion 54, a portion (specifically, the outer peripheral portion 24b of the flange portion 24) of the primary molding product 20 is exposed (refer to Fig. 7B). Meanwhile, the flat surface 52 of the finished product lens portion 51 is the incident surface of the light and a surface requiring a high accuracy, and thus, the flat surface 52 includes the flat surface 43 of the tertiary lamination portion 41.

As described above, according to the present embodiment, as shown in Figs. 5A to 5C, the secondary lamination portion 31 is lamination molded on the surface of the primary molding product 20, and thus, the secondary molding product 30 is molded. The secondary lamination portion 31 has the constant thickness T2, and the surface (for example, the convex curved surface 23) of the primary molding product 20 on which the secondary lamination portion 31 is lamination molded and the surface (for example, convex curved surface 33) of the secondary lamination portion 31 on a side opposite to the surface (for example, the concave curved surface 32) of the secondary lamination portion 31 being in contact with the primary molding product 20 have the same surface shape as each other. Accordingly, the following effects (1) and (2) can be obtained.
(1) The secondary lamination portion 31 has the constant thickness T2, and thus, the space 31S (refer to Fig. 10) in which the secondary lamination portion 31 is molded also has a constant thickness. Accordingly, a thickness of a flow path of the molding material from the inlet of the space 31S is constant. If the thickness of the flow path is uneven, the molding material more easily flows in a direction in which the thickness is thick than a direction in which the thickness is thin. According to the present embodiment, the thickness of the flow path is constant, and thus, a flowing tip of the molding material is easily controlled, and occurrence of molding defects is suppressed.
(2) The secondary lamination portion 31 has the constant thickness T2, and thus, the secondary lamination portion 31 can be uniformly cooled from both sides in a thickness direction of the secondary lamination portion 31. Accordingly, cooling shrinkage of the molding material in the secondary molding can be uniformly generated, and occurrence of the wrinkles can be suppressed. Therefore, an outer surface having few wrinkles can be obtained. In addition, the secondary lamination portion 31 covers at least a portion (for example, the convex curved surface 23) of the surface of the primary molding product 20, and thus, accuracy is not required for the convex curved surface 23 of the primary molding product 20. Therefore, the primary molding product 20 can be rapidly cooled, and a cooling time of the primary molding product 20 can be significantly shortened. This is because the secondary lamination portion 31 can cover the generated wrinkles even when unevenness of the cooling shrinkage is generated by the rapid cooling of the primary molding product 20 and the wrinkles are generated.

According to the present embodiment, the primary molding product 20 constitutes a portion of the lens 40, and the secondary lamination portion 31 is lamination molded on the lens surface (for example, the convex curved surface 23) of the primary molding product 20. Accuracy is not required for the lens surface of the primary molding product 20. Accordingly, the thick lens portion 21 can be rapidly cooled. Even when the unevenness of the cooling shrinkage is generated by the rapid cooling of the lens portion 21 and the wrinkles are generated, the secondary lamination portion 31 covers the generated wrinkles, and thus, the accuracy of the lens surface (for example, the convex curved surface 53) of the finished product lens portion 51 can be improved.

Meanwhile, unlike the primary molding product 20, the secondary lamination portion 31 has a portion requiring accuracy, and thus, the secondary lamination portion 31 cannot be rapidly cooled. Accordingly, a time of the cooling process in which the molding product is cooled inside the mold unit 800 is not determined by the cooling distance D1 of the primary molding product 20 and is determined by the cooling distance D2 of the secondary lamination portion 31. As the cooling distance D2 of the secondary lamination portion 31 decreases, the time of the cooling process is shortened.

According to the present embodiment, the secondary lamination portion 31 has the constant thickness T2 which is smaller than twice the cooling distance D1 of the primary molding product 20. Accordingly, the cooling distance D2 (D2 = T2/2) of the secondary molding product 30 which cannot be rapidly cooled is shorter than the cooling distance D1 of the primary molding product 20 which can be rapidly cooled. Accordingly, it is possible to shorten the time of the cooling process in which the molding product is cooled inside the mold unit 800.

According to the present embodiment, while the primary molding product 20 (refer to Figs. 4A to 4C) and the secondary molding product 30 (refer to Figs 5A to 5C) are simultaneously molded inside the same mold unit 800, the preformed the primary molding product 20 is cooled outside the mold unit 800. The time of the cooling process in which the molding product is cooled inside the mold unit 800 can be set for the secondary molding product 30 having the relatively short cooling distance D2. The primary molding product 20 having the relatively long cooling distance D1 may be solidified to such an extent that the primary molding product 20 can be extracted from the mold unit 800 when the mold is opened. The remaining solidification of the primary molding product 20 is performed outside the mold unit 800, and thus, it is possible to shorten the time of the cooling process, and it is possible to shorten the molding cycle. In addition, by simultaneously performing the processing of molding the primary molding product 20 inside the mold unit 800 and the processing of cooling the preformed primary molding product 20 outside the mold unit 800, it is possible to improve a production speed of the finished product.

In addition, in the present embodiment, the primary molding product 20 and the secondary molding product 30 are simultaneously molded inside the same mold unit 800. However, the primary molding product 20 and the secondary molding product 30 may be separately molded from each other using mold units different from each other. For example, after the primary molding product 20 is molded using a mold unit dedicated for the primary molding, the primary molding product 20 is extracted from the mold unit dedicated for the primary molding, and the primary molding product 20 may be inserted into a mold unit dedicated for the secondary molding. Also in this case, at least the above-described effects (1) and (2) can be obtained.

According to the present embodiment, as shown in Figs. 6A to 6C, the tertiary lamination portion 41 is lamination molded on the surface (for example, the flat surface 22 and the first plate surface 25) on the side opposite to the surface (for example, the convex curved surface 23) on which the secondary lamination portion 31 of the secondary molding product 30 is lamination molded, and thus, the tertiary molding product 40 is molded. The tertiary lamination portion 41 has the constant thickness T3, and the surface of the primary molding product 20 on which the tertiary lamination portion 41 is lamination molded and the surface (for example, the flat surface 43) of the tertiary lamination portion 41 on a side opposite to the surface (for example, flat surface 42) of the tertiary lamination portion 41 being in contact with the primary molding product 20 have the same surface shape as each other. Accordingly, the following effects (3) and (4) can be obtained.

(3) The tertiary lamination portion 41 has the constant thickness T3, and thus, the space 41S (refer to Fig. 10) in which the tertiary lamination portion 41 is molded also has a constant thickness. Accordingly, a thickness of a flow path of the molding material from the inlet of the space 41S is constant. If the thickness of the flow path is uneven, the molding material more easily flows in a direction in which the thickness is thick than a direction in which the thickness is thin. According to the present embodiment, the thickness of the flow path is constant, and thus, a flowing tip of the molding material is easily controlled, and occurrence of molding defects is suppressed.

(4) The tertiary lamination portion 41 has the constant thickness T3, and thus, the tertiary lamination portion 41 can be uniformly cooled from both sides in a thickness direction of the tertiary lamination portion 41. Accordingly, cooling shrinkage of the molding material in the tertiary molding can be uniformly generated, and occurrence of the wrinkles can be suppressed. Therefore, an outer surface having few wrinkles can be obtained. In addition, the tertiary lamination portion 41 covers at least a portion (for example, the flat surface 22 and the first plate surface 25) of the surface of the primary molding product 20, and thus, accuracy is not required for the flat surface 22 and the first plate surface 25 of the primary molding product 20. Therefore, the primary molding product 20 can be rapidly cooled, and a cooling time of the primary molding product 20 can be significantly shortened. This is because the tertiary lamination portion 41 can cover the generated wrinkles even when unevenness of the cooling shrinkage is generated by the rapid cooling of the primary molding product 20 and the wrinkles are generated. The tertiary lamination portion 41 is lamination molded on the surface of the primary molding product 20 on the side opposite to the surface of the primary molding product 20 on which the secondary lamination portion 31 is lamination molded, and thus, it is possible to cover the wrinkles of a portion which cannot be covered with the secondary lamination portion 31.

Meanwhile, unlike the primary molding product 20, the tertiary lamination portion 41 has a portion requiring accuracy, and thus, the tertiary lamination portion 41 cannot be rapidly cooled. Accordingly, the time of the cooling process in which the molding product is cooled inside the mold unit 800 is not determined by the cooling distance D1 of the primary molding product 20 and is determined by the cooling distance D3 of the tertiary lamination portion 41. As the cooling distance D3 of the tertiary lamination portion 41 decreases, the time of the cooling process is shortened.

According to the present embodiment, the tertiary lamination portion 41 has the constant thickness T3 which is smaller than twice the cooling distance D1 of the primary molding product 20. Accordingly, the cooling distance D3 (D3 = T3/2) of the tertiary molding product 40 which cannot be rapidly cooled is shorter than the cooling distance D1 of the primary molding product 20 which can be rapidly cooled. Accordingly, it is possible to shorten the time of the cooling process in which the molding product is cooled inside the mold unit 800.

According to the present embodiment, while the primary molding product 20 and the tertiary molding product 40 are simultaneously molded inside the same mold unit 800, the preformed the primary molding product 20 is cooled outside the mold unit 800. The time of the cooling process in which the molding product is cooled inside the mold unit 800 can be set for the tertiary molding product 40 having the relatively short cooling distance D3. The primary molding product 20 having the relatively long cooling distance D1 may be solidified to such an extent that the primary molding product 20 can be extracted from the mold unit 800 when the mold is opened. The remaining solidification of the primary molding product 20 is performed outside the mold unit 800, and thus, it is possible to shorten the time of the cooling process, and it is possible to shorten the molding cycle. In addition, by simultaneously performing the processing of molding the primary molding product 20 inside the mold unit 800 and the processing of cooling the preformed primary molding product 20 outside the mold unit 800, it is possible to improve a production speed of the finished product.

In addition, in the present embodiment, the primary molding product 20 and the tertiary molding product 40 are simultaneously molded inside the same mold unit 800. However, the primary molding product 20 and the tertiary molding product 40 may be separately molded from each other using mold units different from each other. For example, after the primary molding product 20 is molded using a mold unit dedicated for the primary molding, the primary molding product 20 is extracted from the mold unit dedicated for the primary molding, and the primary molding product 20 may be inserted into a mold unit dedicated for the tertiary molding. In this case, at least the above-described effects (3) and (4) can be obtained.

Meanwhile, the finished product (for example, the lens 40) of the present embodiment is manufactured by injection molding of a plurality of times (for example, three times). Here, in the second or subsequent injection molding, the molding product obtained by the previous injection molding is disposed in a portion of the cavity space of the mold unit 800 as the insert material, another portion of the cavity space is filled with the liquid molding material, and thus, the molding product is molded. As the number of times of the injection molding increases, a volume of the cavity space increases, and a volume of the molding product increases.

For example, in the second injection molding, as shown in Fig. 10, the primary molding product 20 is disposed in a portion of the second cavity space 833 as the insert material, another portion (for example, the space 31S) of the second cavity space 833 is filled with the liquid molding material, and thus, the secondary molding product 30 is molded. The secondary molding product 30 includes the secondary lamination portion 31 in addition to the primary molding product 20, and thus, a volume of the second cavity space 833 is larger than a volume of the first cavity space 831 (refer to Fig. 9).

In addition, in the third injection molding, as shown in Fig. 10, the secondary molding product 30 is disposed in a portion of the third cavity space 835 as the insert material, another portion (for example, the space 41S) of the third cavity space 835 is filled with the liquid molding material, and thus, the tertiary molding product 40 is molded. The tertiary molding product 40 includes the tertiary lamination portion 41 in addition to the secondary molding product 30, and thus, a volume of the third cavity space 835 is larger than the volume of the second cavity space 833.

In this way, in mth injection molding, a molding product obtained by m-1th injection molding is disposed in a portion of a cavity space as the insert material, and another portion of the cavity space is filled with the liquid molding material. m is a natural number of 2 or more and n or less. n is the total number of times of the injection molding until the finished product 40 is obtained, and n is a natural number of 2 or more. The volume of the cavity space used in the mth injection molding is larger than the volume of the cavity space used in the m-1th injection molding, and the cavity space used in the nth injection molding has a maximum volume.

The insert material receives heat from the liquid molding material inside the cavity space, and thus, is softened in the vicinity of a boundary between the insert material and the liquid molding material. The softened portion can be deformed by stress. As the stress which deforms the insert material, compression stress generated by a mold clamping force or the like can be mentioned in addition to a filling pressure of the liquid molding material. In order to prevent misalignment inside the cavity space, the insert material has a contour slightly larger than that of the cavity space when viewed in the mold opening and closing directions, is compressed by the mold clamping force, and is pressed against the wall surface of the cavity space.

For example, in order to prevent the misalignment inside the second cavity space 833, the flange portion 24 of the primary molding product 20 which is the insert material for the secondary molding product has a contour slightly larger than that of the second cavity space 833 when viewed in the mold opening and closing directions. The outer peripheral portion 24b of the flange portion 24 is compressed by the mold clamping force and is pressed against the wall surface of the second cavity space 833.

Similarly, in order to prevent the misalignment inside the third cavity space 835, the flange portion 24 of the secondary molding product 30 which is the insert material for the tertiary molding product has a contour slightly larger than that of the third cavity space 835 when viewed in the mold opening and closing directions. The outer peripheral portion 24b of the flange portion 24 is compressed by the mold clamping force and is pressed against the wall surface of the third cavity space 835.

In order to prevent the deformation of the positioning portion, one or more positioning portions are molded in any one injection molding of the injection molding of a plurality of times. In the present specification, the positioning portion is provided in the molding product (that is, the finished product) which is obtained by the nth injection molding and is fitted to a protrusion or a recessed part of a mating part, on which the finished product is mounted, so as to position the mating part. The positioning portion has at least one of a recessed part to which the protrusion of the mating part is fitted and a protrusion to which the recessed part of the mating part is fitted.

In the present embodiment, the lens 40 (refer to Figs. 7A and 7B) is the finished product and n is 3. Each of the first positioning portion 44, the second positioning portion 46, and the third positioning portion 48 includes a recessed part (specifically, hole or groove) to which the protrusion of the mating part is fitted. In addition, the number of positioning portions is not limited to three, and may be one or two or may be four or more.

In addition, in the present embodiment, the tubular member 81 (refer to Figs. 7A and 7B) is the mating part. Each of the first positioning pin 82, the second positioning pin 83 and the third positioning pin 84 is the protrusion of the mating part. Moreover, the number of protrusions is not limited to three as long as it corresponds to the number of the positioning portions.

In the present embodiment, the protrusion is provided in the tubular member 81 and the recessed part is provided in the lens 40. However, dispositions of the protrusion and the recessed part may be reversed. That is, the protrusion may be provided in the lens 40 and the recessed part may be provided in the tubular member 81. In addition, the protrusion and the recessed part may be provided in the lens 40 and the recessed part and the protrusion may be provided in the tubular member 81.

According to the present embodiment, for example, the entire first positioning portion 44 is formed in one injection molding of the injection molding of a plurality of times. Therefore, unlike a case where the entire first positioning portion 44 is molded to be divided into a plurality of times, the entire first positioning pin insertion hole 45 can be molded at one time. It is possible to protect the entire first positioning pin insertion hole 45 with the solidified molding material and to prevent heat from the melted molding material from being transmitted to the first positioning pin insertion hole 45 even if the injection molding is performed thereafter. Therefore, deformation of the first positioning pin insertion hole 45 can be suppressed, and the first positioning pin insertion hole 45 can be formed with high accuracy.

The second positioning portion 46 can be molded similarly to the first positioning portion 44. Specifically, the entire second positioning portion 46 is molded in one injection molding of the injection molding of a plurality of times. Accordingly, the entire second positioning pin insertion hole 47 can be molded at one time, and it is possible to prevent heat from the melted molding material from being transmitted to the second positioning pin insertion hole 47 even if the injection molding is performed thereafter. Therefore, deformation of the second positioning pin insertion hole 47 can be suppressed, and the second positioning pin insertion hole 47 can be formed with high accuracy.

The third positioning portion 48 can be molded similarly to the first positioning portion 44. Specifically, the entire third positioning portion 48 is molded in one injection molding of the injection molding of a plurality of times. Accordingly, the entire third positioning pin insertion groove 49 can be molded at one time, and it is possible to prevent heat from the melted molding material from being transmitted to the third positioning pin insertion groove 49 even if the injection molding is performed thereafter. Therefore, deformation of the third positioning pin insertion groove 49 can be suppressed, and the third positioning pin insertion groove 49 can be formed with high accuracy.

Here, effects (suppression of thermal deformation) in a case where the insert molding is performed in the second and subsequent injection molding will be described. However, the present invention is not limited to this. For example, even when a plurality of molding products molded separately by the injection molding of a plurality of times are assembled to each other by an adhesive, unlike a case where one positioning portion is assembled by the adhesive, if one positioning portion is entirely molded in one injection molding, it is possible to prevent inconveniences such as adhesive deviation.

In addition, in the present embodiment, the plurality of positioning portions are molded in one injection molding of the injection molding of a plurality of times. However, in the present invention, it is sufficient if one or more positioning portions are entirely molded. For example, the entire first positioning portion 44 may be molded in the first injection molding, the entire second positioning portion 46 may be molded in the second injection molding, and the entire third positioning portion 48 may be molded in the third injection molding. Each positioning portion may be molded in the last injection molding at a location of each positioning portion.

According to the present embodiment, the secondary molding product 30 (refer to Figs. 5A to 5C) having the first notch 27 is molded, and thereafter, the secondary molding product 30 having the first notch 27 is disposed in the third cavity space 835 of the mold unit 800 as the insert material. The first notch 27 in the third cavity space 835 is filled with the molding material, and thus, the first positioning portion 44 (refer to Fig. 6C) is formed in the first notch 27. The first positioning portion 44 is formed in a defective portion of the finished product 40, and thus, the defective portion of the finished product 40 can be embedded by the first positioning portion 44, and the first positioning portion 44 can be formed without changing the shape or dimensions of the finished product 40.

The second positioning portion 46 (refer to Fig. 6C) can be molded similarly to the first positioning portion 44. Specifically, the secondary molding product 30 (refer to Figs. 5A to 5C) having the second notch 28 is molded, and thereafter, the secondary molding product 30 having the second notch 28 is disposed in the third cavity space 835 of the mold unit 800 as the insert material. The second notch 28 in the third cavity space 835 is filled with the molding material, and thus, the entire second positioning portion 46 is formed in the second notch 28. Accordingly, similarly to the first positioning portion 44, the second positioning portion 46 can be formed without changing the shape or dimensions of the finished product 40.

The third positioning portion 48 (refer to Fig. 6C) can be molded similarly to the first positioning portion 44. Specifically, the secondary molding product 30 (refer to Figs. 5A to 5C) having the third notch 29 is molded, and thereafter, the secondary molding product 30 having the third notch 29 is disposed in the third cavity space 835 of the mold unit 800 as the insert material. The third notch 29 in the third cavity space 835 is filled with the molding material, and thus, the entire third positioning portion 48 is formed in the third notch 29. Accordingly, similarly to the first positioning portion 44, the third positioning portion 48 can be formed without changing the shape or dimensions of the finished product 40.

Although the entire first positioning portion 44 may be molded in the injection molding before the final (nth) injection molding for molding the finished product 40, in the present embodiment, in the final (nth) injection molding, the entire first positioning portion 44 is molded. The molding product molded up to the (n-1)th injection molding has no first positioning portion 44 at all. Accordingly, even if any portion of the insert material is deformed in the first to nth injection molding, the first positioning portion 44 is not deformed by the deformation of the portion. Therefore, it is possible to prevent deformation of the first positioning portion 44 caused by deformation of the insert material.

Similarly, although the entire second positioning portion 46 may be molded in the injection molding before the final (nth) injection molding for molding the finished product 40, in the present embodiment, in the final (nth) injection molding, the entire second positioning portion 46 is molded. Accordingly, similarly to the first positioning portion 44, it is possible to prevent deformation of the second positioning portion 46 caused by deformation of the insert material.

Similarly, although the entire third positioning portion 48 may be molded in the injection molding before the final (nth) injection molding for molding the finished product 40, in the present embodiment, in the final (nth) injection molding, the entire third positioning portion 48 is molded. Accordingly, similarly to the first positioning portion 44, it is possible to prevent deformation of the third positioning portion 48 caused by deformation of the insert material.

In addition, in the present embodiment, all the positioning portions are molded from the liquid molding material in the final (nth) injection molding for molding the finished product 40. However, in the nth injection molding, one or more positioning portions may be entirely molded from the liquid molding material. For example, the entire first positioning portion 44 may be formed in the first injection molding, the entire second positioning portion 46 may be formed in the second injection molding, and the entire third positioning portion 48 may be formed in the third injection molding. For at least the third positioning portion 48, it is possible to prevent deformation caused by the deformation of the insert material.

Moreover, in the present embodiment, the primary molding product 20 (refer to Figs. 4A to 4C), the secondary molding product 30 (refer to Figs. 5A to 5C), and the tertiary molding product 40 (refer to Figs. 6A to 6C) are molded using the same mold unit 800. However, the present invention is not limited to this. For example, after the primary molding product 20 is molded using a mold unit dedicated for the primary molding, the primary molding product 20 is extracted from the mold unit dedicated for the primary molding, and the primary molding product 20 may be inserted into a mold unit dedicated for the secondary molding. In addition, after the secondary molding product 30 is molded using the mold unit dedicated for the secondary molding, the secondary molding product 30 may be extracted from the mold unit dedicated for the secondary molding and the secondary molding product 30 may be inserted into the mold unit dedicated for the tertiary molding. However, if the primary molding product 20, the secondary molding product 30, and the tertiary molding product 40 are molded using the same mold unit 800, the number of injection molding machines 10 is only one, and thus, an installation area of the injection molding system 1 decreases.

### (Temperature Control of Mold Unit)

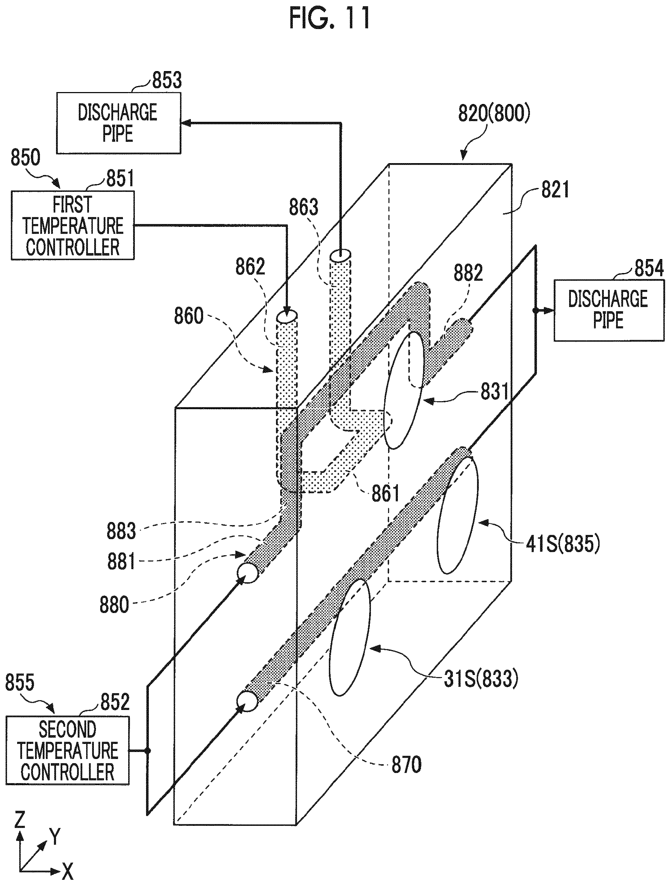

Fig. 11 is a perspective view showing a temperature control flow path of the mold unit according to the embodiment. The mold unit 800 includes a temperature control unit 850 which controls temperatures of the first cavity space 831, the second cavity space 833, and the third cavity space 835. The temperature control unit 850 controls the temperature of the first cavity space 831 to be lower than the temperature of the second cavity space 833 and the temperature of the third cavity space 835. The temperature control unit 850 may include an electric heater or the like, but in the present embodiment the temperature control unit 850 includes a temperature control flow path or the like.

For example, the temperature control unit 850 includes a first temperature control flow path 860 which controls the temperature of the first cavity space 831, a second temperature control flow path 870 which controls the temperatures of the second cavity space 833 and the third cavity space 835, and a temperature control fluid supply unit 855 which supplies a temperature control fluid to the first temperature control flow path 860 and the second temperature control flow path 870.

The temperature control fluid supply unit 855 includes a first temperature controller 851 which controls the temperature of the temperature control fluid to be supplied to the first temperature control flow path 860 and a second temperature controller 852 which controls the temperature of the temperature control fluid to be supplied to the second temperature control flow path 870. Hereinafter, the temperature control fluid temperature-controlled by the first temperature controller 851 is also referred to as a "first temperature control fluid", and the temperature control fluid temperature-controlled by the second temperature controller 852 is also referred to as a "second temperature control fluid". For example, as the first temperature control fluid and the second temperature control fluid, water is used.

The first temperature controller 851 controls the first temperature control fluid to be a preset first temperature, and thereafter, supplies the first temperature control fluid to the first temperature control flow path 860 formed inside the movable mold 820. The first temperature control fluid controls the temperature of the movable mold 820 while flowing through the first temperature control flow path 860 and is discharged to a discharge pipe 853 provided outside the movable mold 820.

Meanwhile, the second temperature controller 852 controls the second temperature control fluid to be a preset second temperature, and thereafter, supplies the second temperature control fluid to the second temperature control flow path 870 and the third temperature control flow path 880 formed inside the movable mold 820. The second temperature control fluid controls the temperature of the movable mold 820 while flowing through the second temperature control flow path 870 and the third temperature control flow path 880 and is discharged to a discharge pipe 854 provided outside the movable mold 820.

A portion (for example, a division surface temperature control portion 861 described later) of the first temperature control flow path 860, the second temperature control flow path 870, and the third temperature control flow path 880 have the same plane 890 (refer to Figs. 9 and 10) perpendicular to the X direction. This plane 890 is parallel to the division surface 821 between the movable mold 820 and the stationary mold 810. That is, a portion of the first temperature control flow path 860, the second temperature control flow path 870, and the third temperature control flow path 880 are disposed at equidistant positions from the division surface 821 of the movable mold 820.

Meanwhile, a remaining portion (for example, a supply portion 862 and a discharge portion 863 described later) of the first temperature control flow path 860 is disposed on a side opposite to the division surface 821 based on the plane 890. That is, the remaining portion of the first temperature control flow path 860 is disposed to be away from the division surface 821 of the movable mold 820 than a portion of the first temperature control flow path 860, the second temperature control flow path 870, and the third temperature control flow path 880. Accordingly, a temperature distribution of the division surface 821 becomes a temperature distribution corresponding to dispositions of a portion (for example, the division surface temperature control portion 861) of the first temperature control flow path 860, the second temperature control flow path 870, and the third temperature control flow path 880.

The first cavity space 831, the second cavity space 833, and the third cavity space 835 are formed on the division surface 821 of the movable mold 820. As described above, the temperature distribution of the division surface 821 becomes a temperature distribution corresponding to dispositions of a portion (for example, the division surface temperature control portion 861) of the first temperature control flow path 860, the second temperature control flow path 870, and the third temperature control flow path 880.

As shown in Fig. 8, when viewed in the X direction, the first temperature control flow path 860 has a division surface temperature control portion 861 which overlaps the first cavity space 831. The division surface temperature control portion 861, the second temperature control flow path 870, and the third temperature control flow path 880 are disposed on the same plane 890 (refer to Figs. 9 and 10). The first temperature control fluid controls the temperature of the movable mold 820 while flowing through the division surface temperature control portion 861 of the first temperature control flow path 860, and thus, the temperature of the first cavity space 831 is controlled. For example, the division surface temperature control portion 861 extends straightly in the Y direction.

The first temperature control flow path 860 includes the supply portion 862 (refer to Fig. 11) which supplies the first temperature control fluid to the division surface temperature control portion 861 and the discharge portion 863 (refer to Fig. 11) through which the first temperature control fluid is discharged from the division surface temperature control portion 861, on the side opposite to the division surface 821 based on the plane 890 (refer to Figs. 9 and 10).

For example, the supply portion 862 is formed in an L shape when viewed in the Y direction, extends toward the negative side in the X direction from one end of the division surface temperature control portion 861, and extends toward the positive side in the Z direction from the middle. In order to suppress the temperature control of the secondary molding product 30 or the tertiary molding product 40 caused by the first temperature control fluid, as shown in Fig. 8, the supply portion 862 is disposed so as not to overlap the second cavity space 833 and the third cavity space 835 when viewed in the X direction.

Similarly to the supply portion 862, the discharge portion 863 is formed in an L shape when viewed in the Y direction, extends toward the negative side in the X direction from the other end of the division surface temperature control portion 861, and extends toward the positive side in the Z direction. In order to suppress the temperature control of the secondary molding product 30 or the tertiary molding product 40 caused by the first temperature control fluid, as shown in Fig. 8, the discharge portion 863 is disposed so as not to overlap the second cavity space 833 and the third cavity space 835 when viewed in the X direction.

As shown in Fig. 8, the second temperature control flow path 870 is disposed so as to overlap the second cavity space 833 and the third cavity space 835 and so as not to overlap the first cavity space 831 when viewed in the X direction. The second temperature control fluid controls the temperature of the movable mold 820 while flowing through the second temperature control flow path 870, and thus, the temperatures of the second cavity space 833 and the third cavity space 835 are controlled. For example, the second temperature control flow path 870 extends straightly from one end surface of the movable mold 820 in the Y direction to the other end surface of the movable mold 820 in the Y direction.

Meanwhile, as shown in Fig. 8, the third temperature control flow path 880 is disposed so as not to overlap any of the first cavity space 831, the second cavity space 833, and the third cavity space 835 when viewed in the X direction. As shown in Fig. 8, when viewed in the X direction, the third temperature control flow path 880 is disposed such that the division surface temperature control portion 861 of the first temperature control flow path 860 is interposed between the second temperature control flow path 870 and the third temperature control flow path 880, and thus, the third temperature control flow path 880 is disposed so as to bypass the division surface temperature control portion 861. The second temperature control fluid controls the temperature of the movable mold 820 while flowing through the temperature control flow path 880, and thus, a temperature of a periphery of the first cavity space 831 is controlled.

For example, the third temperature control flow path 880 includes a first parallel portion 881 which extends from one end surface of the movable mold 820 in the Y direction toward the positive side in the Y direction and a second parallel portion 882 which extends from the other end surface of the movable mold 820 in the Y direction toward the negative side in the Y direction. The first parallel portion 881 and the second parallel portion 882 are disposed on the same straight line. The third temperature control flow path 880 is a U-shaped portion 883 which is formed in a U shape when viewed in the X direction between the first parallel portion 881 and the second parallel portion 882. The U-shaped portion 883 is disposed on a side opposite to the second temperature control flow path 870 based on a straight line which connects the first parallel portion 881 and the second parallel portion 882. When viewed in the X direction, the first cavity space 831 is disposed inside the U-shaped portion 883.

In addition, in the present embodiment, the second temperature control fluid controls the temperatures of both the second cavity space 833 and the third cavity space 835. However, the second temperature control fluid may control only the temperature of the second cavity space 833. In this case, the temperature control fluid supply unit 855 supplies a third temperature control fluid which controls the temperature of the third cavity space 835 to the inside of the mold unit 800. In order to independently control the temperature of the second temperature control fluid and the temperature of the third temperature control fluid, the temperature control fluid supply unit 855 may include a second temperature controller which controls the temperature of the second temperature control fluid and a third temperature controller which controls the temperature of the third temperature control fluid.

As described above, according to the present embodiment, the temperature of the first cavity space 831 is controlled to be lower than the temperature of the second cavity space 833 by the temperature control unit 850. The primary molding product 20 is molded in the first cavity space 831 having a relatively low temperature, and the secondary molding product 30 is molded in the second cavity space 833 having a relatively high temperature. Accordingly, compared to the secondary molding product 30 having a relatively short cooling distance D2, the primary molding product 20 having a relatively long cooling distance D1 can be rapidly cooled. It is possible to shorten a standby time until the primary molding product 20 is solidified to an extent to be extracted from the mold unit 800, and it is possible to shorten the molding cycle. In addition, the cooling distance D2 of the secondary molding product 30 which is gradually cooled in the second cavity space 833 having a relatively high temperature is short, and thus, the time of the cooling process can be shortened. As the cooling distance D2 of the secondary molding product 30 decreases, the time of the cooling process can be shortened.

In addition, in the present embodiment, the first molding product molded in the first cavity space 831 is the primary molding product 20 and the second molding product molded in the second cavity space 833 is the secondary molding product 30. However, the present invention is not limited to this. The cooling distance of the first molding product may be longer than the cooling distance of the second molding product. For example, the first molding product and the second molding product may be assembled to each other outside the mold unit 800. In addition, the first molding product and the second molding product may be shipped separately from each other as products of different uses. In any case, the molding cycle can be shortened.

According to the present embodiment, the temperature of the first cavity space 831 is controlled not only to be lower than the temperature of the second cavity space 833 but also to be lower than the temperature of the third cavity space 835 by the temperature control unit 850. The primary molding product 20 is molded in the first cavity space 831 having a relatively low temperature, and the tertiary molding product 40 is molded in the third cavity space 835 having a relatively high temperature. Accordingly, compared to the tertiary molding product 40 having the cooling distance D3 which is relatively short, the primary molding product 20 having the cooling distance D1 which is relatively long can be rapidly cooled. It is possible to shorten a standby time until the primary molding product 20 is solidified to an extent to be extracted from the mold unit 800, and it is possible to shorten the molding cycle. In addition, the cooling distance D3 of the tertiary molding product 40 which is gradually cooled in third cavity space 835 having a relatively high temperature is short, and thus, the time of the cooling process can be shortened. As the cooling distance D3 of the tertiary molding product 40 decreases, the time of the cooling process can be shortened.

In addition, in the present embodiment, the first molding product molded in the first cavity space 831 is the primary molding product 20 and the third molding product molded in the third cavity space 835 is the tertiary molding product 40. However, the present invention is not limited to this. The cooling distance of the first molding product may be longer than the cooling distance of the third molding product. For example, the first molding product and the third molding product may be assembled to each other outside the mold unit 800. In addition, the first molding product and the third molding product may be shipped separately from each other as products of different uses. In any case, the molding cycle can be shortened.

The movable mold 820 includes a movable mold body, a first cavity mold portion which forms the first cavity space 831, a second cavity mold portion which forms the second cavity space 833, and a third cavity mold portion which forms the third cavity space 835. Each of the first cavity mold portion, the second cavity mold portion, and the third cavity mold portion is attached to the movable mold body in a replaceable manner, and thus, when the mold portions are damaged, the mold portions can be replaced. In order to suppress transmission of heat from the movable mold body to the first cavity mold portion, a predetermined gap (that is, an air layer) may be formed between the movable mold body and the first cavity mold portion. The air layer functions as a heat insulating layer.

### (Conveyance machine)

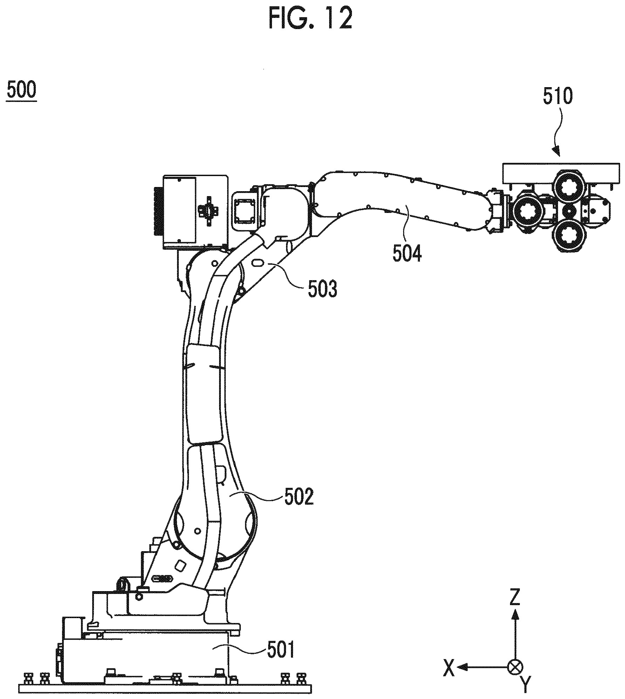

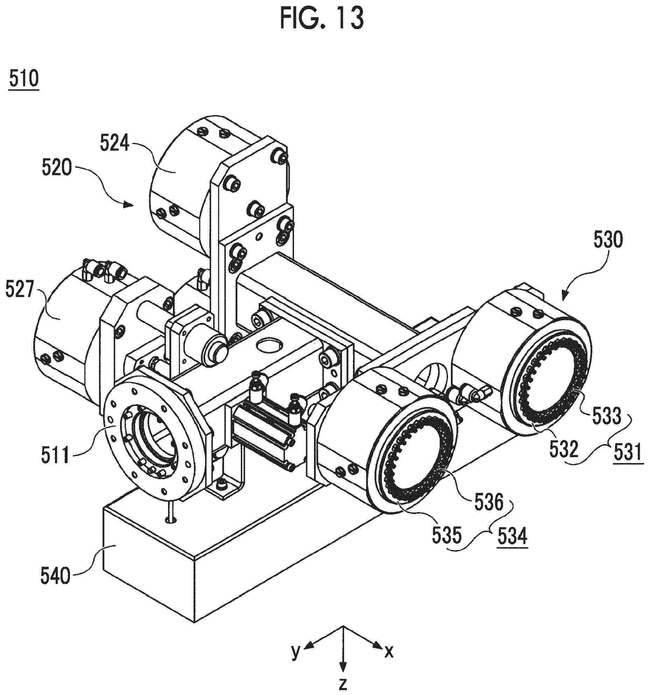

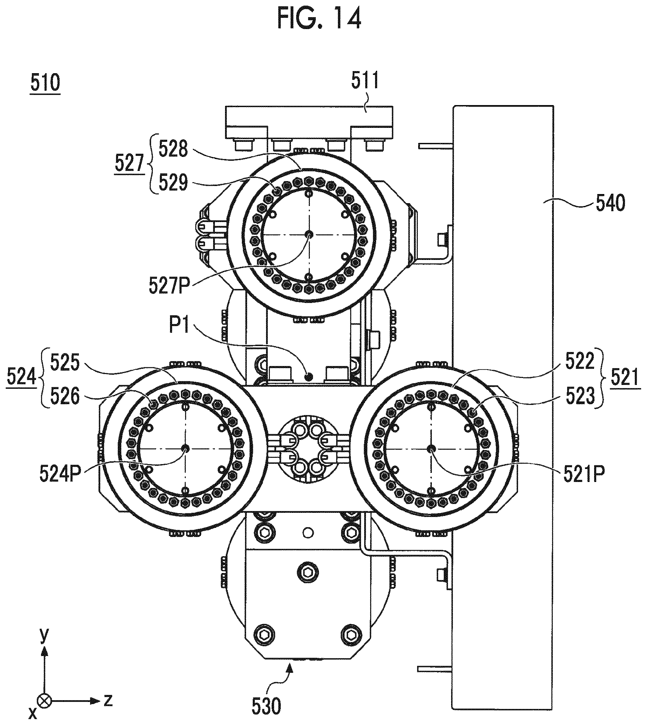

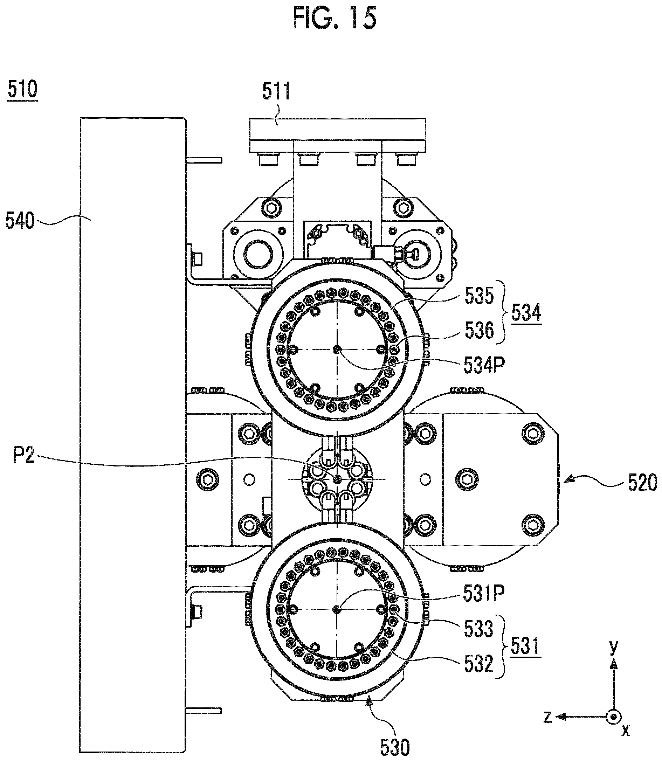

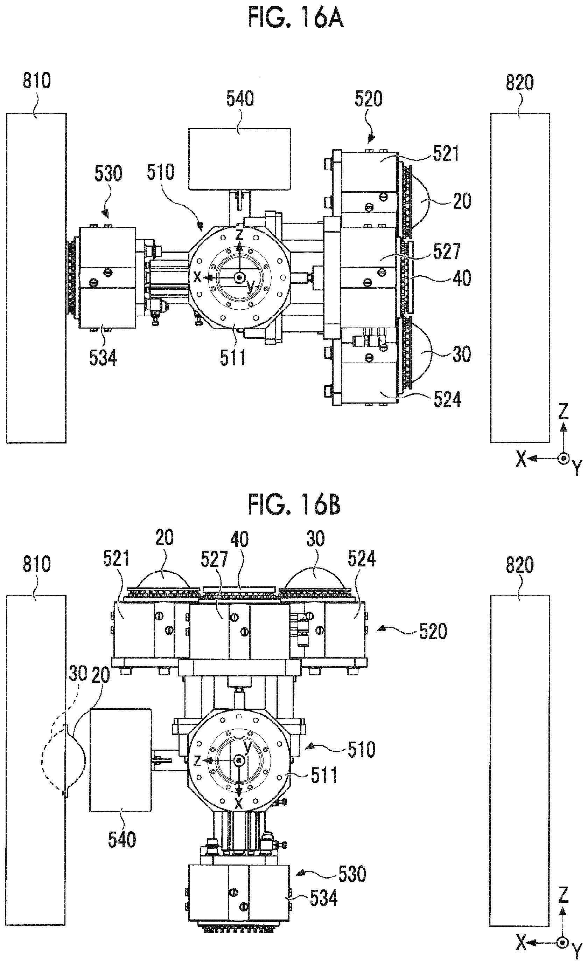

Fig. 12 is a view showing the overall conveyance machine according to an embodiment. Fig. 13 is a perspective view showing a holding unit which is a distal end portion of the conveyance machine of Fig. 12. Fig. 14 is a view when the holding unit shown in Fig. 13 is viewed from a negative side in an x direction. Fig. 15 is a view when the holding unit shown in Fig. 13 is viewed from a positive side in the x direction. In Figs. 13 to 15, the x direction, a y direction, and a z direction are directions perpendicular to each other. The y direction is an axial direction of a rotary shaft portion 511. When a holding unit 510 delivers the insert material to the stationary mold 810, as shown in Fig. 16A, the x direction is the same as the X direction, the y direction is the same as the Y direction, and the z direction is the same as the Z direction. Figs. 16A and 16B are view showing an operation of the holding unit shown in Fig. 13. Fig. 16A is a side view showing a state when the holding unit shown in Fig. 13 delivers the insert material to the stationary mold. Fig. 16B is a side view showing a state when the holding unit shown in Fig. 13 heats the insert material adsorbed to the stationary mold. In addition, a configuration of the holding unit 510 is not limited to the configuration shown in Figs. 13 to 16B.

For example, as shown in Fig. 12, the conveyance machine 500 includes an articulated robot. For example, the articulated robot includes a conveyance base 501 and a plurality of arms 502 to 504 which extend from the conveyance base 501. The conveyance base 501 is connected to a proximal end portion of the arm 502, a distal end portion of the arm 502 is connected to a proximal end portion of the arm 503, and a distal end portion of the arm 503 is connected to a proximal end portion of the arm 504. The holding unit 510 is provided on a distal end portion of the arm 504. The holding unit 510 is movable in the X direction, the Y direction, and the Z direction with respect to the conveyance base 501. In addition, the holding unit 510 is rotatable around a horizontal axis and is rotatable around a vertical axis. In addition, the conveyance machine 500 may include a parallel link robot or the like and a configuration of the robot is not particularly limited.

As shown in Figs. 16A and 16B, the holding unit 510 includes a molding product holding unit 520 which holds the molding product extracted from the movable mold 820 and an insert material holding unit 530 which holds the insert material to be delivered to the stationary mold 810. Accordingly, for example, the molding product holding unit 520 can receive the molding product from the movable mold 820 in a state where the insert material holding unit 530 holds the insert material. In addition, the insert material holding unit 530 can deliver the molding product to the stationary mold 810 in a state where the molding product holding unit 520 holds the molding product. The molding product and the insert material can be simultaneously held, and thus, an operation of changing the molding product and the insert material can be omitted, and thus, the molding cycle can be shortened. In addition, the holding unit 510 can extract the molding product and install the insert material in order without being retracted between the stationary mold 810 and the stationary mold 810. Here, either the extraction of the molding product or the installation of the insert material may be performed in advance.

In addition, the molding product holding unit 520 and the insert material holding unit 530 may be shared with each other. In this case, after the holding unit 510 receives the molding product from the movable mold 820, the holding unit 510 is retracted from between the movable mold 820 and the stationary mold 810. Thereafter, the holding unit 510 places the molding product on the outside (for example, on the gate cutting machine 550) of the injection molding machine 10, then holds the insert material placed on the outside (for example, the alignment machine 630) of the injection molding machine 10, and subsequently, is returned to between the movable mold 820 and the stationary mold 810 again. In this way, the change between the molding product and the insert material is performed. In this case, the molding cycle increases. However, the configuration of the conveyance machine 500 can be simplified, and a manufacturing cost of the conveyance machine 500 can decrease.

As shown in Figs. 16A and 16B, for example, the molding product holding unit 520 includes a first molding product holding unit 521 which holds the primary molding product 20, a second molding product holding unit 524 which holds the secondary molding product 30, and a third molding product holding unit 527 which holds the tertiary molding product 40. Each of the first molding product holding unit 521, the second molding product holding unit 524, and the third molding product holding unit 527 includes an adsorption surface for adsorbing the molding product (hereinafter, also referred to an "adsorption surface"), on the same plane perpendicular to the x direction. As shown in Fig. 14, when viewed in a direction (for example, x direction) perpendicular to the adsorption surface, a center point 521P of the first molding product holding unit 521, a center point 524P of the second molding product holding unit 524, and a center point 527P of the third molding product holding unit 527 are equidistantly disposed from one predetermined point P1, and are disposed at a pitch of 120° around the one predetermined point P1.

As shown in Fig. 14, for example, the first molding product holding unit 521 includes a cylindrical portion 522 and a plurality of adsorption nozzles 523 which are disposed in a ring shape on an axial one surface of the cylindrical portion 522. Each of the plurality of adsorption nozzles 523 includes an adsorption surface, which adsorbs the primary molding product 20, on a distal end of the adsorption nozzle 523. The plurality of adsorption nozzles 523 are connected to one vacuum pump (not shown) . If one vacuum pump is operated, a negative pressure is generated in all the adsorption nozzles 523, and the primary molding product 20 (refer to Figs. 4A to 4C) is adsorbed by the negative pressure. Specifically, the flange portion 24 of the primary molding product 20 is adsorbed to the plurality of adsorption nozzles 523.

In Fig. 14, the plurality of adsorption nozzles 523 are disposed at equal angles. However, the adsorption nozzles 523 may be disposed in any angle as long as the adsorption nozzles 523 avoid the first notch 27, the second notch 28, and the third notch 29 formed in the flange portion 24. That is, the adsorption nozzles 523 may not be disposed at the same angles as those of the first notch 27, the second notch 28, and the third notch 29. Accordingly, a vacuum leakage can be prevented and a negative pressure can be reliably generated. In addition, the plurality of adsorption nozzles 523 may be disposed at equal angles, and suction holes of the adsorption nozzles 523 disposed at the same angle as those of the first notch 27, the second notch 28, and the third notch 29 may be plugged. A negative pressure is not generated in the adsorption nozzles 523 in which the suction holes are closed by plugs.

When the plurality of adsorption nozzles 523 adsorb the flange portion 24, the lens portion 21 of the primary molding product 20 is disposed outside the cylindrical portion 522 (refer to Figs. 16A and 16B). However, the lens portion 21 may be inserted into the cylindrical portion 522. In order to prevent occurrence of contact damages of the lens portion 21, a direction of the convex curved surface 23 of the lens portion 21 may be in any direction as long as the lens portion 21 does not come into contact with the first molding product holding unit 521. Thereafter, if the operation of the vacuum pump stops, the air pressure of each of the plurality of adsorption nozzles 523 is returned to the atmospheric pressure, and the adsorption of the primary molding product 20 is released.

Similarly, as shown in Fig. 14, the second molding product holding unit 524 includes a cylindrical portion 525 and a plurality of adsorption nozzles 526 which are disposed in a ring shape on an axial one surface of the cylindrical portion 525. Each of the plurality of adsorption nozzles 526 includes an adsorption surface, which adsorbs the secondary molding product 30, on a distal end of the adsorption nozzle 526. The plurality of adsorption nozzles 526 are connected to one vacuum pump (not shown) . If one vacuum pump is operated, a negative pressure is generated in all the adsorption nozzles 526, and the secondary molding product 30 (refer to Figs. 5A to 5C) is adsorbed by the negative pressure. Specifically, the flange portion 24 of the secondary molding product 30 is adsorbed to the plurality of adsorption nozzles 526.

In Fig. 14, the plurality of adsorption nozzles 526 are disposed at equal angles. However, the adsorption nozzles 526 may be disposed in any angle as long as the adsorption nozzles 526 avoid the first notch 27, the second notch 28, and the third notch 29 formed in the flange portion 24. That is, the adsorption nozzles 526 may not be disposed at the same angles as those of the first notch 27, the second notch 28, and the third notch 29. Accordingly, a vacuum leakage can be prevented and a negative pressure can be reliably generated. In addition, the plurality of adsorption nozzles 526 may be disposed at equal angles, and suction holes of the adsorption nozzles 526 disposed at the same angle as those of the first notch 27, the second notch 28, and the third notch 29 may be plugged. A negative pressure is not generated in the adsorption nozzles 526 in which the suction holes are closed by plugs.

When the plurality of adsorption nozzles 526 adsorb the flange portion 24, the lens portion 21 of the secondary molding product 30 is disposed outside the cylindrical portion 525 (refer to Figs. 16A and 16B). However, the lens portion 21 may be inserted into the cylindrical portion 525. In order to prevent occurrence of contact damages of the secondary lamination portion 31, a direction of the convex curved surface 23 of the lens portion 21 may be in any direction as long as the secondary lamination portion 31 does not come into contact with the second molding product holding unit 524. Thereafter, if the operation of the vacuum pump stops, the air pressure of each of the plurality adsorption nozzles 526 is returned to the atmospheric pressure, and the adsorption of the secondary molding product 30 is released.

Similarly, as shown in Fig. 14, the third molding product holding unit 527 includes a cylindrical portion 528 and a plurality of adsorption nozzles 529 which are disposed in a ring shape on an axial one surface of the cylindrical portion 528. Each of the plurality of adsorption nozzles 529 includes an adsorption surface, which adsorbs the tertiary molding product 40, on a distal end of the adsorption nozzle 529. The plurality of adsorption nozzles 529 are connected to one vacuum pump (not shown) . If one vacuum pump is operated, a negative pressure is generated in all the adsorption nozzles 529, and the tertiary molding product 40 (refer to Figs. 6A to 6C) is adsorbed by the negative pressure. Specifically, the flange portion 24 (more specifically, the finished product flange portion 54) of the tertiary molding product 40 is adsorbed to the plurality of adsorption nozzles 529.

In Fig. 14, the plurality of adsorption nozzles 529 are disposed at equal angles. However, the adsorption nozzles 529 may be disposed to avoid the first positioning pin insertion hole 45, the second positioning pin insertion hole 47, and the third positioning pin insertion groove 49 formed in the finished product flange portion 54. That is, the adsorption nozzles 529 may not be disposed at the same angles as those of the first positioning pin insertion hole 45, the second positioning pin insertion hole 47, and the third positioning pin insertion groove 49. Accordingly, a vacuum leakage can be prevented and a negative pressure can be reliably generated. In addition, the plurality of adsorption nozzles 529 may be disposed at equal angles, and suction holes of the adsorption nozzles 529 disposed at the same angle as those of the first positioning pin insertion hole 45, the second positioning pin insertion hole 47, and the third positioning pin insertion groove 49 may be plugged. A negative pressure is not generated in the adsorption nozzles 529 in which the suction holes are closed by plugs.

When the plurality of adsorption nozzles 529 adsorb the finished product flange portion 54, the lens portion 21 of the tertiary molding product 40 is inserted into the cylindrical portion 528 (refer to Figs. 16A and 16B). However, the lens portion 21 may be disposed outside the cylindrical portion 528. In order to prevent occurrence of contact damages of the secondary lamination portion 31, a direction of the convex curved surface 23 of the lens portion 21 may be in any direction as long as the secondary lamination portion 31 does not come into contact with the third molding product holding unit 527. Thereafter, if the operation of the vacuum pump stops, the air pressure of each of the plurality adsorption nozzles 529 is returned to the atmospheric pressure, and the adsorption of the tertiary molding product 40 is released.

Meanwhile, as shown in Fig. 13, the insert material holding unit 530 is provided on the side opposite to the molding product holding unit 520 in a state where a rotation center line of the rotary shaft portion 511 is interposed therebetween. Accordingly, as shown in Fig. 16A, the adsorption surfaces which adsorb the molding product of the molding product holding unit 520 faces the movable mold 820, adsorption surfaces which adsorb the insert material of the insert material holding unit 530 faces the stationary mold 810. Accordingly, an operation until the insert material holding unit 530 delivers the insert material to the stationary mold 810 after the molding product holding unit 520 receives the molding product of the movable mold 820 can be performed in a short time.

As shown in Fig. 15, for example, the insert material holding unit 530 includes a first insert material holding unit 531 which holds the primary molding product 20 which is the insert material for the secondary molding product and a second insert material holding unit 534 which holds the secondary molding product 30 which is the insert material for the tertiary molding product. The first insert material holding unit 531 and the second insert material holding unit 534 include an adsorption surface for adsorbing the insert material (hereinafter, also referred to as an "adsorption surface"), on the same plane perpendicular to the x direction. When viewed in the direction (for example, the x direction) perpendicular to the adsorption surface, a center point 531P of the first insert material holding unit 531 and a center point 534P of the second insert material holding unit 534 are equidistantly disposed from one predetermined point P2 and are disposed at a pitch of 180° around the one predetermined point P2.

For example, the first insert material holding unit 531 includes a cylindrical portion 532 and a plurality of adsorption nozzles 533 which are disposed in a ring shape on an axial one surface of the cylindrical portion 532. Each of the plurality of adsorption nozzles 533 includes an adsorption surface, which adsorbs the insert material for the secondary molding product, on a distal end of the adsorption nozzle 533. The plurality of adsorption nozzles 533 are connected to one vacuum pump (not shown) . If one vacuum pump is operated, a negative pressure is generated in all the adsorption nozzles 533, and the primary molding product 20 (refer to Figs. 4A to 4C) which is the insert material for the secondary molding product is adsorbed by the negative pressure. Specifically, the flange portion 24 of the primary molding product 20 is adsorbed to the plurality of adsorption nozzles 533.

In Fig. 15, the plurality of adsorption nozzles 533 are disposed at equal angles. However, the adsorption nozzles 533 may be disposed so as to avoid the first notch 27, the second notch 28, and the third notch 29 formed in the flange portion 24. That is, the adsorption nozzles 533 may not be disposed at the same angles as those of the first notch 27, the second notch 28, and the third notch 29. Accordingly, a vacuum leakage can be prevented and a negative pressure can be reliably generated. In addition, the plurality of adsorption nozzles 533 may be disposed at equal angles, and suction holes of the adsorption nozzles 533 disposed at the same angle as those of the first notch 27, the second notch 28, and the third notch 29 may be plugged. A negative pressure is not generated in the adsorption nozzles 533 in which the suction holes are closed by plugs.

When the plurality of adsorption nozzles 533 adsorb the flange portion 24, the lens portion 21 of the primary molding product 20 is inserted into the cylindrical portion 532. However, the lens portion 21 may be disposed outside the cylindrical portion 532. In order to prevent occurrence of contact damages of the lens portion 21, a direction of the convex curved surface 23 of the lens portion 21 may be in any direction as long as the lens portion 21 does not come into contact with the first insert material holding unit 531. Thereafter, if the operation of the vacuum pump stops, the air pressure of each of the plurality adsorption nozzles 533 is returned to the atmospheric pressure, and the adsorption of the primary molding product 20 is released.

Similarly, as shown in Fig. 15, the second insert material holding unit 534 includes a cylindrical portion 535 and a plurality of adsorption nozzles 536 which are disposed in a ring shape on an axial one surface of the cylindrical portion 535. Each of the plurality of adsorption nozzles 536 includes an adsorption surface, which adsorbs the insert material for the tertiary molding product, on a distal end of the adsorption nozzle 536. The plurality of adsorption nozzles 536 are connected to one vacuum pump (not shown). If one vacuum pump is operated, a negative pressure is generated in all the adsorption nozzles 536, and the secondary molding product 30 (refer to Figs. 5A to 5C) which is the insert material for the tertiary molding product is adsorbed by the negative pressure. Specifically, the flange portion 24 of the secondary molding product 30 is adsorbed to the plurality of adsorption nozzles 536.

In Fig. 15, the plurality of adsorption nozzles 536 are disposed at equal angles. However, the adsorption nozzles 536 may be disposed so as to avoid the first notch 27, the second notch 28, and the third notch 29 formed in the flange portion 24. That is, the adsorption nozzles 536 may not be disposed at the same angles as those of the first notch 27, the second notch 28, and the third notch 29. Accordingly, a vacuum leakage can be prevented and a negative pressure can be reliably generated. In addition, the plurality of adsorption nozzles 536 may be disposed at equal angles, and suction holes of the adsorption nozzles 536 disposed at the same angle as those of the first notch 27, the second notch 28, and the third notch 29 may be plugged. A negative pressure is not generated in the adsorption nozzles 536 in which the suction holes are closed by plugs.

When the plurality of adsorption nozzles 536 adsorb the flange portion 24, the lens portion 21 of the secondary molding product 30 is disposed outside the cylindrical portion 535. However, the lens portion 21 may be inserted into the cylindrical portion 535. In order to prevent occurrence of contact damages of the secondary lamination portion 31, a direction of the convex curved surface 23 of the lens portion 21 may be in any direction as long as the secondary lamination portion 31 does not come into contact with the second insert material holding unit 534. Thereafter, if the operation of the vacuum pump stops, the air pressure of each of the plurality adsorption nozzles 536 is returned to the atmospheric pressure, and the adsorption of the secondary molding product 30 is released.

As shown in Fig. 13 or the like, the holding unit 510 further includes the rotary shaft portion 511 and a heating unit 540. The rotary shaft portion 511 is rotatable about a center line extending in an axial direction (y direction) of the rotary shaft portion 511. The molding product holding unit 520, the insert material holding unit 530, and the heating unit 540 are disposed around the rotation center axis of the rotary shaft portion 511 and are rotated together with the rotary shaft portion 511. Based on the rotary shaft portion 511, the molding product holding unit 520 is disposed on the negative side in the x direction, the insert material holding unit 530 is disposed on the positive side in the x direction, and the heating unit 540 is disposed on a positive side in the z direction.

By rotating the rotary shaft portion 511, a state of the holding unit 510 can be switched to a state where the adsorption surface of the insert material holding unit 530 faces the stationary mold 810 and a state where the heating unit 540 faces the stationary mold 810. As shown in Fig. 16A, after the insert material holding unit 530 delivers the insert material to the stationary mold 810, the rotary shaft portion 511 is rotated by 90°, as shown in Fig. 16B, the heating unit 540 is disposed so as to face the stationary mold 810. Accordingly, the heating unit 540 can heat a surface of the insert material adsorbed to the stationary mold 810. If the surface of the insert material is melted, a surface tension is generated, and thus, it is possible to remove wrinkles (so-called sink marks) of the surface. The sink marks are generated by unevenness of cooling shrinkage when the molding product which is the insert material is cooled. In addition, the molding material melted in the cylinder 310 is laminated on the heated surface of the insert material. Accordingly, it is possible to melt the heated surface of the insert material and the molding material melted in the cylinder 310, and it is possible to suppress formation of a visible discontinuous surface at a boundary therebetween.

As shown in Fig. 16B, when the heating unit 540 faces the stationary mold 810, the adsorption surface of the molding product holding unit 520 faces upward and the adsorption surface of the insert material holding unit 530 faces downward. Moreover, the adsorption surface of the molding product holding unit 520 may face downward and the adsorption surface of the insert material holding unit 530 may face upward.

While the heating unit 540 heats the insert material, the adsorption surface of the molding product holding unit 520 faces upward such that the heating unit 540 does not heat the molding product. Since the adsorption surface faces upward, the molding product can be stably held on the adsorption surface. In addition, as described above, the adsorption surface of the molding product holding unit 520 may face downward. In this case, the conveyance machine 500 holds the molding product against the gravity, and thus, it is possible to prevent the molding product from being heated by the heating unit 540.

For example, the heating unit 540 has an electric heater. As the electric heater, for example, a halogen heater is used. In order to shorten a time, the heating unit 540 may simultaneously heat the primary molding product 20 which is the insert material for the secondary molding product and the secondary molding product 30 which is the insert material for the tertiary molding product. In addition, by simultaneously heating the primary molding product 20 and the secondary molding product 30, it is possible to prevent any one of the primary molding product 20 and the secondary molding product 30 from getting cold first.

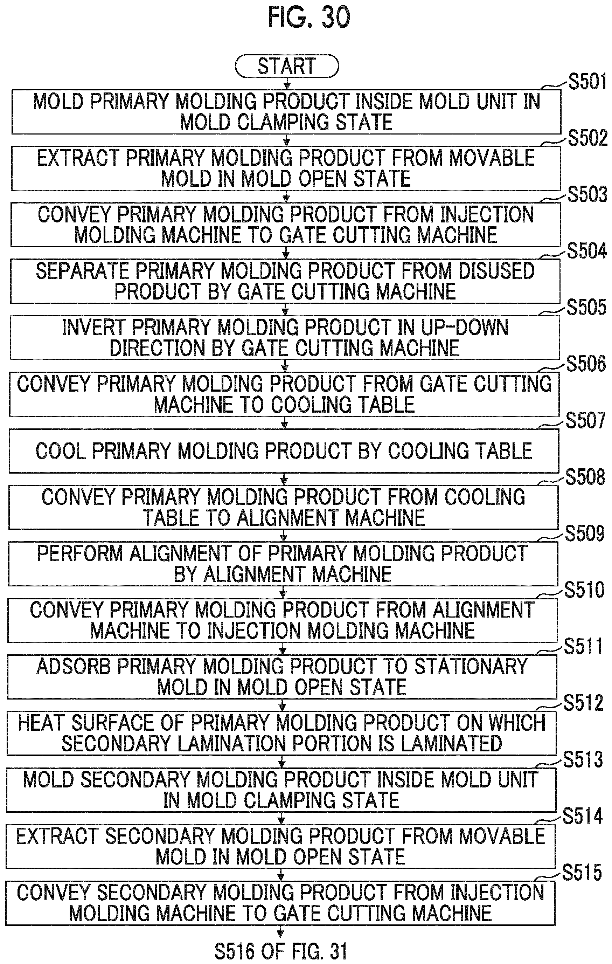

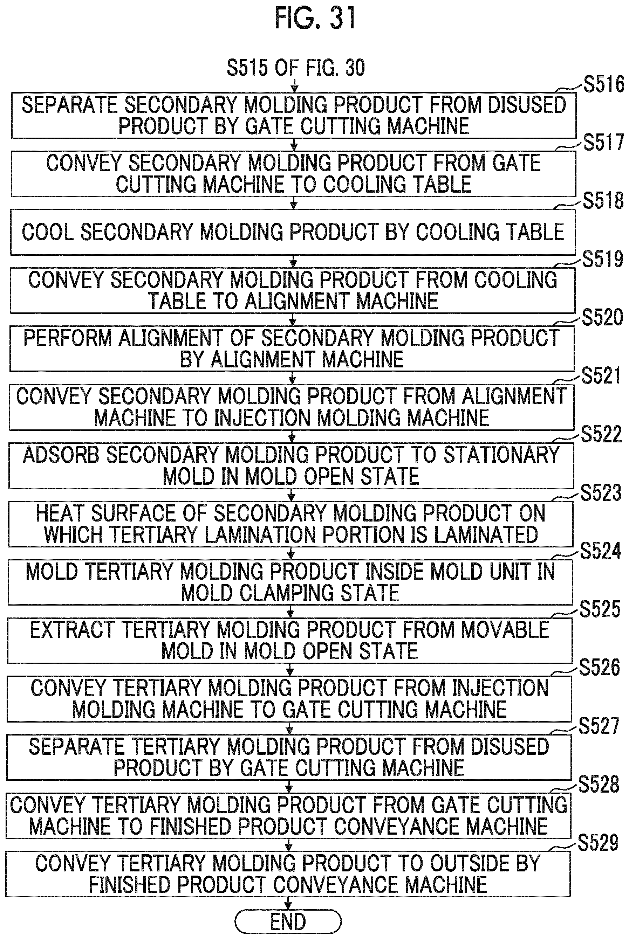

In addition, the conveyance machine 500 may have an inspector which inspects quality of at least one of the primary molding product 20, the secondary molding product 30, and the tertiary molding product 40. For example, as the inspector, at least one selected from a camera which images the molding product, a temperature measurer which measures a temperature of the molding product, and a weighing device which measures weight of the molding product is used. Image data imaged by the camera is used to inspect the dimensions or the shape of the molding product, whether or not foreign matters are mixed-in, or the like. An inspection result of the inspector is used to determine the quality of the molding product. A defective product may be discarded during a series of processing of Step S501 of Fig. 30 to Step S529 of Fig. 31 described later. For example, if the tertiary molding product 40 is determined to be a good product, the tertiary molding product 40 is conveyed to the finished product conveyance machine 660 by the conveyance machine 500, and if tertiary molding product 40 is determined to be a defective product, the detective product may be conveyed to a collection box by the conveyance machine 500.

In addition, the conveyance machine 500 of the present embodiment is used for the lamination molding. However, the use of the conveyance machine 500 is not particularly limited. The conveyance machine 500 may be used for general injection molding.

### (Gate Cutting Machine)

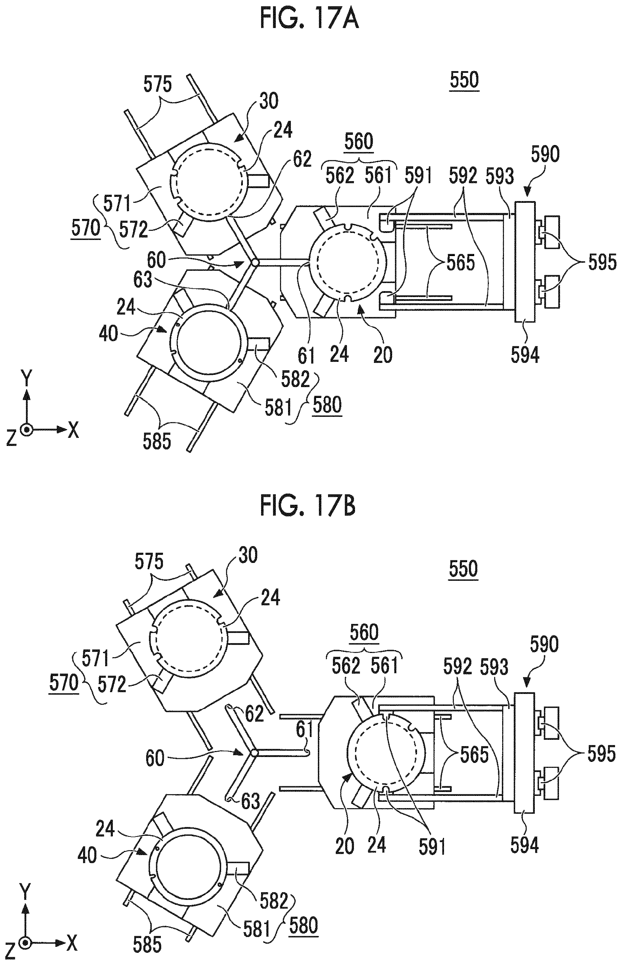

Figs. 17A and 17B are plan views showing an operation of the gate cutting machine according to an embodiment. Fig. 17A is a view showing a state when the gate cutting machine receives the primary molding product, the secondary molding product, and the tertiary molding product from the conveyance machine. Fig. 17B is a view showing a state when the gate cutting machine drops a disused product cut from the primary molding product, the secondary molding product, and the tertiary molding product. In addition, a configuration of the gate cutting machine 550 is not limited to the configuration shown in Figs. 17A and 17B or the like.

After the primary molding product 20, the secondary molding product 30 and the tertiary molding product 40 are extracted from the mold unit 800, the primary molding product 20, the secondary molding product 30 and the tertiary molding product 40 are conveyed from the mold unit 800 to the gate cutting machine 550 by the conveyance machine 500. The gate cutting machine 550 separates the primary molding product 20, the secondary molding product 30 and the tertiary molding product 40 from a disused product 60. The molding material is solidified in the sprue 811 (refer to Figs. 1 and 2), the first runner 822 (see Fig. 8), the first gate 825, the second runner 823, the second gate 826, the third runner 824, and third gate 827, and thus, the disused product 60 is generated. The primary molding product 20, the secondary molding product 30, and the tertiary molding product 40 separated from the disused product 60 by the gate cutting machine 550 are picked up by the conveyance machine 500.

The gate cutting machine 550 includes a first support unit 560 which supports the primary molding product 20 and a cutter (not shown) which cuts a portion between the primary molding product 20 supported by the first support unit 560 and a first gate molding product 61. The molding material is solidified in the first gate 825, and thus, the first gate molding product 61 is generated. The primary molding product 20 is placed on the first support unit 560 from the first molding product holding unit 521 of the conveyance machine 500. The primary molding product 20 separated from the disused product 60 is picked up by the first molding product holding unit 521.

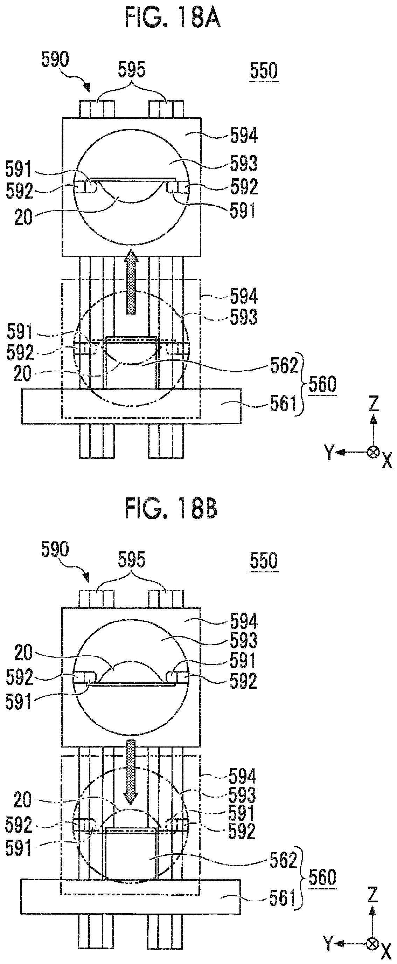

For example, the first support unit 560 includes a main body 561 and a plurality of (for example, three) support claws 562 which protrude from an upper surface of the main body 561. The plurality of support claws 562 support the flange portion 24 of the primary molding product 20 with gaps in a circumferential direction. Each support claw 562 includes an arc surface which comes into contact with an outer peripheral surface of the flange portion 24 and a flat surface which comes into contact with a lower surface of the flange portion 24. The flange portion 24 is horizontally supported by the plurality of support claws 562. Meanwhile, the lens portion 21 is supported such that the convex curved surface 23 faces downward (refer to two-dot chain lines of Fig. 18A). Heights of the plurality of support claws 562 are set such that the convex curved surface 23 of the lens portion 21 does not come into contact with the upper surface of the main body 561. In addition, although described in detail later, after the lens portion 21 is separated from the first gate molding product 61, the convex curved surface 23 is supported so as to face upward (refer to two-dot chain lines of Fig. 18B).

In addition, as shown in Figs. 17A and 17B, the gate cutting machine 550 includes a second support unit 570 which supports the secondary molding product 30 and a cutter (not shown) which cuts a portion between the secondary molding product 30 supported by the second support unit 570 and a second gate molding product 62. The molding material is solidified in the second gate 826, and thus, the second gate molding product 62 is generated. The secondary molding product 30 is placed on the second support unit 570 from the second molding product holding unit 524 of the conveyance machine 500. The secondary molding product 30 separated from the disused product 60 is picked up by the second molding product holding unit 524. For example, similarly to the first support unit 560, the second support unit 570 includes a main body 571 and a plurality of (for example, three) support claws 572 which protrude from an upper surface of the main body 571. The plurality of support claws 572 support the flange portion 24 of the secondary molding product 30 with gaps in a circumferential direction. Each support claw 572 includes an arc surface which comes into contact with an outer peripheral surface of the flange portion 24 and a flat surface which comes into contact with a lower surface of the flange portion 24. The flange portion 24 is horizontally supported by the plurality of support claws 572. Meanwhile, the lens portion 21 or the like is supported such that the convex curved surface 23 faces downward. Heights of the plurality of support claws 572 are set such that the secondary lamination portion 31 laminated below the convex curved surface 23 does not come into contact with the upper surface of the main body 571.

In addition, as shown in Figs. 17A and 17B, the gate cutting machine 550 includes a third support unit 580 which supports the tertiary molding product 40 and a cutter (not shown) which cuts a portion between the tertiary molding product 40 supported by the third support unit 580 and a third gate molding product 63. The molding material is solidified in the third gate 827, and thus, the third gate molding product 63 is generated. The tertiary molding product 40 is placed on the third support unit 580 from the third molding product holding unit 527 of the conveyance machine 500. The tertiary molding product 40 separated from the disused product 60 is picked up by the third molding product holding unit 527. For example, similarly to the first support unit 560, the third support unit 580 includes a main body 581 and a plurality of (for example, three) support claws 582 which protrude from an upper surface of the main body 581. The plurality of support claws 582 support the flange portion 24 of the tertiary molding product 40 with gaps in a circumferential direction. Each support claw 582 includes an arc surface which comes into contact with an outer peripheral surface of the flange portion 24 and a flat surface which comes into contact with a lower surface of the flange portion 24. The flange portion 24 is horizontally supported by the plurality of support claws 582. Meanwhile, the lens portion 21 or the like is supported such that the convex curved surface 23 faces downward.

As shown in Figs. 17A and 17B, the gate cutting machine 550 includes a pair of first guides 565 which guides the first support unit 560, a pair of second guides 575 which guides the second support unit 570, and a pair of third guides 585 which guides the third support unit 580. The pair of first guides 565, the pair of second guides 575, and the pair of third guides 585 are provided radially when viewed in the vertical direction, and are disposed at a pitch of 180°, for example. The first support unit 560 is movable along the pair of first guides 565, the second support unit 570 is movable along the pair of second guides 575, and the third support unit 580 is movable along the pair of third guides 585. The first support unit 560, the second support unit 570, and the third support unit 580 may be simultaneously moved in the same direction (direction close to each other or direction away from each other), and amounts of movement thereof may be the same.

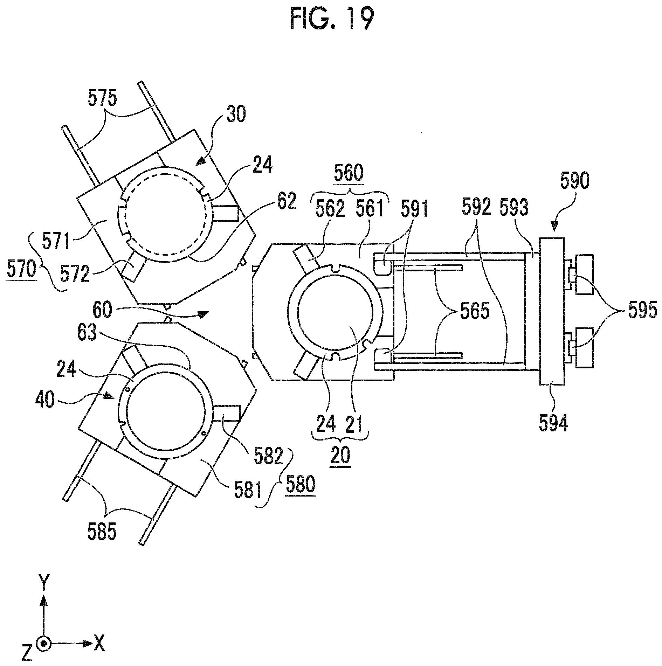

When the conveyance machine 500 places the primary molding product 20, the secondary molding product 30 and the tertiary molding product 40 on the gate cutting machine 550, the first support unit 560, the second support unit 570, and the third support unit 580 are positioned at a molding product loading position shown in Fig. 17A. Meanwhile, when the gate cutting machine 550 drops the disused product 60 cut from the primary molding product 20, the secondary molding product 30, and the tertiary molding product 40, the first support unit 560, the second support unit 570, and the third support unit 580 are positioned at a disused product drop position shown in Fig. 17B such that the first support unit 560, the second support unit 570, and the third support unit 580 do not overlap with the disused product 60 when viewed in the vertical direction view. Three disused product falling positions are set outside three molding product loading positions. In addition, when the conveyance machine 500 picks up the primary molding product 20, the secondary molding product 30, and the tertiary molding product 40 separated from the disused product 60 from the gate cutting machine 550, the first support unit 560, the second support unit 570, and the third support unit 580 are positioned at a molding product discharge position shown in Fig. 19. The molding product discharge position and the molding product loading position may be the same as each other.

Figs. 18A and 18B are views showing an operation of an inverting machine according to an embodiment. Fig. 18A is a view showing an operation in which the inverting machine lifts the primary molding product from the first support unit. In Fig. 18A, two-dot chain lines show a state of a lifting/lowering slider 594 or the like when the lifting of the primary molding product 20 starts, and solid lines show a state of the lifting/lowering slider 594 or the like when the lifting of the primary molding product 20 is completed. Fig. 18B is a view showing the operation of lowering the primary molding product, which is lifted and inverted from the first support unit, to the first support unit. In Fig. 18B, solid lines show a state of the lifting/lowering slider 594 or the like when the inverting of the primary molding product 20 is completed, and two-dot chain lines show a state of the lifting/lowering slider or the like when the lowering of the primary molding product 20 is completed. Fig. 19 is a plan view showing a state of the gate cutting machine when the conveyance machine according to the embodiment picks up the molding product, which is separated from the disused product, from the gate cutting machine.

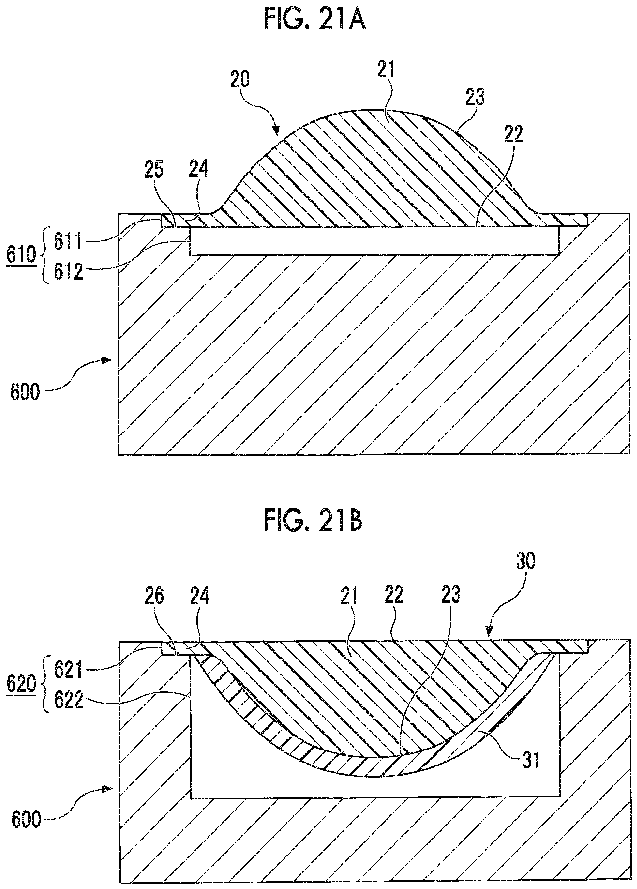

The gate cutting machine 550 includes an inverting machine 590 which inverts the primary molding product 20 which is supported by the first support unit 560. Accordingly, although described in detail later, as shown in Fig. 21A, in order to place the primary molding product 20 on the cooling table 600 such that the convex curved surface 23 of the lens portion 21 faces upward, the primary molding product 20 is inverted in an up-down direction. In addition, when the cooled primary molding product 20 (insert material for the secondary molding product) is adsorbed to the stationary mold 810, as shown in Fig. 16B, the primary molding product 20 is inverted in an up-down direction such that the convex curved surface 23 of the lens portion 21 faces the movable mold 820.

In addition, in the present embodiment, the inverting machine 590 which inverts the primary molding product 20 in the up-down direction is provided in the gate cutting machine 550. However, the inverting machine 590 may be provided in the cooling table 600. That is, in the present embodiment, the primary molding product 20 is inverted in the up-down direction in the gate cutting machine 550. However, the primary molding product 20 may be inverted in the up-down direction in the cooling table 600.

Meanwhile, the secondary molding product 30 is placed on the second support unit 570 such that the flat surface 22 of the lens portion 21 faces upward without being inverted in the up-down direction. Although described in detail later, as shown in Fig. 21B, the secondary molding product 30 is placed on the cooling table 600 such that the flat surface 22 of the lens portion 21 faces upward. In addition, when the cooled secondary molding product 30 (insert material for the tertiary molding product) is adsorbed to the stationary mold 810, as shown in Fig. 16B, the secondary molding product 30 is placed such that the flat surface 22 of the lens portion 21 faces the movable mold 820.

In addition, the tertiary molding product 40 is placed on the third support unit 580 such that the flat surface 22 of the lens portion 21 faces downward without being inverted in the up-down direction. Accordingly, although described in detail later, the tertiary molding product 40 is placed on an upper surface of the finished product conveyance machine 660 such that the flat surface 22 of the lens portion 21 faces downward.

For example, the inverting machine 590 includes a pair of adsorption pads 591 which adsorbs the primary molding product 20, a pair of arms 592 which has the adsorption pads 591 respectively provided on distal ends of the arms 592, a rotating table 593 to which the pair of arms 592 is fixed, a lifting/lowering slider 594 which rotatably supports the rotating table 593, and a pair of lifting/lowering guide 595 which guides the lifting/lowering slider 594 in the vertical direction.

The pair of lifting/lowering guides 595 is provided vertically. The lifting/lowering slider 594 can be lifted or lowered along the pair of lifting/lowering guide 595. The lifting/lowering slider 594 is lifted or lowered by a drive source such as a hydraulic cylinder, and thus, the rotating table 593 is lifted or lowered. The rotating table 593 is lifted or lowered together with the lifting/lowering slider 594. Every time the rotating table 593 is rotated by 180° by a drive source such as a rotating motor, adsorption surfaces of the pair of adsorption pads 591 which adsorbs the primary molding product 20 are switched to an upward state and a downward state. The pair of adsorption pads 591 is connected to a vacuum pump via a pipe. When the vacuum pump is operated, a negative pressure is generated in pair of adsorption pads 591, and the primary molding product 20 is adsorbed to the pair of adsorption pads 591 by the negative pressure. Thereafter, when the operation of vacuum pump stops, the air pressures of the pair of adsorption pads 591 are returned to the atmospheric pressure and the adsorption of primary molding product 20 is released.

The first support unit 560 moves from the molding product loading position shown in Fig. 17A to the disused product drop position shown in Fig. 17B, and thus, the pair of adsorption pads 591 is inserted to between the main body 561 of the first support unit 560 and the flange portion 24 of the primary molding product 20. Thereafter, the lifting/lowering slider 594 is lifted from the standby position indicated by two-dot chain lines in Fig. 18A to an inversion position indicated by solid lines in Fig. 18A. In this case, the pair of adsorption pads 591 adsorbs and holds the flange portion 24 of the primary molding product 20 from below. Subsequently, the rotating table 593 rotates by 180° from an inversion start position indicated by the solid lines in Fig. 18A to an inversion completion position indicated by the solid lines in Fig. 18B, and thus, the primary molding product 20 is inverted in the up-down direction. When the inversion of the primary molding product 20 is completed, the pair of adsorption pads 591 adsorbs and holds the flange portion 24 of the primary molding product 20 from above. Thereafter, the lifting/lowering slider 594 is lowered from the inversion position indicated by the solid lines in Fig. 18B to a replacement position indicated by the two-dot chain lines in Fig. 18B. Subsequently, the adsorption of the primary molding product 20 adsorbed by the pair of adsorption pads 591 is released, and the primary molding product 20 is placed on the first support unit 560.

Thereafter, if the lifting/lowering slider 594 is lifted to the inversion completion position indicated by the solid lines in Fig 18B, the first support unit 560, the second support unit 570, and the third support unit 580 are moved from the disused product drop position shown in Fig. 17B to the molding product discharge position shown in Fig. 19. Subsequently, the rotating table 593 is reversely rotated by 180° from the inversion completion position indicated by the solid lines in Fig. 18B to the inversion start position indicated by the solid lines in Fig. 18A. In addition, the rotation direction of the rotating table 593 is not particularly limited. Thereafter, the lifting/lowering slider 594 is returned to the standby position indicated by the two-dot chain lines in Fig. 18A.

In addition, the gate cutting machine 550 of the present embodiment is used for the lamination molding. However, the use of the gate cutting machine 550 is not particularly limited. The gate cutting machine 550 may be used for general injection molding.

### (Cooling Table)

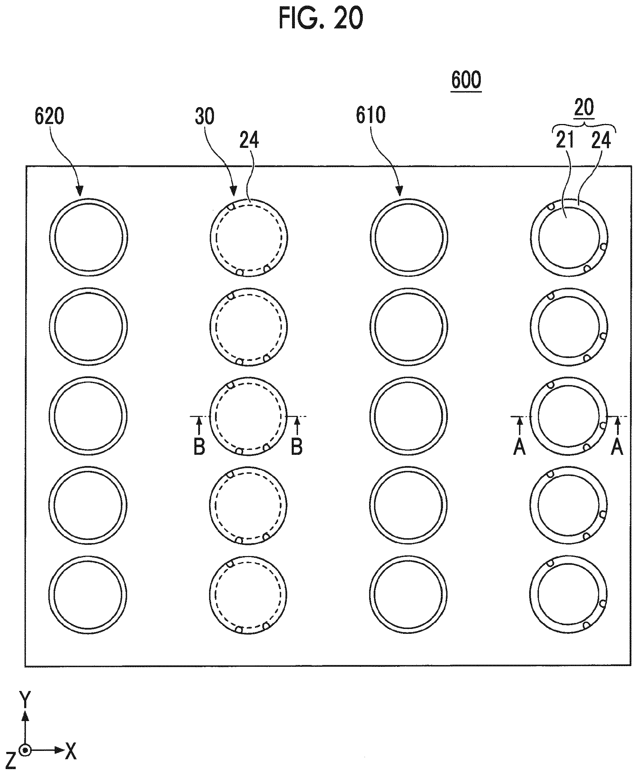

Fig. 20 is a plan view showing the cooling table according to an embodiment. Figs. 21A and 21B are sectional views showing the main portion of the cooling table according to the embodiment. Fig. 21A is a sectional view of the primary molding product cooling portion taken along line A-A of Fig. 20. Fig. 21B is a sectional view of a secondary molding product cooling portion taken along line B-B of Fig. 20. In addition, a configuration of the cooling table 600 is not limited to the configuration shown in Figs. 20 to 21B.

After the primary molding product 20 or the secondary molding product 30 is separated from the disused product 60 by the gate cutting machine 550, the primary molding product 20 or the secondary molding product 30 is conveyed from the gate cutting machine 550 to the cooling table 600 by the conveyance machine 500. The cooling table 600 cools the primary molding product 20 and the secondary molding product 30. The primary molding product 20 and the secondary molding product 30 cooled by the cooling table 600 are picked up by the conveyance machine 500.

The cooling table 600 has a flow path, through which a refrigerant such as cooling water flows, inside the cooling table 600. The refrigerant supplied to the inside of the cooling table 600 controls a temperature of the cooling table 600 and is discharged to the outside of the cooling table 600. Accordingly, heat of the primary molding product 20 or the secondary molding product 30 placed on the cooling table 600 can be discharged to the outside of the cooling table 600, and thus, the primary molding product 20 or the secondary molding product 30 can be cooled. A temperature of the refrigerant supplied to the inside of the cooling table 600 may be lower than the temperatures of the first temperature control fluid and the second temperature control fluid supplied to the inside of the mold unit 800. The temperature of the cooling table 600 can be lower than the temperature of the mold unit 800, and thus, cooling efficiency can be enhanced.

The cooling table 600 includes a primary molding product cooling portion 610 which is placed on the primary molding product 20. The primary molding product 20 is placed on the primary molding product cooling portion 610 from first molding product holding unit 521 of the conveyance machine 500. For example, as shown in Fig. 21A, the primary molding product 20 is placed on the primary molding product cooling portion 610 such that the convex curved surface 23 of the lens portion 21 faces upward. The cooling table 600 may include a plurality of (for example, ten) primary molding product cooling portion 610 so as to simultaneously cool a plurality of primary molding products 20. The primary molding product 20 cooled by the primary molding product cooling portion 610 is picked up by the first insert material holding unit 531 of the conveyance machine 500.

The primary molding product cooling portion 610 is formed in a concave shape on the upper surface of the cooling table 600. For example, the primary molding product cooling portion 610 has a first recessed part 611 formed in a concave shape on the upper surface of the cooling table 600 and a second recessed part 612 formed in a concave shape on an inner bottom surface (lower surface) of the first recessed part 611. The first recessed part 611 forms a disk-shaped space inside the first recessed part 611, presses the outer peripheral surface of the flange portion 24 of the primary molding product 20 on an inner peripheral surface of the first recessed part 611, and supports a lower surface (first plate surface 25) of the flange portion 24 on an inner bottom surface of the first recessed part 611. The second recessed part 612 is formed to be smaller than the inner bottom surface on the inner bottom surface of the first recessed part 611, and forms a disk-shaped space inside the second recessed part 612. A diameter of the second recessed part 612 may be larger than a diameter of the flat surface 22 of the lens portion 21. A contact between the flat surface 22 of the lens portion 21 and the cooling table 600 can be prevented, and thus, occurrence of contact damages can be prevented.

The cooling table 600 includes a secondary molding product cooling portion 620 on which the secondary molding product 30 is placed. The secondary molding product 30 is placed on the secondary molding product cooling portion 620 from the second molding product holding unit 524 of the conveyance machine 500. For example, as shown in Fig. 21B, the secondary molding product 30 is placed on the secondary molding product cooling portion 620 such that the flat surface 22 of the lens portion 21 faces upward. The cooling table 600 may include a plurality of (for example, ten) secondary molding product cooling portion 620 so as to simultaneously cool a plurality of secondary molding products 30. The secondary molding product 30 cooled by the secondary molding product cooling portion 620 is picked up by the second insert material holding unit 534 of the conveyance machine 500.

The secondary molding product cooling portion 620 is formed in a concave shape on the upper surface of the cooling table 600. For example, the secondary molding product cooling portion 620 has a first recessed part 621 formed in a concave shape on the upper surface of the cooling table 600 and a second recessed part 622 formed in a concave shape on an inner bottom surface (lower surface) of the first recessed part 621. The first recessed part 621 forms a disk-shaped space inside the first recessed part 621, presses the outer peripheral surface of the flange portion 24 of the secondary molding product 30 on an inner peripheral surface of the first recessed part 621, and supports a lower surface (second plate surface 26) of the flange portion 24 on an inner bottom surface of the first recessed part 621. The second recessed part 622 is formed to be smaller than the inner bottom surface on the inner bottom surface of the first recessed part 621, and forms a disk-shaped space inside the second recessed part 622. A diameter of the second recessed part 622 may be larger than a diameter of the flat surface 22 of the lens portion 21. In addition, a difference in height between the inner bottom surface of the second recessed part 622 and the inner bottom surface of the first recessed part 621 is set such that the inner bottom surface of the second recessed part 622 does not come into contact with the secondary lamination portion 31. A contact between the secondary lamination portion 31 and the cooling table 600 can be prevented, and thus, occurrence of contact damages can be prevented.

In addition, the cooling table 600 of the present embodiment is used for the lamination molding. However, the use of the cooling table 600 is not particularly limited. The cooling table 600 may be used for general injection molding.

### (Alignment Machine)

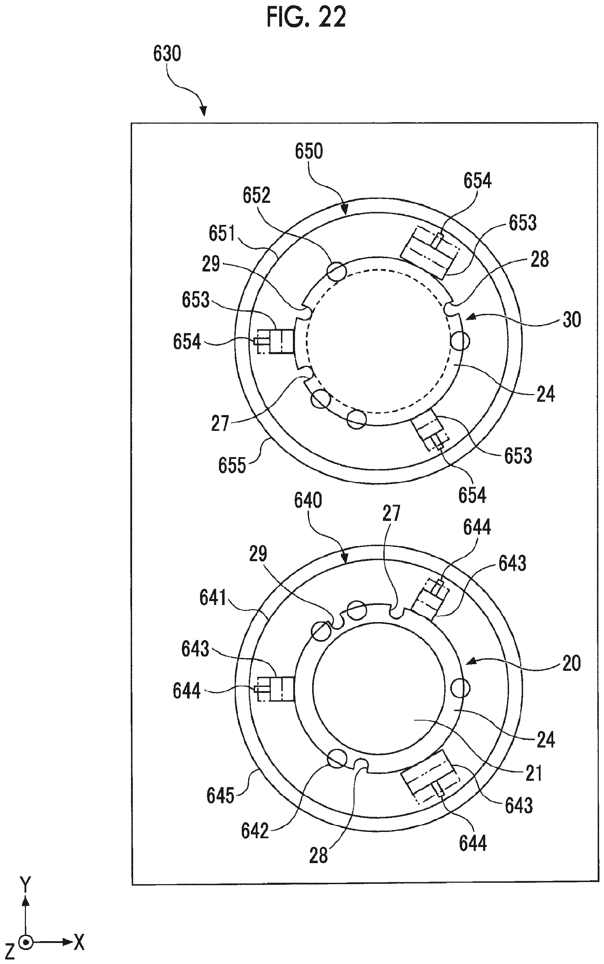

Fig. 22 is a plan view showing the alignment machine according to an embodiment. The alignment machine 630 aligns the insert material before the insert material is inserted into the inside of the mold unit 800. The alignment includes centering and a rotation around a core. The alignment of the insert material is performed in advance, and thus, it is possible to adsorb the insert material at a preset position of the stationary mold 810 in a preset direction. In addition, a configuration of the alignment machine 630 is not limited to the configuration shown in Fig. 22. For example, the insert material holding unit 530 of the conveyance machine 500 may include a function of the alignment machine 630.

After the primary molding product 20 or the secondary molding product 30 is cooled by the cooling table 600, the primary molding product 20 or the secondary molding product 30 is conveyed from the cooling table 600 to the alignment machine 630 by the conveyance machine 500 as the insert material for the secondary molding product or the insert material for the tertiary molding product. The alignment machine 630 performs the alignment of the primary molding product 20 and the secondary molding product 30. The alignment includes centering and a rotation around a core. The primary molding product 20 and the secondary molding product 30 aligned by the alignment machine 630 are picked up by the conveyance machine 500.

The alignment machine 630 includes a first chuck 640 which supports the insert material (for example, the primary molding product 20) for the secondary molding product. The first chuck 640 includes a disk-shaped chuck body 641, a plurality of (for example, four) support pins 642 which protrude from an upper surface of the chuck body 641, and a plurality of (for example, three) movable claws 643 which are provided to be movable on the upper surface of the chuck body 641. In addition, the first chuck 640 further includes a plurality of (for example, three) guides 644 which guide the plurality of movable claws 643 in a radial direction of the chuck body 641. The plurality of guides 644 are radially provided when viewed in the vertical direction and are disposed at a pitch of 120°, for example. The plurality of movable claws 643 may be simultaneously moved in the same direction (a direction close to each other or a direction separating from each other), and amounts of movement thereof may be the same.

When the plurality of movable claws 643 are positioned at receiving positions indicated by two-dot chain lines in Fig. 22, the conveyance machine 500 places the primary molding product 20 on upper surfaces of the four support pins 642 such that the convex curved surface 23 of the lens portion 21 faces upward. The four support pins 642 come into contact with the flange portion 24 protruding radially outward from the lens portion 21 such that the four support pins 642 does not come into contact with the lens portion 21. Subsequently, the conveyance machine 500 releases the adsorption of the primary molding product 20 and is separated from the alignment machine 630. Thereafter, the plurality of movable claws 643 are moved from the receiving positions indicated by the two-dot chain lines in Fig. 22 to centering positions indicated by the solid lines in Fig. 22. Heights of the three movable claws 643 are higher than heights of the three support pins 642, and the three movable claws 643 presses the outer peripheral surface of the flange portion 24. As a result, centering of the primary molding product 20 is performed. Specifically, in the vertical direction view, a center of the primary molding product 20 and a center of the chuck body 641 coincide with each other.

The alignment machine 630 includes the rotary table 645 which rotates the first chuck 640. The rotary table 645 includes a drive source such as a rotating motor which rotates the chuck body 641. If the chuck body 641 is rotated by the drive source, the support pins 642 or the movable claws 643 rotate together with the chuck body 641. The rotation center coincides with a center of the chuck body 641. The rotation of the chuck body 641 is performed in a state where the outer peripheral surface of the flange portion 24 is pressed by the three movable claws 643 as indicated by solid lines in Fig. 22. Accordingly, the primary molding product 20 is rotated around the core, and each of the first notch 27, the second notch 28, and the third notch 29 formed in the flange portion 24 is directed in a predetermined angle. Thereafter, if the conveyance machine 500 receives the primary molding product 20 from the alignment machine 630, the three movable claws 643 are returned to the centering positions indicated by the solid lines in Fig. 22 to the receiving positions indicated by two-dot chain lines in Fig. 22.

The alignment machine 630 includes a second chuck 650 which supports the insert material (for example, the secondary molding product 30) for the tertiary molding product. The second chuck 650 which supports the insert material for the tertiary molding product and the first chuck 640 which supports the insert material for the secondary molding product are separately provided from each other. Accordingly, it possible to simultaneously perform the alignment of the insert material for the secondary molding product and the alignment of the insert material for the tertiary molding product, and thus, the standby time for aligning the insert material can be shortened.

In addition, the first chuck 640 may also serve as the second chuck 650. In this case, the conveyance machine 500 delivers the insert material for the secondary molding product and the insert material for the tertiary molding product to the alignment machine 630 in order. The order of the delivery may be any one. While the alignment machine 630 aligns the insert material for the secondary molding product, the conveyance machine 500 holds the insert material for the tertiary molding product. Meanwhile, while alignment machine 630 aligns the insert material for the tertiary molding product, the conveyance machine 500 holds the insert material for the secondary molding product. In this case, although a standby time becomes long, the number of chucks of the alignment machine 630 can decrease and a manufacturing cost of the alignment machine 630 can decreases.

The second chuck 650 is configured similarly to the first chuck 640, and includes a disk-shaped chuck body 651, a plurality of (for example, four) support pins 652 which protrude from an upper surface of the chuck body 651, and a plurality of (for example, three) movable claws 653 which are provided to be movable on the upper surface of the chuck body 651. In addition, the second chuck 650 further includes a plurality of (for example, three) guides 654 which guide the plurality of movable claws 653 in a radial direction of the chuck body 651. The plurality of guides 654 are radially provided when viewed in the vertical direction and are disposed at a pitch of 120°, for example. The plurality of movable claws 653 may simultaneously move in the same direction and amounts of movement thereof may be the same as each other.

When the plurality of movable claws 653 are positioned at receiving positions indicated by two-dot chain lines in Fig. 22, the conveyance machine 500 places the secondary molding product 30 on upper surfaces of the four support pins 652 such that the flat surface 22 of the lens portion 21 faces upward. The four support pins 652 come into contact with the flange portion 24 protruding radially outward from the lens portion 21 such that the four support pins 652 does not come into contact with the lens portion 21 or the secondary lamination portion 31. In addition, the four support pins 652 supports the flange portion 24 such that the secondary lamination portion 31 does not come into contact with the upper surface of the chuck body 651. Subsequently, the conveyance machine 500 releases the adsorption of the secondary molding product 30 and is separated from the alignment machine 630. Thereafter, the plurality of movable claws 653 are moved from the receiving positions indicated by the two-dot chain lines in Fig. 22 to centering positions indicated by the solid lines in Fig. 22. Heights of the three movable claws 653 are higher than heights of the three support pins 652, and the three movable claws 653 presses the outer peripheral surface of the flange portion 24. As a result, centering of the secondary molding product 30 is performed. Specifically, in the vertical direction view, a center of the secondary molding product 30 and a center of the chuck body 651 coincide with each other.

The alignment machine 630 includes the rotary table 655 which rotates the second chuck 650. The rotary table 655 includes a drive source such as a rotating motor which rotates the chuck body 651. If the chuck body 651 is rotated by the drive source, the support pins 652 or the movable claws 653 rotate together with the chuck body 651. The rotation center coincides with a center of the chuck body 651. The rotation of the chuck body 651 is performed in a state where the outer peripheral surface of the flange portion 24 is pressed by the three movable claws 653 as indicated by the solid lines in Fig. 22. Accordingly, the secondary molding product 30 is rotated around the core, and each of the first notch 27, the second notch 28, and the third notch 29 formed in the flange portion 24 is directed in a predetermined angle. Thereafter, if the conveyance machine 500 receives the secondary molding product 30 from the alignment machine 630, the three movable claws 653 are returned to the centering positions indicated by the solid lines in Fig. 22 to the receiving positions indicated by two-dot chain lines in Fig. 22.

In addition, the alignment machine 630 of the present embodiment is used for the lamination molding. However, the use of the alignment machine 630 is not particularly limited. The alignment machine 630 may be used for general injection molding.

### (Operation of Injection Molding System)

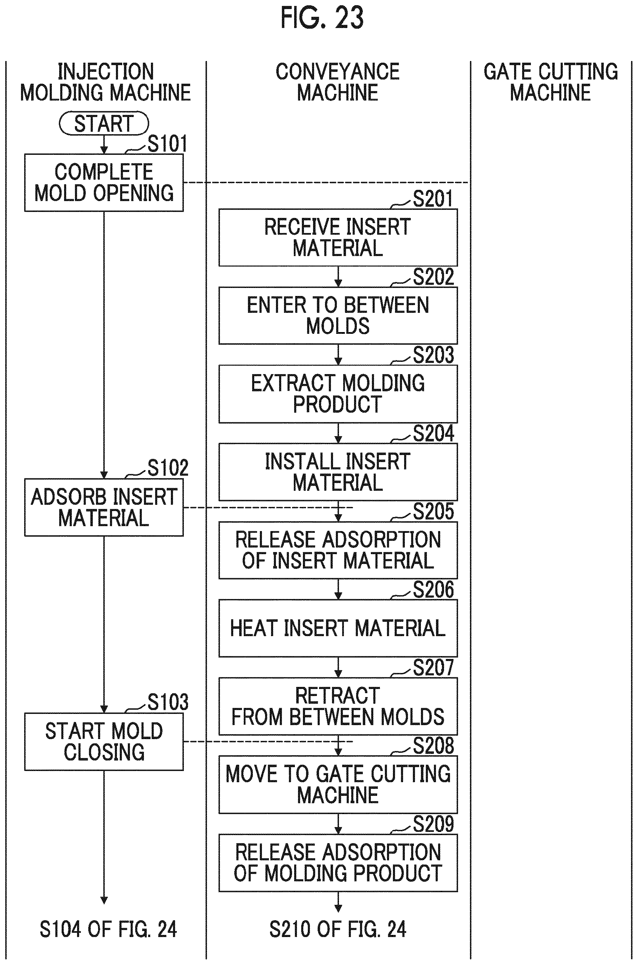

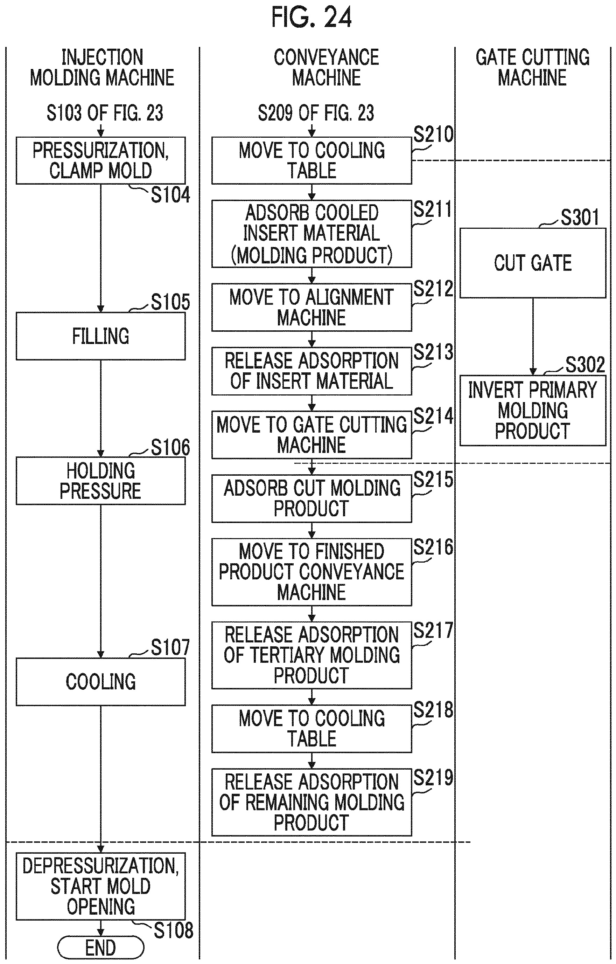

Fig. 23 is a flowchart showing operation flows of the injection molding machine, the conveyance machine, and the gate cutting machine according to the embodiment. Fig. 24 is a flowchart showing the operation flows of the injection molding machine, the conveyance machine, and the gate cutting machine subsequent to Fig. 23. The operation of the injection molding machine 10 shown in Figs. 23 and 24 is performed under the control of the molding machine control unit 710 (refer to Fig. 3), and the operation of the conveyance machine 500 and the operation of the gate cutting machine 550 shown in Figs. 23 and 24 are performed under the control of the peripheral device control unit 720 (refer to Fig. 3). In addition, when Step S101 of Fig. 23 starts, the aligned insert material (for example, the primary molding product 20 and the secondary molding product 30) exist in the alignment machine 630. Moreover, when Step S101 of Fig. 23 starts, the preformed primary molding product 20, secondary molding product 30, and tertiary molding product 40 exist inside the mold unit 800 in a mold clamping state.

First, the injection molding machine 10 completes the mold opening of the mold unit 800 (Step S101 of Fig. 23). In addition, the completion of the mold opening of the mold unit 800 may be performed before Step S202 described later (the conveyance machine 500 enters a portion between the stationary mold 810 and the movable mold 820 in the mold open state) or may be performed after Step S201 described later (the insert material is received by the conveyance machine 500).

Next, the holding unit 510 of the conveyance machine 500 receives the insert material from the alignment machine 630 (Step S201 of Fig. 23). The insert material is adsorbed to the insert material holding unit 530 of the conveyance machine 500. Specifically, the primary molding product 20 which is the insert material for the secondary molding product is adsorbed to the first insert material holding unit 531, and the secondary molding product 30 which is the insert material for the tertiary molding product is adsorbed to the second insert material holding unit 534.

In the primary molding product 20 which is the insert material for the secondary molding product, the flange portion 24 is adsorbed to the plurality of adsorption nozzles 533 such that the lens portion 21 is inserted into the cylindrical portion 532. Accordingly, when the primary molding product 20 is adsorbed to the stationary mold 810 in Step S102 described later, as shown in Fig. 16B, the convex curved surface 23 of the lens portion 21 faces the movable mold 820.

Meanwhile, the secondary molding product 30 which is the insert material for the tertiary molding product is adsorbed such that the direction of the lens portion 21 is opposite to the direction of the primary molding product 20. Accordingly, when the secondary molding product 30 is adsorbed to the stationary mold 810 in Step S102, as shown in Fig. 16B, the flat surface 22 of the lens portion 21 faces the movable mold 820. In the secondary molding product 30, the flange portion 24 is adsorbed to the plurality of adsorption nozzles 536 such that the lens portion 21 disposed outside the cylindrical portion 535.

Next, the holding unit 510 of the conveyance machine 500 enters the portion between the stationary mold 810 and the movable mold 820 in the state of the mold opening (Step S202 in Fig. 23). The insert material holding unit 530 is disposed so as to face the stationary mold 810 and the molding product holding unit 520 is disposed so as to face the movable mold 820.

Next, the holding unit 510 of the conveyance machine 500 extracts the molding product from the movable mold 820 (Step S203 in Fig. 23). The molding product is adsorbed to the molding product holding unit 520 of the conveyance machine 500. Specifically, the primary molding product 20 is adsorbed to the first molding product holding unit 521, the secondary molding product 30 is adsorbed to the second molding product holding unit 524, and the tertiary molding product 40 is adsorbed to the third molding product holding unit 527 (refer to Fig. 16A or the like).

As shown in Figs. 9 and 10, the primary molding product 20, the secondary molding product 30, and the tertiary molding product 40 are formed such that the directions of the lens portions 21 of the primary molding product 20 and the secondary molding product 30, and the direction of the lens portion 21 of the tertiary molding product 40 are opposite to each other. Accordingly, the primary molding product 20, the secondary molding product 30, and the tertiary molding product 40 are adsorbed such that the directions of the lens portions 21 of the primary molding product 20 and the secondary molding product 30, and the direction of the lens portion 21 of the tertiary molding product 40 are opposite to each other (refer to Fig. 16A) .

Specifically, in the primary molding product 20, the flange portion 24 is adsorbed to the plurality of adsorption nozzles 523 such that the lens portion 21 is disposed outside the cylindrical portion 522. Similarly to the primary molding product 20, in the secondary molding product 30, the flange portion 24 is adsorbed to the plurality of adsorption nozzles 526 such that the lens portion 21 is disposed outside the cylindrical portion 525. Meanwhile, in the tertiary molding product 40, the flange portion 24 is adsorbed to the plurality of adsorption nozzles 529 such that the lens portion 21 is inserted into the cylindrical portion 528.

Next, the holding unit 510 of the conveyance machine 500 causes the insert material to abut against the stationary mold 810 (Step S204 of Fig. 23).

The primary molding product 20 which is the insert material for the secondary molding product abuts against the stationary mold 810 such that the convex curved surface 23 of the lens portion 21 faces the movable mold 820 (refer to Fig. 16B). Accordingly, when the mold is clamped, as shown in Fig. 10, the space 31S for molding the secondary lamination portion 31 is formed between the convex curved surface 23 of the lens portion 21 and the movable mold 820.

Meanwhile, the secondary molding product 30 which is the insert material for the tertiary molding product abuts against the stationary mold 810 such that the flat surface 22 of the lens portion 21 faces the movable mold 820 (refer to Fig. 16B) . Accordingly, when the mold is clamped, as shown in Fig. 10, the space 41S for molding the tertiary lamination portion 41 is formed between the flat surface 22 of the lens portion 21 and the movable mold 820.

Next, the insert material is adsorbed to the stationary mold 810 by the injection molding machine 10 (Step S102 of Fig. 23).

Next, the holding unit 510 of the conveyance machine 500 releases the adsorption of the insert material (Step S205 of Fig. 23). In addition, the order of Step S203, and Steps S204 and S205 may be reversed. That is, the delivery of the insert material from the conveyance machine 500 to the stationary mold 810 may be performed first, and the extraction of the molding product from the movable mold 820 may be performed later.

Next, the conveyance machine 500 rotates the rotary shaft portion 511 by 90°, and, as shown in Fig. 16B, the heating unit 540 faces the stationary mold 810, and the insert material adsorbed to the stationary mold 810 is heated by the heating unit 540 (Step S206 of Fig. 23). In order to shorten a time, the heating unit 540 may simultaneously heat the primary molding product 20 which is the insert material for the secondary molding product and the secondary molding product 30 which is the insert material for the tertiary molding product. In addition, by simultaneously heating the primary molding product 20 and the secondary molding product 30, it is possible to prevent any one of the primary molding product 20 and the secondary molding product 30 from getting cold first.

The heating unit 540 heats the surface (for example, the convex curved surface 23 of the lens portion 21) of the primary molding product 20 on which the secondary lamination portion 31 is laminated. The convex curved surface 23 of the lens portion 21 is melted and a surface tension is generated, and thus, it is possible to remove the wrinkles which are occurred when the primary molding product 20 is cooled. In addition, it is possible to mix the melted convex curved surface 23 and the melted molding material with each other, and it is possible to suppress a formation of a visible discontinuous surface at a boundary thereof.

In addition, the heating unit 540 heats the surface (for example, the flat surface 22 of the lens portion 21) of the secondary molding product 30 on which the tertiary lamination portion 41 is laminated. The flat surface 22 of the lens portion 21 is melted and a surface tension is generated, and thus, it is possible to remove the wrinkles which are occurred when the primary molding product 20 is cooled. In addition, it is possible to mix the melted flat surface 22 and the melted molding material with each other, and it is possible to suppress a formation of a visible discontinuous surface at a boundary thereof.

According to the rotation of the rotary shaft portion 511, not only the heating unit 540 but also the molding product holding unit 520 and the insert material holding unit 530 are rotated. As a result, as shown in Fig. 16B, the adsorption surface which adsorbs the molding product of the molding product holding unit 520 faces upward and the adsorption surface which adsorbs the insert material of the insert material holding unit 530 faces downward. Moreover, the adsorption surface of the molding product holding unit 520 may face downward and the adsorption surface of the insert material holding unit 530 may face upward.

While the heating unit 540 heats the insert material, the adsorption surface of the molding product holding unit 520 faces upward such that the heating unit 540 does not heat the molding product. Since the adsorption surface faces upward, the molding product can be stably held on the adsorption surface. In addition, as described above, the adsorption surface of the molding product holding unit 520 may face downward. In this case, the conveyance machine 500 holds the molding product against the gravity, and thus, it is possible to prevent the molding product from being heated by the heating unit 540.

Next, the holding unit 510 of the conveyance machine 500 is retracted from between the stationary mold 810 and the movable mold 820 (Step S207 of Fig. 23).

Next, the injection molding machine 10 starts the mold closing of the mold unit 800 (Step S103 of Fig. 23). Thereafter, the injection molding machine 10 performs the pressurization and the mold clamping of the mold unit 800 (Step S104 of Fig. 24), the filling with the molding material by the injection unit 300 (Step S105 of Fig. 24), the holding pressure of the molding material by the injection unit 300 (Step S106 of Fig. 24), cooling of the molding material inside the mold unit 800 (Step S107 of Fig. 24), and the depressurization and the mold opening start of the mold unit 800 (Step S108 of Fig. 24). The conveyance machine 500 and the gate cutting machine 550 performs the following operations from the start of the mold closing (Step S103 of Fig. 23) to the start of the depressurization (Step S108 of Fig. 24).

First, the holding unit 510 of the conveyance machine 500 moves the molding product extracted from the movable mold 820 to the gate cutting machine 550 while holding the molding product (Step S208 of Fig. 23). Meanwhile, the molding product is adsorbed to the molding product holding unit 520 of the conveyance machine 500.

Next, the holding unit 510 of the conveyance machine 500 releases adsorption of the molding product (Step S209 in Fig. 23). As a result, as shown in Fig. 17A, the molding product is placed on the gate cutting machine 550. Specifically, the primary molding product 20 is placed on the first support unit 560, the secondary molding product 30 is placed on the second support unit 570, and the tertiary molding product 40 is placed on the third support unit 580.

In the primary molding product 20, the flange portion 24 is placed on the plurality of support claws 562 such that the convex curved surface 23 of the lens portion 21 faces downward. Similarly to the primary molding product, in the secondary molding product 30, the flange portion 24 is placed on the plurality of support claws 572 such that the convex curved surface 23 of the lens portion 21 faces downward. Unlike the primary molding product 20 and the secondary molding product 30, in the tertiary molding product 40, the flange portion 24 is placed on the plurality of support claws 582 so that the convex curved surface 23 of the lens portion 21 faces upward.

Next, the holding unit 510 of the conveyance machine 500 moves from the gate cutting machine 550 to the cooling table 600 (Step S210 of Fig. 24). In addition, the conveyance machine 500 being separated from the gate cutting machine 550 is a start condition of the gate cutting (Step S301 in Fig. 24) by the gate cutting machine 550. The operation of the gate cutting machine 550 will be described later.

Next, the holding unit 510 of the conveyance machine 500 adsorbs the cooled insert material cooled by the cooling table 600 (Step S211 of Fig. 24). The insert material is adsorbed to the insert material holding unit 530 of the conveyance machine 500. Specifically, the primary molding product 20 (refer to Fig. 21A) which is the insert material for the secondary molding product is adsorbed to the first insert material holding unit 531 and the secondary molding product 30 (refer to Fig. 21B) which is the insert material for the tertiary molding product is adsorbed to the second insert material holding unit 534.

The primary molding product 20 which is the insert material for the secondary molding product is adsorbed to the first insert material holding unit 531. Specifically, in the primary molding product 20, the flange portion 24 is adsorbed to the plurality of adsorption nozzles 533 such that the lens portion 21 is inserted into the cylindrical portion 532.

Meanwhile, the secondary molding product 30 which is the insert material for the tertiary molding product is adsorbed to the second insert material holding unit 534. Specifically, in the secondary molding product 30, the flange portion 24 is adsorbed to the plurality of adsorption nozzles 536 such that the lens portion 21 is disposed outside the cylindrical portion 535.

Next, the holding unit 510 of the conveyance machine 500 moves from the cooling table 600 to the alignment machine 630 while holding the insert material (Step S212). Meanwhile, the insert material is adsorbed to the insert material holding unit 530 of the conveyance machine 500.

Next, the holding unit 510 of the conveyance machine 500 releases the adsorption of the insert material (Step S213 of Fig. 24). Accordingly, as shown in Fig. 22, the insert material is placed on the alignment machine 630.

The primary molding product 20 which is the insert material for the secondary molding product is placed on the first chuck 640 such that the convex curved surface 23 of the lens portion 21 faces upward. Accordingly, when the primary molding product 20 is adsorbed to the stationary mold 810, as shown in Fig. 16B, the convex curved surface 23 of the lens portion 21 faces the movable mold 820.

The secondary molding product 30 which is the insert material for the tertiary molding product is placed on the second chuck 650 such that the flat surface 22 of the lens portion 21 faces upward. Accordingly, when the secondary molding product 30 is adsorbed to the stationary mold 810, as shown in Fig. 16B, the flat surface 22 of the lens portion 21 faces the movable mold 820.

Next, the holding unit 510 of the conveyance machine 500 moves from the alignment machine 630 to the gate cutting machine 550 (Step S214 in Fig. 24). In addition, if the conveyance machine 500 is separated from the alignment machine 630, the alignment machine 630 performs the alignment of the insert material.

Meanwhile, the gate cutting machine 550 performs the following operations until the holding unit 510 of the conveyance machine 500 is returned to the gate cutting machine 550 in Step S214 after the holding unit 510 is separated from the gate cutting machine 550 in Step S210.

First, the gate cutting machine 550 performs the gate cutting of separating the molding product from the disused product (Step S301 of Fig. 24). The gate cutting machine 550 separates the primary molding product 20, the secondary molding product 30, and the tertiary molding product 40 received from the conveyance machine 500, from the disused product 60 (refer to Figs. 17A and 17B).

Next, the gate cutting machine 550 lifts the primary molding product 20, which is separated from the disused product 60, from the first support unit 560 as indicated by the solid lines in Fig. 18A and inverts the primary molding product 20 in the up-down direction as indicated by the solid lines in Fig. 18B (Step S302 of Fig. 24). Thereafter, the gate cutting machine 550 places the primary molding product 20 on the first support unit 560 again as indicated by the two-dot chain lines in Fig. 18B. The primary molding product 20 is placed on the first support unit 560 such that the convex curved surface 23 of the lens portion 21 faces upward.

Therefore, the primary molding product 20 is inverted in the up-down direction, and thus, in the following Step S219, as shown in Fig. 21A, the primary molding product 20 is placed on the cooling table 600 such that the convex curved surface 23 of the lens portion 21 faces upward. In addition, when the cooled primary molding product 20 (insert material for the secondary molding product) is adsorbed to the stationary mold 810, as shown in Fig. 16B, the primary molding product 20 is inverted in an up-down direction such that the convex curved surface 23 of the lens portion 21 faces the movable mold 820.

In addition, in the present embodiment, the inverting machine 590 which inverts the primary molding product 20 in the up-down direction is provided in the gate cutting machine 550. However, the inverting machine 590 may be provided in the cooling table 600. That is, in the present embodiment, the primary molding product 20 is inverted in the up-down direction in the gate cutting machine 550. However, the primary molding product 20 may be inverted in the up-down direction in the cooling table 600.

Meanwhile, the secondary molding product 30 is placed on the second support unit 570 such that the flat surface 22 of the lens portion 21 faces upward without being inverted in the up-down direction. Accordingly, in the following Step S219, as shown in Fig. 21B, the secondary molding product 30 is placed on the cooling table 600 such that the flat surface 22 of the lens portion 21 faces upward. In addition, when the cooled secondary molding product 30 (insert material for the tertiary molding product) is adsorbed to the stationary mold 810, as shown in Fig. 16B, the secondary molding product 30 is placed such that the flat surface 22 of the lens portion 21 faces the movable mold 820.

In addition, the tertiary molding product 40 is placed on the third support unit 580 such that the flat surface 22 of the lens portion 21 faces downward without being inverted in the up-down direction. Accordingly, in Step S217, the tertiary molding product 40 is placed on the upper surface of the finished product conveyance machine 660 such that the flat surface 22 of the lens portion 21 faces downward.

While the gate cutting (Step S301) is performed by the gate cutting machine 550 and the inversion (Step S302) in the up-down direction of the primary molding product 20 is performed, the holding unit 510 of the conveyance machine 500 performs the operations of Steps S211 to S213 and is returned to the gate cutting machine 550 (Step S214).

Next, the holding unit 510 of the conveyance machine 500 adsorbs the molding product cut by the gate cutting machine 550 (Step S215 of Fig. 24). The molding product is adsorbed to the molding product holding unit 520 of the conveyance machine 500. Specifically, the primary molding product 20 is adsorbed to the first molding product holding unit 521, the secondary molding product 30 is adsorbed to the second molding product holding unit 524, and the tertiary molding product 40 is adsorbed to the third molding product holding unit 527.

In the primary molding product 20, the flange portion 24 is adsorbed to the plurality of adsorption nozzles 523 such that the lens portion 21 is inserted into the cylindrical portion 522. Meanwhile, in the secondary molding product 30, unlike the primary molding product 20, the flange portion 24 is adsorbed to the plurality of adsorption nozzles 526 such that the lens portion 21 is disposed outside the cylindrical portion 525. In the tertiary molding product 40, similarly to the primary molding product 20, the flange portion 24 is adsorbed to the plurality of adsorption nozzles 529 such that the lens portion 21 is inserted into the cylindrical portion 528.

Next, the holding unit 510 of the conveyance machine 500 moves from the gate cutting machine 550 to the finished product conveyance machine 660 while adsorbing the primary molding product 20, the secondary molding product 30, and the tertiary molding product 40 (Step S216 of Fig. 24).

Next, the holding unit 510 of the conveyance machine 500 releases the adsorption of the tertiary molding product 40 (Step S217 of Fig. 24). Accordingly, the tertiary molding product 40 is placed on the upper surface of the finished product conveyance machine 660 such that the flat surface 22 of the lens portion 21 faces downward. In addition, the adsorption of primary molding product 20 and secondary molding product 30 is not released.

Next, the holding unit 510 of the conveyance machine 500 moves from the finished product conveyance machine 660 to the cooling table 600 while adsorbing the primary molding product 20 and the secondary molding product 30 (Step S218 of Fig. 24) . In addition, if the conveyance machine 500 is separated from the finished product conveyance machine 660, the finished product conveyance machine 660 discharges the tertiary molding product 40 to the outside of the injection molding system 1.

Next, the holding unit 510 of the conveyance machine 500 releases adsorption of the primary molding product 20 and the secondary molding product 30 (Step S219 of Fig. 24). Accordingly, the primary molding product 20 and the secondary molding product 30 are placed on the cooling table 600. As shown in Fig. 21A, the primary molding product 20 is placed on the primary molding product cooling portion 610 of the cooling table 600 such that the convex curved surface 23 of the lens portion 21 faces upward. Meanwhile, as shown in Fig. 21B, the secondary molding product 30 is placed on the secondary molding product cooling portion 620 of the cooling table 600 such that the flat surface 22 of the lens portion 21 faces upward.

In addition, the conveyance of the tertiary molding product 40 toward the finished product conveyance machine 660 (Steps S216 and S217) and the conveyance of the primary molding product 20 and the secondary molding product 30 toward the cooling table 600 (Steps S218 and S219) may be reversed. That is, the holding unit 510 of the conveyance machine 500 may move from the gate cutting machine 550 to the cooling table 600 while adsorbing the primary molding product 20, the secondary molding product 30, and the tertiary molding product 40, may place the primary molding product 20 and the secondary molding product 30 on the cooling table 600, and thereafter, may move from the cooling table 600 to the finished product conveyance machine 660.

Next, the injection molding machine 10 starts the depressurization and the mold opening of the mold unit 800 (Step S108 of Fig. 24). Thereafter, the injection molding system 1 ends the current processing. In addition, the injection molding system 1 may perform Step S101 of Fig. 23 after Step S108 of Fig. 24. That is, the injection molding system 1 may repeat the operations shown in Figs. 23 and 24.

### (Setting Change of Molding Condition)

The injection molding system 1 manufactures the primary molding product 20, the secondary molding product 30, and the tertiary molding product 40. The primary molding product 20 is manufactured by filling the first cavity space 831 shown in Fig. 9 with the molding material.

Meanwhile, the primary molding product 20 which is the insert material for the secondary molding product is disposed in a portion of the second cavity space 833 shown in Fig. 10, another portion (for example, the space 31S) of the second cavity space 833 is filled with the molding material, and thus, the secondary molding product 30 is manufactured. Therefore, in a case where stocks of the primary molding product 20 which is the insert material for the secondary molding product are insufficient, the injection molding system 1 cannot mold the secondary molding product 30.

In addition, the entire second cavity space 833 is filled with the molding material, and thus, the molding product having the same shape and the same dimensions as those of the secondary molding product 30 can be obtained by performing the injection molding once. However, in order to obtain a good product without sink marks, the cooling time is lengthened.

Similarly, the secondary molding product 30 which is the insert material for the tertiary molding product is disposed in a portion of the third cavity space 835 shown in Fig. 10, another portion (for example, the space 41S) of the third cavity space 835 is filled with the molding material, and thus, the tertiary molding product 40 is manufactured. Therefore, in a case where stocks of the secondary molding product 30 which is the insert material for the tertiary molding product are insufficient, the injection molding system 1 cannot mold the tertiary molding product 40.

In addition, the entire third cavity space 835 is filled with the molding material, and thus, the molding product having the same shape and the same dimensions as those of the tertiary molding product 40 can be obtained by performing the injection molding once. However, in order to obtain a good product without sink marks, the cooling time is lengthened.

Accordingly, in the injection molding system 1 of the present embodiment, in order to improve quality of the finished product 40 and decrease waste of the molding material, the cavity space filled with the molding material is switched. Hereinafter, the switching of the cavity space filled with the molding material will be described.

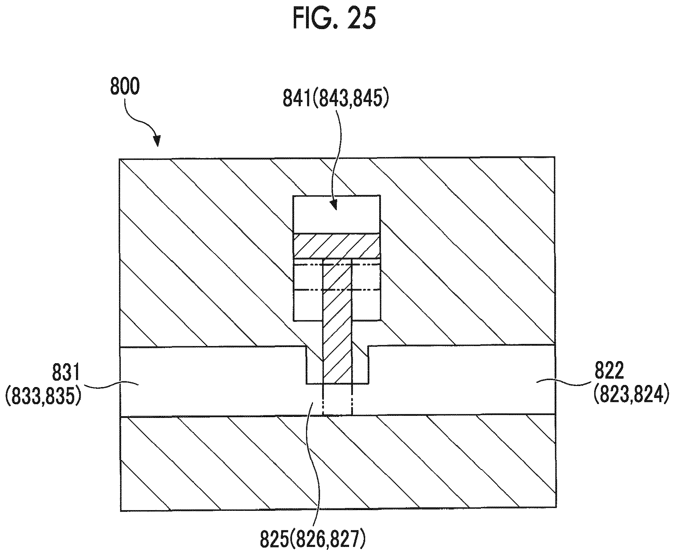

Fig. 25 is a sectional view showing a valve of the mold unit according to the embodiment. As shown in Fig. 25, the mold unit 800 includes a first valve 841 which opens or closes the first cavity space 831 with respect to the injection port 812 (refer to Fig. 1 or the like) of the molding material. For example, the first valve 841 is provided in the first gate 825 and opens or closes the first gate 825. If the first valve 841 closes the first gate 825 as indicated by two-dot chain lines in Fig. 25, the first cavity space 831 is closed with respect to the injection port 812. Meanwhile, if the first valve 841 opens the first gate 825 as indicated by solid lines in Fig. 25, the first cavity space 831 is opened with respect to the injection port 812.

Similarly, the mold unit 800 includes a second valve 843 which opens or closes the second cavity space 833 with respect to the injection port 812. For example, the second valve 843 is provided in the second gate 826 and opens or closes the second gate 826.

In addition, the mold unit 800 includes a third valve 845 which opens or closes the third cavity space 835 with respect to the injection port 812. For example, the third valve 845 is provided in the third gate 827 and opens or closes the third gate 827.

In addition, the mold unit 800 of the present embodiment includes the first valve 841, the second valve 843, and the third valve 845. However, the present invention is not limited to this. For example, the mold unit 800 may not have the first valve 841, and the first cavity space 831 may always be open to the injection port 812. That is, in order to obtain the tertiary molding product 40, it is to start with the manufacture of the primary molding product 20.

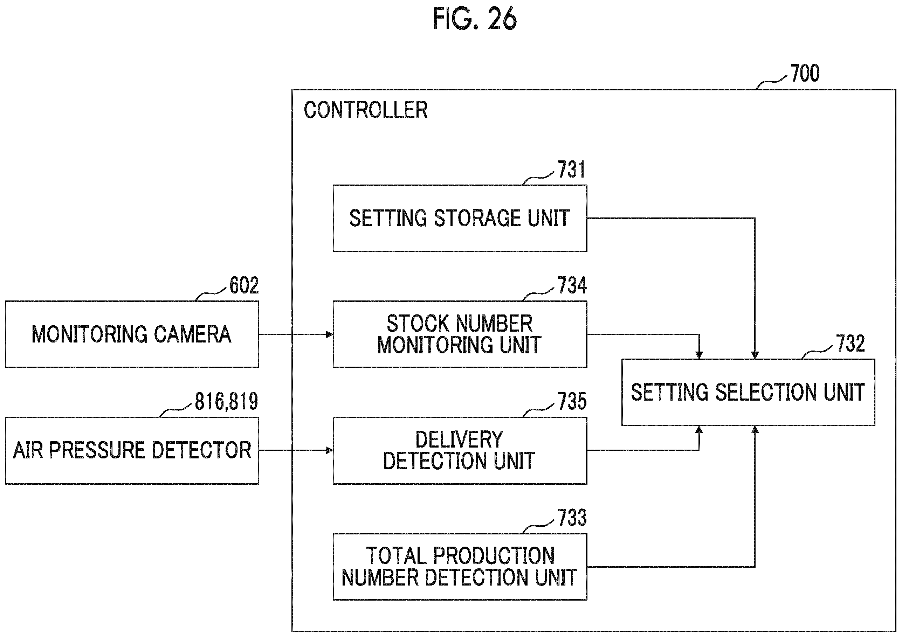

Fig. 26 is a functional block diagram showing components of a controller according to an embodiment. Each functional block shown in Fig. 26 is conceptual and does not necessarily need to be physically configured as shown. It is possible to configure all or some of the functional blocks by functionally or physically dispersing and integrating in any unit. All or some of processing functions performed in the functional blocks can be realized by a program executed by the CPU or can be realized as hardware by wired logic.

As shown in Fig. 26, the controller 700 has a setting storage unit 731 which stores settings used to control the mold unit 800 and the injection unit 300 and a setting selection unit 732 which selects settings used to control the mold unit 800 and the injection unit 300. The controller 700 further includes at least one of a total production number detecting unit 733 which detects the total production number of molding products from a predetermined time, a stock number monitoring unit 734 which monitors the number of stocks of the insert material existing outside the mold unit 800, and a delivery detection unit 735 which detects delivery of the insert material from the conveyance machine 500 to the mold unit 800.

The setting storage unit 731 stores plural kinds of settings used to control the mold unit 800 and the injection unit 300. As the settings of the mold unit 800, there are openings and closings of the first valve 841, the second valve 843, and the third valve 845. As the settings of the injection unit 300, there are the plasticizing completion position of the screw 330 and the V/P switching position. A forward movement distance from the plasticizing completion position to the V/P switching position indicates a filling amount of the molding material filling the inside of the mold unit 800 by one shot. The filling amount increases as the forward movement distance increases.

In a case where the V/P switching positions are the same as each other, the filling amount decreases as the number of the cavity spaces filled with the molding material decreases, and thus, the plasticizing completion position is set forward. Since the setting of the V/P switching position is not changed, an amount of molding material remaining in the cylinder 310 when the filling process is completed is a minimum amount required for the holding pressure process. As a result, a residence time of the molding material inside the cylinder 310 can be shortened, and deterioration of the molding material can be suppressed. In a case where the setting of the plasticizing completion position is changed, the selection of the cavity space filled with the molding material is performed until the plasticizing process is completed.

Meanwhile, in a case where the plasticizing completion positions are the same as each other, the filling amount decreases as the number of the cavity spaces filled with the molding material decreases, and thus, the V/P switching position is set rearward. Since the setting of the V/P switching position is changed while the setting of the plasticizing completion position is not changed, the selection of the cavity space filled with the molding material is not performed until the filling process starts. Therefore, it is possible to select the cavity space filled with the molding material until the filling process starts after the plasticizing process is completed, and it is possible to cope with a change of a situation after the plasticizing process is completed. In addition, the setting changes of the first valve 841, the second valve 843, and the third valve 845 are performed before the filling process starts. However, the setting change of the V/P switching position may be performed until the filling process ends.

As other settings of the injection unit 300, for example, there is a holding pressure in the holding pressure process.

For example, the setting storage unit 731 may store the following first setting, second setting, and third setting. The first setting is used in a control to fill only the first cavity space 831 among the first cavity space 831, the second cavity space 833, and the third cavity space 835 with the molding material. In the first setting, only the first valve 841 is opened, and the second valve 843 and the third valve 845 are closed. The first setting is used to manufacture only the primary molding product 20.

The second setting is used in a control to fill only the first cavity space 831 and the second cavity space 833 among the first cavity space 831, the second cavity space 833, and the third cavity space 835 with the molding material. In the second setting, the first valve 841 and the second valve 843 are opened, and the third valve 845 are closed. For example, the second setting is used after the first setting, and is used to manufacture only the primary molding product 20 and the secondary molding product 30.

The third setting is used in a control to fill all the first cavity space 831, the second cavity space 833, and the third cavity space 835 with the molding material. In the third setting, the first valve 841, the second valve 843, and the third valve 845 are opened. For example, the third setting is used after the second setting and is used to manufacture the primary molding product 20, the secondary molding product 30, and the tertiary molding product 40.

Although described in detail later, the setting selection unit 732 selects the setting used to control the mold unit 800 and the injection unit 300 based on at least one of a detection result of the total production number detecting unit 733, a monitoring result of the stock number monitoring unit 734, and a detection result of the delivery detection unit 735. In addition, the detection result of the total production number detecting unit 733, the monitoring result of the stock number monitoring unit 734, and the detection result of the delivery detection unit 735 may be used alone or in any combination.

First, the processing of the total production number detecting unit 733 and the processing of the setting selection unit 732 based on the detection result of the total production number detecting unit 733 will be described.

The total production number detecting unit 733 detects a total production number N1 of the primary molding products 20 from a preset time. For example, the preset time may be a time when the injection molding system 1 starts up, a time when a target number N3₀ of a total production number N3 of the tertiary molding products 40 is set, or the like.

The total production number N1 of the primary molding products 20 is detected based on the number of shots or the like. The total production number N1 of the primary molding products 20 includes only the total production number of good products and may not include the total production number of defective products. For example, an inspector attached to the conveyance machine 500 is used so as to determine whether the primary molding product 20 is good or bad. In addition, an installation location of the inspector is not particularly limited.

The total production number detecting unit 733 may detect a difference (N1₀-N1) between the total production number N1 and the target number N1₀ by detecting the total production number N1 of the primary molding products 20. N1₀-N1 is a remaining production number of the primary molding product 20. The target number N1₀ of the primary molding products 20 is equal to a sum of the target number N3₀ of tertiary molding product 40, the number of the defective products generated in the tertiary molding, and the number of the defective products generated in the secondary molding.

Similarly, the total production number detecting unit 733 detects a total production number N2 of the secondary molding products 30 from a preset time. For example, the preset time may be a time when the injection molding system 1 starts up, a time when a target number N30 of a total production number N3 of the tertiary molding products 40 is set, or the like.

The total production number N2 of the secondary molding products 30 is detected based on the number of shots or the like. The secondary molding product 30 is generated by consuming the primary molding product 20. Accordingly, the total production number N2 of the secondary molding products 30 is equal or more than the number of the consumed primary molding products 20. The total production number N2 of the secondary molding products 30 includes only the total production number of good products and may not include the total production number of defective products. For example, an inspector attached to the conveyance machine 500 is used so as to determine whether the secondary molding product 30 is good or bad. In addition, an installation location of the inspector is not particularly limited.

The total production number detecting unit 733 may detect a difference (N2₀-N2) between the total production number N2 and the target number N2₀ by detecting the total production number N2 of the secondary molding products 30. N2₀-N2 is a remaining production number of the secondary molding product 30. The target number N2₀ of the secondary molding products 30 is equal to a sum of the target number N3₀ of tertiary molding product 40 and the number of the defective products generated in the tertiary molding.

Similarly, the total production number detecting unit 733 detects a total production number N3 of the tertiary molding products 40 from a preset time. For example, the preset time may be a time when the injection molding system 1 starts up, a time when a target number N30 of a total production number N3 of the tertiary molding products 40 is set, or the like.

The total production number N3 of the tertiary molding products 40 is detected based on the number of shots or the like. The tertiary molding product 40 is generated by consuming the secondary molding product 30. Accordingly, the total production number N3 of the tertiary molding products 40 is equal or more than the number of the consumed secondary molding products 30. The total production number N3 of the tertiary molding products 40 includes only the total production number of the good products and may not include the total production number of the defective products. For example, an inspector attached to the conveyance machine 500 is used so as to determine whether the tertiary molding product 40 is good or bad. In addition, an installation location of the inspector is not particularly limited.

The total production number detecting unit 733 may detect a difference (N3₀-N3) between the total production number N3 and the target number N3₀ by detecting the total production number N3 of the tertiary molding products 40. N3₀-N3 is a remaining production number of the tertiary molding product 40. The target number N3₀ of the tertiary molding products 40 is set by a user or the like of the injection molding machine 10.

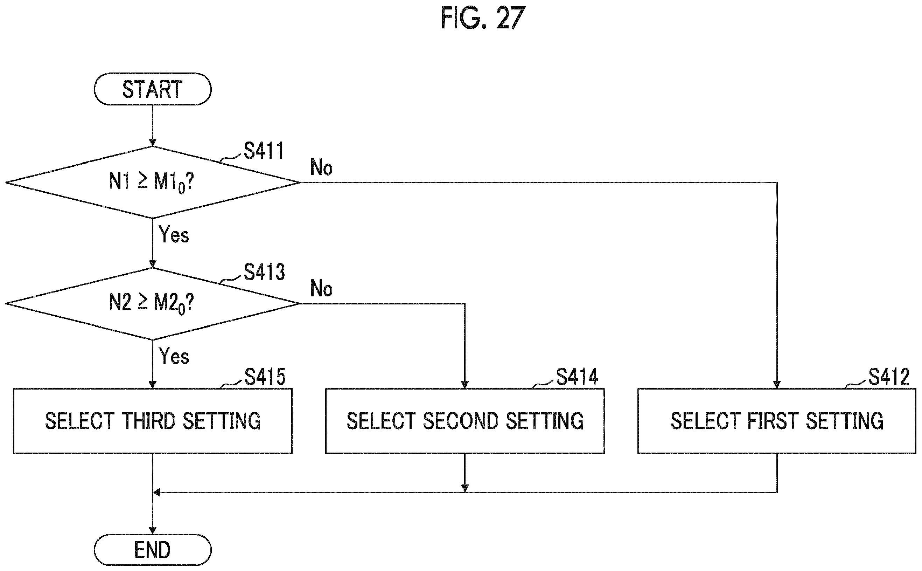

Fig. 27 is a flowchart showing the processing of the setting selection unit based on the detection result of the total production number detecting unit according to an embodiment. For example, processing after Step S411 shown in Fig. 27 starts when the injection molding system 1 starts up. When the injection molding system 1 starts, the primary molding product 20 and the secondary molding product 30 do not exist on the cooling table 600. The processing after Step S411 shown in Fig. 27 may be repeated until the total production number N3 of the tertiary molding products 40 reaches the target number N3₀.

First, the setting selection unit 732 checks whether or not the total production number N1 of the primary molding product 20 is equal to or more than a predetermined number (for example, M1₀ described later) (Step S411) . M1₀ is a target value of the number of stocks M1 of the primary molding products 20 in the cooling table 600. After the primary molding product 20 is cooled in the cooling table 600, primary molding product 20 is used as the insert material for the secondary molding product and is consumed.

In a case where the total production number N1 of the primary molding products 20 is less than M1₀ (No in Step S411), the number of stocks M1 of the insert material for the secondary molding product does not reached the target number M1₀ and it is impossible to manufacture the secondary molding product 30, and thus, the setting selection unit 732 selects the first setting (Step S412). As described above, the first setting is used in the control to fill only the first cavity space 831 with the molding material.

Meanwhile, in a case where the total production number N1 of the primary molding products 20 is equal to or more than M1₀ (Yes in Step S411), the number of stocks M1 of the insert material for the secondary molding product reaches the target number M1₀, and thus, it is possible to manufacture the secondary molding product 30. In this case, the setting selection unit 732 checks whether or not the total production number N2 of the secondary molding products 30 is equal to or more than a predetermined number (for example, M2₀ described later) (Step S413). For example, M2₀ is the target number M2₀ of the number of stocks M2 of the secondary molding products 30 in the cooling table 600. After the secondary molding product 30 is cooled by the cooling table 600, the secondary molding product 30 is used as the insert material for the tertiary molding product and is consumed.

In a case where the total production number N2 of the secondary molding products 30 is less than M2₀ (No in Step S413), the number of stocks M2 of the insert material for the tertiary molding product does not reached the target number M2₀ and it is impossible to manufacture the tertiary molding product 40, and thus, the setting selection unit 732 selects the second setting (Step S414). As described above, the second setting is used in the control to fill only the first cavity space 831 and the second cavity space 833 with the molding material.

Meanwhile, in a case where the total production number N2 of the secondary molding products 30 is equal to or more than M2₀ (Yes in Step S413), the number of stocks M2 of the insert material for the tertiary molding product reaches the target number M2₀, and thus, it is possible to manufacture the tertiary molding product 40. In this case, the setting selection unit 732 selects the third setting (Step S415) . As described above, the third setting is used in the control to fill the first cavity space 831, the second cavity space 833, and the third cavity space 835 with the molding material.

In this way, the setting selection unit 732 selects the settings used to control the mold unit 800 and the injection unit 300. The setting stored in the setting storage unit 731 in advance is read out and is used as the selected setting. The molding machine control unit 710 performs the shot once, based on the setting selected by the setting selection unit 732. Thereafter, the processing after Step S411 shown in Fig. 27 may be repeated until the total production number N3 of the tertiary molding products 40 reaches the target number N3₀.

Next, the processing of the setting selection unit 732 based on the monitoring results of the stock number monitoring unit 734 and the stock number monitoring unit 734 will be described.

The stock number monitoring unit 734 detects the number of stocks M1 of the primary molding products 20 which are the insert materials for the secondary molding product existing outside the mold unit 800. In order to detect the number of stocks M1 of the primary molding products 20, for example, a monitoring camera 602 for monitoring the cooling table 600 is used. The stock number monitoring unit 734 detects the number of stocks M1 of the primary molding products 20 placed in the primary molding product cooling portion 610 by subjecting an image captured by the monitoring camera 602 to image processing. For example, the number of stocks M1 of the primary molding product 20 is equal to a number obtained by subtracting the number of the consumed primary molding products 20 from the total production number N1 of the primary molding products 20.

In addition, the number of stocks M1 of the primary molding products 20 includes only the number of stocks of the cooled primary molding product 20 and may not include the number of stocks of the primary molding product 20 during cooling. Accordingly, the primary molding product 20 during cooling is not solidified to such an extent that it can be used as the insert material for the secondary molding product. For example, for determining whether the primary molding product 20 is being cooled or cooled, an elapsed time from a start of cooling by the primary molding product cooling portion 610 of the primary molding product 20, a temperature of the primary molding product 20, or the like is used. For example, the temperature of the primary molding product 20 is measured by an infrared thermography camera. The monitoring camera 602 may also serve as an infrared thermography camera.

Similarly, the stock number monitoring unit 734 detects the number of stocks M2 of the secondary molding products 30 which are the insert materials for the tertiary molding product existing outside the mold unit 800. In order to detect the number of stocks M2 of the secondary molding products 30, for example, a monitoring camera 602 for monitoring the cooling table 600 is used. The stock number monitoring unit 734 detects the number of stocks M2 of the secondary molding products 30 placed in the secondary molding product cooling portion 620 by subjecting an image captured by the monitoring camera 602 to image processing. For example, the number of stocks M2 of the secondary molding product 30 is equal to a number obtained by subtracting the number of the consumed secondary molding products 30 from the total production number N2 of the secondary molding products 30.

In addition, the number of stocks M2 of the secondary molding products 30 includes only the number of stocks of the cooled secondary molding product 30 and may not include the number of stocks of the secondary molding product 30 during cooling. Accordingly, the secondary molding product 30 during cooling is not solidified to such an extent that it can be used as the insert material for the tertiary molding product. For example, for determining whether the secondary molding product 30 is being cooled or cooled, an elapsed time from a start of cooling by the secondary molding product cooling portion 620 of the secondary molding product 30, a temperature of the secondary molding product 30, or the like is used. For example, the temperature of the secondary molding product 30 is measured by an infrared thermography camera. The monitoring camera 602 may also serve as an infrared thermography camera.

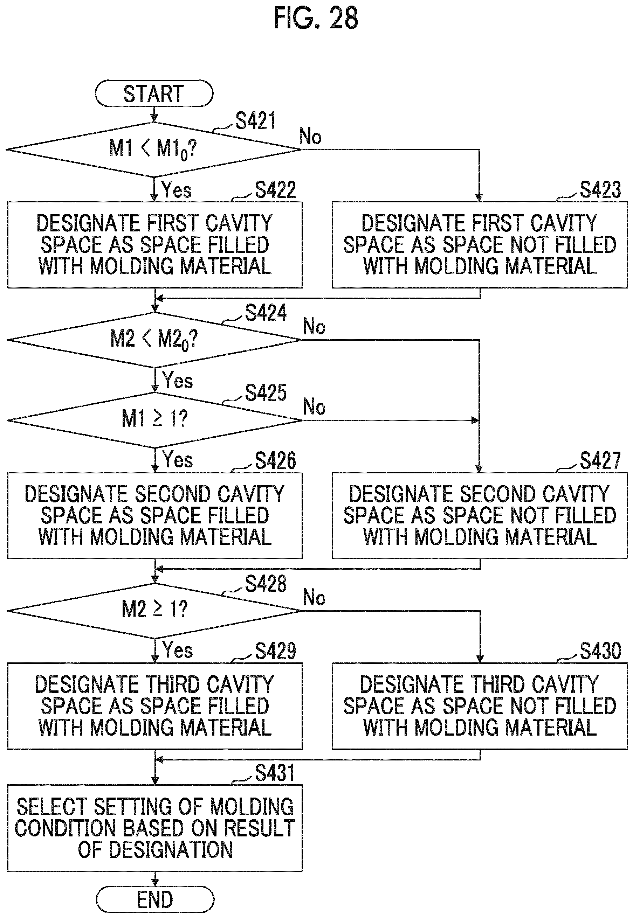

Fig. 28 is a flowchart showing the processing of the setting selection unit based on the monitoring result of the stock number monitoring unit according to an embodiment. For example, processing after the Step S421 shown in Fig. 28 starts when the injection molding system 1 starts. When the injection molding system 1 starts, the primary molding product 20 and the secondary molding product 30 do not exist on the cooling table 600. The processing after Step S421 shown in Fig. 28 may be repeated until the total production number N3 of the tertiary molding products 40 reaches the target number N3₀.

First, the setting selection unit 732 checks whether or not the number of stocks M1 of the insert materials for the secondary molding product is less than the target number M1₀ (Step S421). For example, the target number M1₀ is set based on the number of the second cavity spaces 833 into which the insert materials for the secondary molding product are inserted, and is set to be equal or more than the number of the second cavity spaces 833. In addition, for example, the target number M1₀ is set based on the number of the primary molding product cooling portions 610, and is set to be equal to or less than the number of the primary molding product cooling portions 610. In addition, the target number M1₀ may be set based on the difference (N1₀-N1) between the total production number N1 of the primary molding products 20 which are the insert materials for the secondary molding product and the target number N1₀, and may be set to be equal to or less than the difference (N1₀-N1), for example. It is possible to decrease the number of the remaining primary molding products 20 when the total production number N3 of the tertiary molding products 40 reaches the target number N3₀.

In a case where the number of stocks M1 of the insert materials for the secondary molding product is less than the target number M1₀ (Yes in Step S421), the number of stocks M1 of the insert materials for the secondary molding product is insufficient. In this case, the setting selection unit 732 designates the first cavity space 831 as the space filled with the molding material such that the primary molding product 20 to be the insert material for the secondary molding product is manufactured (Step S422).

Meanwhile, in a case where the number of stocks M1 of the insert materials for the secondary molding product is equal to or more than the target number M1₀ (No in Step S421), the number of stocks M1 of the insert materials for the secondary molding product is sufficient. In this case, the setting selection unit 732 designates the first cavity space 831 as the space not filled with the molding material such that the primary molding product 20 to be the insert material for the secondary molding product is not manufactured (Step S423).

Next, the setting selection unit 732 checks whether or not the number of stocks M2 of the insert materials for the tertiary molding product is less than the target number M2₀ (Step S424) . For example, the target number M2₀ is set based on the number of the third cavity spaces 835 into which the insert materials for the tertiary molding product are inserted, and is set to be equal to more than the number of the third cavity spaces 835. In addition, for example, the target number M2o is set based on the number of the secondary molding product cooling portions 620, and is set to be equal to or less than the number of the secondary molding product cooling portions 620. In addition, the target number M2₀ may be set based on the difference (N2₀-N2) between the total production number N2 of the secondary molding products 30 which are the insert materials for the tertiary molding product and the target number N2₀, and may be set to be equal to or less than the difference (N2₀-N2), for example. It is possible to decrease the number of the remaining secondary molding products 30 when the total production number N3 of the tertiary molding products 40 reaches the target number N3₀.

In a case where the number of stocks M2 of the insert materials for the tertiary molding product is less than the target number M2₀ (Yes in Step S424), the number of stocks M2 of the insert materials for the tertiary molding product is insufficient, and thus it is necessary to manufacture the secondary molding product 30 which becomes the insert material of the tertiary molding product. Meanwhile, in the manufacturing of the secondary molding product 30, the number of stocks M1 of the insert materials for the secondary molding product needs to be equal to or more than the number (for example, one) of the second cavity spaces 833.

In addition, in the case where the number of stocks M2 of the insert materials for the tertiary molding product is less than the target number M2₀ (Yes in Step S424), the setting selection unit 732 checks whether or not the number of stocks M1 of the insert materials for the secondary molding product is equal to or more than the number (for example, one) of the second cavity spaces 833 (Step S425) . In a case where M1 is one or more (Yes in Step S425), the secondary molding product 30 can be manufactured, and thus, the setting selection unit 732 designates the second cavity space 833 as the space filled with the molding material (Step S426). Meanwhile, in a case where M1 is less than 1 (No in Step S425), the secondary molding product 30 cannot be manufactured, and thus, the setting selection unit 732 designates the second cavity space 833 in the space not filled with molding material (Step S427).

Meanwhile, in a case where the number of stocks M2 of the insert materials for the tertiary molding product is equal to or more than the target number M2₀ (No in Step S424), the number of stocks M2 of the insert materials for the tertiary molding product is sufficient. In this case, the setting selection unit 732 designates the second cavity space 833 as the space not filled with the molding material such that the secondary molding product 30 to be the insert material for the tertiary molding product is not manufactured (Step S427).

Next, the setting selection unit 732 checks whether or not the number of stocks M2 of the insert materials for the tertiary molding product is equal to or more than the number (for example, one) of the third cavity spaces 835 (Step S428).

In a case where the number of stocks M2 of the insert materials for the tertiary molding product is equal to or more than the number (for example, one) of the third cavity spaces 835 (Yes in Step S428), the tertiary molding product 40 can be manufactured, and thus, the setting selection unit 732 designates the third cavity space 835 as the space filled with the molding material (Step S429).

Meanwhile, in a case where the number of stocks M2 of the insert materials for the tertiary molding product is less than the number (for example, one) of the third cavity spaces 835 (No in Step S428), the tertiary molding product 40 cannot be manufactured, and thus, the setting selection unit 732 designates the third cavity space 835 as the space not filled with the molding material (Step S430) .

Finally, the setting selection unit 732 selects the settings used to control the mold unit 800 and the injection unit 300, based on a result of the designation (Step S431) . The setting stored in the setting storage unit 731 in advance is read out and is used as the selected setting. The molding machine control unit 710 performs the shot once, based on the setting selected by the setting selection unit 732. Thereafter, the processing after Step S421 shown in Fig. 28 may be repeated until the total production number N3 of the tertiary molding products 40 reaches the target number N3₀.

In addition, the setting stored in the setting storage unit 731 in advance is not limited to the first setting, the second setting, and the third setting. For example, the following fourth setting and fifth setting may be stored in the setting storage unit 731 in advance.

The fourth setting is used in a control to fill only the second cavity space 833 and the third cavity space 835 among the first cavity space 831, the second cavity space 833, and the third cavity space 835 with the molding material. In the fourth setting, the first valve 841 is closed, and the second valve 843 and the third valve 845 are opened. The fourth setting is used to manufacture only the secondary molding product 30 and the tertiary molding product 40.

The fifth setting is used in a control to fill only the third cavity space 835 among the first cavity space 831, the second cavity space 833, and the third cavity space 835 with the molding material. In the fifth setting, the first valve 841 and the second valve 843 are closed, and only the third valve 845 is opened. The fifth setting is used to manufacture only the tertiary molding product 40.

In general, the first setting, the second setting, the third setting, the fourth setting, and the fifth setting are used in this order. When mass production of the tertiary molding product 40 starts, in general, the first setting, the second setting, and the third setting are used in this order. When the mass production of the tertiary molding product 40 ends, in general, the third setting, the fourth setting, and the fifth setting are used in this order. In addition, the following sixth setting and seventh setting may be stored in the setting storage unit 731 in advance.

The sixth setting is used in a control to fill only the second cavity space 833 among the first cavity space 831, the second cavity space 833, and the third cavity space 835 with the molding material. In the sixth setting, the first valve 841 and the third valve 845 are closed, and the second valve 843 is opened. The sixth setting is used to manufacture only the secondary molding product 30.

The seventh setting is used in a control to fill only the first cavity space 831 and the third cavity space 835 among the first cavity space 831, the second cavity space 833, and the third cavity space 835 with the molding material. In the seventh setting, the first valve 841 and the third valve 845 are opened, and only the second valve 843 is closed. The seventh setting is used to manufacture only the primary molding product 20 and the tertiary molding product 40.

Next, the processing of the delivery detection unit 735 and the processing of the setting selection unit 732 based on a monitoring result of the delivery detection unit 735 will be described.

The delivery detection unit 735 detects the delivery of the insert material (for example, the primary molding product 20) for the secondary molding product from the conveyance machine 500 to the mold unit 800. In order to detect the delivery of the insert material for the secondary molding product, for example, the air pressure detector 816 (refer to Fig. 10) which detects the air pressure of the suction path 814 of the stationary mold 810 is used. In a case where the delivery of the insert material for the secondary molding product is successful and the insert material for the secondary molding product is adsorbed to the stationary mold 810, no vacuum leak occurs, and thus, the air pressure of the suction path 814 falls below a threshold. Meanwhile, if the delivery of the insert material for the secondary molding product fails and the insert material for the secondary molding product deviates from the stationary mold 810, a vacuum leak occurs, and thus, the air pressure of the suction path 814 does not fall below the threshold. Therefore, the delivery detection unit 735 can detect the success or failure of the delivery depending on whether or not the air pressure of the suction path 814 is equal to or less than the threshold.

In addition, in order to detect the delivery of the insert material for the secondary molding product, in this embodiment, the air pressure detector 816 of the mold unit 800 is used. However, an air pressure detector of the conveyance machine 500 may be used, or both may be used. The air pressure detector of the conveyance machine 500 detects the air pressure of the suction path of the adsorption nozzle 533 (refer to Fig. 15) . In a case where the delivery of the insert material for the secondary molding product is successful and the conveyance machine 500 is separated from the insert material for the secondary molding product adsorbed to the stationary mold 810, the suction path of the adsorption nozzle 533 is open to the atmosphere, and thus, the air pressure of the suction path is returned to the atmospheric pressure. Meanwhile, in a case where the delivery of the insert material for the secondary molding product fails and the insert material for the secondary molding product adsorbed to the stationary mold 810 moves together with the conveyance machine 500 and deviates from the stationary mold 810, the suction path of the adsorption nozzle 533 is closed, and thus, the air pressure of the suction path is lower than the atmospheric pressure. The delivery detection unit 735 can detect the success or failure of the delivery depending on whether or not the air pressure of the suction path of the adsorption nozzle 533 is returned to the atmospheric pressure.

Similarly, the delivery detection unit 735 detects the delivery of the insert material (for example, the secondary molding product 30) for the tertiary molding product from the conveyance machine 500 to the mold unit 800. In order to detect the delivery of the insert material for the tertiary molding product, for example, the air pressure detector 819 (refer to Fig. 10) which detects the air pressure of the suction path 817 of the stationary mold 810 is used. In a case where the delivery of the insert material for the tertiary molding product is successful and the insert material for the tertiary molding product is adsorbed to the stationary mold 810, no vacuum leak occurs, and thus, the air pressure of the suction path 817 falls below a threshold. Meanwhile, if the delivery of the insert material for the tertiary molding product fails and the insert material for the tertiary molding product deviates from the stationary mold 810, a vacuum leak occurs, and thus, the air pressure of the suction path 817 does not fall below the threshold. Therefore, the delivery detection unit 735 can detect the success or failure of the delivery depending on whether or not the air pressure of the suction path 817 is equal to or less than the threshold.

In addition, in order to detect the delivery of the insert material for the tertiary molding product, in this embodiment, the air pressure detector 819 of the mold unit 800 is used. However, an air pressure detector of the conveyance machine 500 may be used, or both may be used. The air pressure detector of the conveyance machine 500 detects the air pressure of the suction path of the adsorption nozzle 536 (refer to Fig. 15) . In a case where the delivery of the insert material for the tertiary molding product is successful and the conveyance machine 500 is separated from the insert material for the tertiary molding product adsorbed to the stationary mold 810, the suction path of the adsorption nozzle 536 is open to the atmosphere, and thus, the air pressure of the suction path is returned to the atmospheric pressure. Meanwhile, in a case where the delivery of the insert material for the tertiary molding product fails and the insert material for the tertiary molding product adsorbed to the stationary mold 810 moves together with the conveyance machine 500 and deviates from the stationary mold 810, the suction path of the adsorption nozzle 536 is closed, and thus, the air pressure of the suction path is lower than the atmospheric pressure. The delivery detection unit 735 can detect the success or failure of the delivery depending on whether or not the air pressure of the suction path of the adsorption nozzle 536 is returned to the atmospheric pressure.

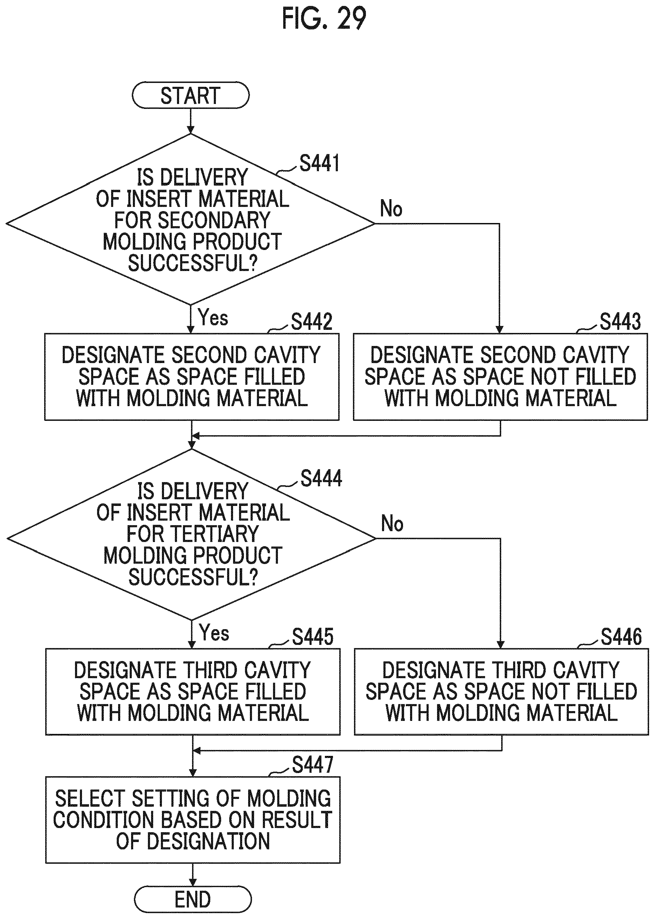

Fig. 29 is a flowchart showing processing of the setting selection unit based on the detection result of the delivery detection unit according to an embodiment. The setting storage unit 731 stores a plurality of settings to control the filling with the molding material according to an insert state. For example, the setting storage unit 731 stores a setting of a control, in the second cavity space 833 and the third cavity space 835 on which the insert molding is performed, of filling the cavity space having the insert material with the molding material, and of not filling the cavity space without the insert material with the molding material. The setting selection unit 732 selects a setting according to the insert state. For example, processing after the Step S441 shown in Fig. 29 starts when the injection molding system 1 starts. When the injection molding system 1 starts, the primary molding product 20 and the secondary molding product 30 do not exist on the cooling table 600. The processing after Step S441 shown in Fig. 29 may be repeated until the total production number N3 of the tertiary molding products 40 reaches the target number N3₀.

First, the setting selection unit 732 checks whether or not the delivery of the insert material for the secondary molding product from the conveyance machine 500 to the mold unit 800 is successful (Step S441).

In a case where the delivery of the insert material for the secondary molding product is successful (Yes in Step S441), the insert material for the secondary molding product is inserted into the second cavity space 833. Therefore, the setting selection unit 732 designates the second cavity space 833 as the space filled with the molding material (Step S442).

In a case where the delivery of the insert material for the secondary molding product fails (No in Step S441), the insert material for the secondary molding product is not inserted into the second cavity space 833. Therefore, the setting selection unit 732 designates the second cavity space 833 as the space not filled with the molding material (Step S443).

Next, the setting selection unit 732 checks whether or not the delivery of the insert material for the tertiary molding product from the conveyance machine 500 to the mold unit 800 is successful (Step S444).

In a case where the delivery of the insert material for the tertiary molding product is successful (Yes in Step S444), the insert material for the tertiary molding product is inserted into the third cavity space 835. Therefore, the setting selection unit 732 designates the third cavity space 835 as the space filled with the molding material (Step S445).

In a case where the delivery of the insert material for the tertiary molding product fails (No in Step S444), the insert material for the tertiary molding product is not inserted into the third cavity space 835. Therefore, the setting selection unit 732 designates the third cavity space 835 as the space not filled with the molding material (Step S446).

Finally, the setting selection unit 732 selects the settings used to control the mold unit 800 and the injection unit 300, based on a result of the designation (Step S447) . The setting stored in the setting storage unit 731 in advance is read out and is used as the selected setting. The molding machine control unit 710 performs the shot once, based on the setting selected by the setting selection unit 732. Thereafter, the processing after Step S441 shown in Fig. 28 may be repeated until the total production number N3 of the tertiary molding products 40 reaches the target number N3₀.

In addition, in the processing shown in Fig. 29, the setting selection unit 732 may designate the first cavity space 831 as a space always filled with the molding material, or may designate the space filled with the molding material or the space not filled with a molding material, based on the monitoring result of the stock number monitoring unit 734 as shown in Fig. 28.

As described above, according to the present embodiment, the mold unit 800 includes the first cavity space 831 in which the primary molding product 20 is molded and the second cavity space 833 in which the secondary molding product 30 is molded. The setting storage unit 731 stores (1) a setting of a control to fill only the first cavity space 831 with the molding material and (2) a setting of a control to fill the first cavity space 831 and the second cavity space 833 with the molding material. Accordingly, when mass production of the secondary molding product 30 starts, the first cavity space 831 can be filled with the molding material and the filling of the second cavity space 833 with the molding material can be prohibited. Accordingly, when the mass production of the secondary molding product 30 starts, since the primary molding product 20 which is the insert material for the secondary molding product inserted into the second cavity space 833 does not exist, the secondary molding product 30 cannot be molded. According to the present embodiment, when the mass production of the secondary molding product 30 starts, first, the primary molding product 20 is produced. After the primary molding product 20 is cooled, the primary molding product 20 is disposed in a portion of the second cavity space 833 as the insert material for the secondary molding product. Another portion of the second cavity space 833 is filled with the molding material, and thus, the secondary molding product 30 is produced. Therefore, it is possible to produce a secondary molding product 30 with fewer sink marks and improve quality of the secondary molding product 30. In addition, the waste of molding material can decrease.

According to the present embodiment, the setting storage unit 731 stores (3) a setting used in a control to fill only the second cavity space 833 with the molding material in addition to the setting of (1) and the setting of (2). Accordingly, when the mass production of the secondary molding product 30 ends, the second cavity space 833 can be filled with the molding material and the filling of the first cavity space 831 with the molding material can be prohibited. That is, when the mass production of the secondary molding product 30 ends, the secondary molding product 30 can be produced and the production of the primary molding product 20 can be prohibited. Accordingly, when the mass production of the secondary molding product 30 ends, it is possible to prevent the primary molding product 20 from remaining. The setting storage unit 731 may not store all of the setting of (1), the setting of (2), and the setting of (3). For example, if the setting of (2) and the setting of (3) are stored in the setting storage unit 731, when the mass production of the secondary molding product 30 ends, it is possible to produce the secondary molding product 30 and prohibit the production of the primary molding product 20. Accordingly, when the mass production of the secondary molding product 30 ends, it is possible to prevent the primary molding product 20 from remaining.

According to the present embodiment, the primary molding product cooling portion 610 of the cooling table 600 cools the primary molding product 20 extracted from the mold unit 800. In addition, in order to insert the primary molding product 20 cooled by the primary molding product cooling portion 610 into the second cavity space 833, the conveyance machine 500 conveys the primary molding product 20 from the primary molding product cooling portion 610 to the mold unit 800. The primary molding product 20 may be solidified to such an extent that the primary molding product 20 can be extracted from the mold unit 800 when the mold is opened. The remaining solidification of the primary molding product 20 is performed outside the mold unit 800, and thus, it is possible to shorten the time of the cooling process in which the primary molding product 20 is cooled inside the mold unit 800, and it is possible to shorten the molding cycle. In addition, by simultaneously performing the processing of molding the primary molding product 20 inside the mold unit 800 and the processing of cooling the preformed primary molding product 20 outside the mold unit 800, it is possible to improve a production speed of the finished product.

According to the present embodiment, the stock number monitoring unit 734 monitors the number of stocks M1 of the primary molding products 20 which can be conveyed from the primary molding product cooling portion 610 to the mold unit 800 so as to be inserted into the second cavity space 833. In addition, the setting selection unit 732 selects the settings used to control the mold unit 800 and the injection unit 300, based on the number of stocks M1 of the primary molding products 20. For example, when the mass production of the secondary molding product 30 starts, the second cavity space 833 can be designated as either the space filled with the molding material or the space not filled with the molding material, based on the number of stocks M1 of the primary molding product 20 (Steps S425 to S427 of Fig. 28). When the mass production of the secondary molding product 30 starts, the first cavity space 831 can be filled with the molding material and the filling of the second cavity space 833 with the molding material can be prohibited. In addition, when the mass production of the secondary molding product 30 ends, the first cavity space 831 can be designated as either the space filled with the molding material or the space not filled with the molding material, based on the number of stocks M1 of the insert material for the secondary molding product (Steps S421 to S423 of Fig. 28). When the mass production of the secondary molding product 30 ends, the second cavity space 833 can be filled with the molding material and the filling of the first cavity space 831 with the molding material can be prohibited.

According to the present embodiment, the delivery detection unit 735 detects the delivery of the primary molding product 20 cooled by the primary molding product cooling portion 610 from the conveyance machine 500 to the mold unit 800. Based on the success or failure of the delivery, the setting selection unit 732 selects the setting used to control the mold unit 800 and the injection unit 300. In a case where the delivery of the primary molding product 20 fails, the primary molding product 20 is not inserted into the second cavity space 833, and thus, the setting selection unit 732 designates the second cavity space 833 as the space not filled with molding material (Step S443 in Fig. 29). Accordingly, it is possible to prohibit filling of the entire second cavity space 833 with the molding material in a state where the primary molding product 20 is not disposed in the second cavity space 833, and it is possible to prevent a use of the waste molding material.

According to the present embodiment, the total production number detecting unit 733 detects the total production number N1 of the primary molding product 20 from a preset time. The setting selection unit 732 selects the settings used to control the mold unit 800 and the injection unit 300, based on the total production number N1 of the primary molding product 20. When the mass production of the secondary molding product 30 starts, the total production number N1 of the primary molding product 20 can be used so as to manage the number of stocks M1 of the primary molding product 20, the first cavity space 831 can be filled with the molding material, and the filling of the second cavity space 833 with the molding material can be prohibited (Steps S411 and S412 in Fig. 27). In addition, when the mass production of the secondary molding product 30 ends, the difference (N1₀-N1) between the total production number N1 of the primary molding product 20 and the target number N1₀ can be used so as to manage the target number M1₀, the second cavity space 833 can be filled with the molding material, and the filling of the first cavity space 831 with the molding material can be prohibited (Steps S421 and S423 in Fig. 28).

According to the present embodiment, the mold unit 800 includes the first cavity space 831 in which the primary molding product 20 is molded, the second cavity space 833 in which the secondary molding product 30 is molded, and the third cavity space 835 in which the tertiary molding product 40 is molded. The setting storage unit 731 stores (A) a setting used in a control to fill only the first cavity space 831 with the molding material, (B) a setting used in a control to fill only the first cavity space 831 and the second cavity space 833 with the molding material, and (C) a setting used in a control to fill the first cavity space 831, the second cavity space 833, and the third cavity space 835 with the molding material. When the mass production of the tertiary molding product starts, the setting of (A), the setting of (B), and the setting of (C) are used in this order.

First, the setting of (A) is used. Accordingly, the first cavity space 831 can be filled with the molding material, and the filling of the second cavity space 833 and the third cavity space 835 with the molding material can be prohibited. When the mass production of the tertiary molding product 40 starts, the primary molding product 20 which is the insert material for the secondary molding product inserted into the second cavity space 833 does not exist, and thus, the secondary molding product 30 cannot be molded. Similarly, the mass production of the tertiary molding product 40 starts, the secondary molding product 30 which is the insert material for the tertiary molding product inserted into the third cavity space 835 does not exist, and thus, the tertiary molding product 40 cannot be molded.

According to the present embodiment, when the mass production of the tertiary molding product 40 starts, the first cavity space 831 can be filled with the molding material, and the filling of the second cavity space 833 and the third cavity space 835 with the molding material can be prohibited. Accordingly, first, the primary molding product 20 is produced. After the primary molding product 20 is cooled, the primary molding product 20 is disposed in a portion of the second cavity space 833 as the insert material for the secondary molding product. Another portion of the second cavity space 833 is filled with the molding material, and thus, the secondary molding product 30 is produced. Therefore, it is possible to produce a secondary molding product 30 with fewer sink marks and improve quality of the secondary molding product 30. In addition, the waste of molding material can decrease. Moreover, in this step, the setting of (B) is used. Accordingly, in this step, the secondary molding product 30 which is the insert material for the tertiary molding product inserted into the third cavity space 835 does not exist.

The secondary molding product 30 is produced using the setting of (B). After the secondary molding product 30 is cooled, the secondary molding product 30 is disposed in a portion of the third cavity space 835 as the insert material for the tertiary molding product. Another portion of the third cavity space 835 is filled with the molding material, and the tertiary molding product 40 is produced. Therefore, it is possible to produce the tertiary molding product 40 with fewer sink marks and improve the quality of the tertiary molding product 40. In addition, the waste of molding material can decrease. Moreover, in this step, the setting of (C) is used.

According to the present embodiment, the secondary molding product cooling portion 620 of the cooling table 600 cools the secondary molding product 30 extracted from the mold unit 800. In addition, in order to insert the secondary molding product 30 cooled by the secondary molding product cooling portion 620 into the third cavity space 835, the conveyance machine 500 conveys the secondary molding product 30 from the secondary molding product cooling portion 620 to the mold unit 800. In addition, by simultaneously performing the processing of molding the secondary molding product 30 inside the mold unit 800 and the processing of cooling the preformed secondary molding product 30 outside the mold unit 800, it is possible to improve the production speed of the finished product.

According to the present embodiment, the stock number monitoring unit 734 monitors the number of stocks M2 of the secondary molding products 30 which can be conveyed from the secondary molding product cooling portion 620 to the mold unit 800 so as to be inserted into the third cavity space 835. In addition, the setting selection unit 732 selects the settings used to control the mold unit 800 and the injection unit 300, based on the number of stocks M2 of the secondary molding products 30. For example, when the mass production of the tertiary molding product 40 starts, the third cavity space 835 can be designated as either the space filled with the molding material or the space not filled with the molding material, based on the number of stocks M2 of the secondary molding product 30 (Steps S428 to S430 of Fig. 28). When the mass production of the tertiary molding product 40 starts, the first cavity space 831 can be filled with the molding material and the filling of the third cavity space 835 with the molding material can be prohibited. In addition, when the mass production of the tertiary molding product 40 ends, the second cavity space 833 can be designated as either the space filled with the molding material or the space not filled with the molding material, based on the number of stocks M2 of the secondary molding product 30 (Steps S424 and S427 of Fig. 28). When the mass production of the tertiary molding product 40 ends, the third cavity space 835 can be filled with the molding material and the filling of the second cavity space 833 with the molding material can be prohibited.

According to the present embodiment, the delivery detection unit 735 detects the delivery of the secondary molding product 30 cooled by the secondary molding product cooling portion 620 from the conveyance machine 500 to the mold unit 800. Based on the success or failure of the delivery, the setting selection unit 732 selects the setting used to control the mold unit 800 and the injection unit 300. In a case where the delivery of the secondary molding product 30 fails, the secondary molding product 30 is not inserted into the third cavity space 835, and thus, the setting selection unit 732 designates the third cavity space 835 as the space not filled with molding material (Step S446 in Fig. 29). Accordingly, it is possible to prohibit filling of the entire third cavity space 835 with the molding material in a state where the secondary molding product 30 is not disposed in the third cavity space 835, and it is possible to prevent a use of the waste molding material.

According to the present embodiment, the total production number detecting unit 733 detects the total production number N2 of the secondary molding product 30 from a preset time. The setting selection unit 732 selects the settings used to control the mold unit 800 and the injection unit 300, based on the total production number N2 of the secondary molding product 30. When the mass production of the tertiary molding product 40 starts, the total production number N2 of the secondary molding product 30 can be used so as to manage the number of stocks M2 of the secondary molding product 30, the first cavity space 831 and the second cavity space 833 can be filled with the molding material, and the filling of the third cavity space 835 with the molding material can be prohibited (Steps S413 and S414 in Fig. 27). In addition, when the mass production of the tertiary molding product 40 ends, the difference (N2₀-N2) between the total production number N2 of the secondary molding product 30 and the target number N2₀ can be used so as to manage the target number M2₀, the third cavity space 835 can be filled with the molding material, and the filling of the second cavity space 833 with the molding material can be prohibited (Steps S424 and S427 in Fig. 28).

According to the present embodiment, the mold unit 800 includes the injection port 812 through which the molding material is injected by the injection unit 300 and the second valve 843 which opens or closes the second cavity space 833 with respect to the injection port 812. The second valve 843 opens or closes the second cavity space 833 with respect to the injection port 812 under the control of the controller 700. Therefore, it is possible to automatically switch a flow direction of the molding material inside the mold unit 800. In addition, the opening and closing of the second cavity space 833 with respect to the injection port 812 may be performed manually.

According to the present embodiment, the mold unit 800 includes the injection port 812 through which the molding material is injected by the injection unit 300 and the first valve 841 which opens or closes the first cavity space 831 with respect to the injection port 812. The first valve 841 opens or closes the first cavity space 831 with respect to the injection port 812 under the control of the controller 700. Therefore, it is possible to automatically switch a flow direction of the molding material inside the mold unit 800. In addition, the opening and closing of the first cavity space 831 with respect to the injection port 812 may be performed manually.

According to the present embodiment, the mold unit 800 includes the injection port 812 through which the molding material is injected by the injection unit 300 and the third valve 845 which opens or closes the third cavity space 835 with respect to the injection port 812. The third valve 845 opens or closes the third cavity space 835 with respect to the injection port 812 under the control of the controller 700. Therefore, it is possible to automatically switch a flow direction of the molding material inside the mold unit 800. In addition, the opening and closing of the third cavity space 835 with respect to the injection port 812 may be performed manually.

In addition, in the present embodiment, the first molding product molded in the first cavity space 831 is the primary molding product 20 and the second molding product molded in the second cavity space 833 is the secondary molding product 30. However, the present invention is not limited to this. For example, the first molding product which is molded in the first cavity space 831 may be the secondary molding product 30, and the second molding product which is molded in the second cavity space 833 may be the tertiary molding product 40.

### (Injection Molding Method)

Figs. 30 and 31 are flowcharts showing processes from the molding of the primary molding product to the discharging of the tertiary molding product according the embodiment. Fig. 30 is a flowchart showing the process from the molding of the primary molding product to immediately before gate cutting of the secondary molding product, and Fig. 31 is a flowchart showing the process from the gate cutting of the secondary molding product to the discharging of the tertiary molding product.

First, the injection molding machine 10 molds the primary molding product 20 inside the mold unit 800 in the mold clamping state (Step S501). Thereafter, the injection molding machine 10 performs the depressurization and the mold opening of the mold unit 800. In this case, the primary molding product 20 is in close contact with the movable mold 820 and moves together with the movable mold 820.

Next, the conveyance machine 500 enters the portion between the movable mold 820 and the stationary mold 810 in a mold open state and receives the primary molding product 20 from the movable mold 820. Accordingly, the conveyance machine 500 extracts the primary molding product 20 from the movable mold 820 (Step S502) . The primary molding product 20 is adsorbed to the first molding product holding unit 521 of the conveyance machine 500 (refer to Fig. 16A). Specifically, in the primary molding product 20, the flange portion 24 is adsorbed to the plurality of adsorption nozzles 523 such that the lens portion 21 is disposed outside the cylindrical portion 522.

Next, the conveyance machine 500 conveys the primary molding product 20 from the injection molding machine 10 to the gate cutting machine 550 (Step S503). Thereafter, the conveyance machine 500 releases the adsorption of the primary molding product 20 adsorbed by the first molding product holding unit 521, and as shown in Fig. 17A, places the primary molding product 20 on the first support unit 560 of the gate cutting machine 550. Specifically, the flange portion 24 of the primary molding product 20 is placed on the plurality of support claws 562 such that the convex curved surface 23 of the lens portion 21 of the primary molding product 20 faces downward (refer to the two-dot chain lines of Fig. 18A).

Next, the gate cutting machine 550 cuts a boundary between the primary molding product 20 and the disused product 60, and as shown in Fig. 17B, separates the primary molding product 20 from the disused product 60 (Step S504) . Meanwhile, the primary molding product 20 is supported by the first support unit 560 of the gate cutting machine 550.

Next, the inverting machine 590 lifts the primary molding product 20, which is separated from the disused product 60, from the first support unit 560 as indicated by the solid lines in Fig. 18A, and the inverting machine 590 inverts the primary molding product 20 in the up-down direction as indicated by the solid lines in Fig. 18B (Step S504) . Thereafter, the inverting machine 590 places the primary molding product 20 on the first support unit 560 again as indicated by the two-dot chain lines in Fig. 18B. The primary molding product 20 is placed on the first support unit 560 such that the convex curved surface 23 of the lens portion 21 faces upward.

Therefore, the primary molding product 20 is inverted in the up-down direction, and thus, in the following Step S507, as shown in Fig. 21A, the primary molding product 20 is placed on the cooling table 600 such that the convex curved surface 23 of the lens portion 21 faces upward. In addition, the primary molding product 20 is inverted in the up-down direction, and thus, in the following Step S511, when the cooled primary molding product 20 (the insert material for the secondary molding product) is adsorbed to the stationary mold 810, as shown in Fig. 16B, the convex curved surface 23 of the lens portion 21 faces the movable mold 820.

Next, the conveyance machine 500 receives the primary molding product 20 from the gate cutting machine 550 and conveys the primary molding product 20 from the gate cutting machine 550 to the cooling table 600 (Step S506) . Meanwhile, the primary molding product 20 is adsorbed to the first molding product holding unit 521 of the conveyance machine 500. Specifically, in the primary molding product 20, the flange portion 24 is adsorbed to the plurality of adsorption nozzles 523 such that the lens portion 21 is inserted into the cylindrical portion 522. Thereafter, the conveyance machine 500 releases the adsorption of the primary molding product 20 adsorbed by the first molding product holding unit 521 and places the primary molding product 20 on the cooling table 600.

Next, the cooling table 600 cools the primary molding product 20 (Step S507) . The primary molding product 20 is placed on the cooling table 600 for a preset time or more. In this case, as shown in Fig. 21A, the primary molding product 20 is placed on the primary molding product cooling portion 610 such that the convex curved surface 23 of the lens portion 21 faces upward. The entire primary molding product 20 is solidified on the cooling table 600, and thus, the primary molding product 20 can be used as the insert material for the secondary molding product.

Next, the conveyance machine 500 receives the primary molding product 20 from the cooling table 600 and conveys the primary molding product 20 from the cooling table 600 to the alignment machine 630 (Step S508). Meanwhile, the primary molding product 20 is adsorbed to the first insert material holding unit 531 of the conveyance machine 500. Specifically, in the primary molding product 20, the flange portion 24 is adsorbed to the plurality of adsorption nozzles 533 such that the lens portion 21 is inserted into the cylindrical portion 532. Thereafter, the conveyance machine 500 releases the adsorption of the primary molding product 20 adsorbed by the first insert material holding unit 531 and places the primary molding product 20 on the alignment machine 630 (refer to Fig. 22) .

The primary molding product 20 is placed on the first chuck 640 such that the convex curved surface 23 of the lens portion 21 faces upward. Accordingly, in the following Step S511, when the primary molding product 20 is adsorbed to the stationary mold 810, as shown in Fig. 16B, the convex curved surface 23 of the lens portion 21 faces the movable mold 820.

Next, the alignment machine 630 performs the alignment of the primary molding product 20 (Step S509). The alignment includes centering and a rotation around a core. In the centering, when viewed in the vertical direction, the center of the primary molding product 20 coincides with the center of the chuck body 641. In addition, in the rotation around the core, when viewed in the vertical direction, each of the first notch 27, the second notch 28, and the third notch 29 formed in the flange portion 24 is directed in the predetermined angle. By performing the alignment of the primary molding product 20 inserted into the mold unit 800, the primary molding product 20 can be adsorbed at a preset position of the stationary mold 810 in a preset direction.

Next, the conveyance machine 500 receives the primary molding product 20 from the alignment machine 630 and conveys the primary molding product 20 from the alignment machine 630 to the injection molding machine 10 (Step S510) . Meanwhile, the primary molding product 20 is adsorbed to the first insert material holding unit 531 of the conveyance machine 500. Specifically, in the primary molding product 20, the flange portion 24 is adsorbed to the plurality of adsorption nozzles 533 such that the lens portion 21 is inserted into the cylindrical portion 532. Thereafter, the conveyance machine 500 causes the primary molding product 20 to abut against the stationary mold 810 in the mold open state. In this case, the first insert material holding unit 531 is disposed to face the stationary mold 810 (refer to Fig. 16A).

Next, in the injection molding machine 10, the primary molding product 20 is adsorbed to the stationary mold 810 in the mold open state (Step S511). Thereafter, the conveyance machine 500 releases the adsorption of the primary molding product 20 adsorbed by the first insert material holding unit 531 and conveys the primary molding product 20 the stationary mold 810. In the primary molding product 20, the convex curved surface 23 of the lens portion 21 faces the movable mold 820 and is adsorbed to the stationary mold 810. Accordingly, when the mold is clamped, as shown in Fig. 10, the space 31S for molding the secondary lamination portion 31 is formed between the convex curved surface 23 of the lens portion 21 and the movable mold 820. Thereafter, the first insert material holding unit 531 and the heating unit 540 are rotated by 90° together with the rotary shaft portion 511, and thus, the heating unit 540 is disposed to face the stationary mold 810 (refer to Fig. 16B).

Next, the heating unit 540 heats the surface (for example, the convex curved surface 23 of the lens portion 21) of the primary molding product 20 on which the secondary lamination portion 31 is laminated (Step S512). The convex curved surface 23 of the lens portion 21 is melted and a surface tension is generated, and thus, it is possible to remove the wrinkles which are occurred when the primary molding product 20 is cooled. Thereafter, the conveyance machine 500 is retracted from between the stationary mold 810 and the movable mold 820 in the mold open state, and the injection molding machine 10 performs the mold opening, the pressurization, and the mold clamping of the mold unit 800.

Next, the injection molding machine 10 molds the secondary molding product 30 inside the mold unit 800 in the mold clamping state (Step S513). The secondary molding product 30 includes the secondary lamination portion 31 which is laminated on the primary molding product 20, in addition to the primary molding product 20. The secondary lamination portion 31 is formed to cover the entire convex curved surface 23 of the lens portion 21. Thereafter, the injection molding machine 10 performs the depressurization and the mold opening of the mold unit 800. In this case, the secondary molding product 30 is in close contact with the movable mold 820 and moves together with the movable mold 820.

Next, the conveyance machine 500 enters the portion between the movable mold 820 and the stationary mold 810 in the mold open state and receives the secondary molding product 30 from the movable mold 820. Accordingly, the conveyance machine 500 extracts the secondary molding product 30 from the movable mold 820 (Step S514). The secondary molding product 30 is adsorbed to the second molding product holding unit 524 of the conveyance machine 500 (refer to Fig. 16A). Specifically, in the secondary molding product 30, the flange portion 24 is adsorbed to the plurality of adsorption nozzles 526 such that the lens portion 21 is disposed outside the cylindrical portion 525.

Next, the conveyance machine 500 conveys the secondary molding product 30 from the injection molding machine 10 to the gate cutting machine 550 (Step S515). Thereafter, the conveyance machine 500 releases the adsorption of the secondary molding product 30 adsorbed by the second molding product holding unit 524, and as shown in Fig. 17A, places the secondary molding product 30 on the second support unit 570 of the gate cutting machine 550. Specifically, the flange portion 24 of the secondary molding product 30 is placed on the plurality of support claws 572 such that the convex curved surface 23 of the lens portion 21 of the secondary molding product 30 faces downward.

Next, the gate cutting machine 550 cuts a boundary between the secondary molding product 30 and the disused product 60, and as shown in Fig. 17B, separates the secondary molding product 30 from the disused product 60 (Step S516). Meanwhile, the secondary molding product 30 is supported by the second support unit 570 of the gate cutting machine 550.

Unlike the primary molding product 20, the secondary molding product 30 is not inverted in the up-down direction in the gate cutting machine 550 and is placed on the second support unit 570 such that the flat surface 22 of the lens portion 21 faces upward. Accordingly, in the following Step S518, as shown in Fig. 21B, the secondary molding product 30 is placed on the cooling table 600 such that the flat surface 22 of the lens portion 21 faces upward. In addition, in the following Step S522, when the cooled secondary molding product 30 (the insert material for the tertiary molding product) is adsorbed to the stationary mold 810, as shown in Fig. 16B, the flat surface 22 of the lens portion 21 faces the movable mold 820.

Next, the conveyance machine 500 receives the secondary molding product 30 from the gate cutting machine 550 and conveys the secondary molding product 30 from the gate cutting machine 550 to the cooling table 600 (Step S517). Meanwhile, the secondary molding product 30 is adsorbed to the second molding product holding unit 524 of the conveyance machine 500. Specifically, in the secondary molding product 30, the flange portion 24 is adsorbed to the plurality of adsorption nozzles 526 such that the lens portion 21 is disposed outside the cylindrical portion 525. Thereafter, the conveyance machine 500 releases the adsorption of the secondary molding product 30 adsorbed by the second molding product holding unit 524 and places the secondary molding product 30 on the cooling table 600.

Next, the cooling table 600 cools the secondary molding product 30 (Step S518). The secondary molding product 30 is placed on the cooling table 600 for a preset time or more. In this case, as shown in Fig. 21B, the secondary molding product 30 is placed on the secondary molding product cooling portion 620 such that the flat surface 22 of the lens portion 21 faces upward. The entire secondary molding product 30 is solidified on the cooling table 600, and thus, the secondary molding product 30 can be used as the insert material for the tertiary molding product.

Next, the conveyance machine 500 receives the secondary molding product 30 from the cooling table 600 and conveys the secondary molding product 30 from the cooling table 600 to the alignment machine 630 (Step S519). Meanwhile, the secondary molding product 30 is adsorbed to the second insert material holding unit 534 of the conveyance machine 500. Specifically, in the secondary molding product 30, the flange portion 24 is adsorbed to the plurality of adsorption nozzles 536 such that the lens portion 21 is disposed outside the cylindrical portion 535. Thereafter, the conveyance machine 500 releases the adsorption of the secondary molding product 30 adsorbed by the second insert material holding unit 534 and places the secondary molding product 30 on the alignment machine 630 (refer to Fig. 22) .

The secondary molding product 30 is placed on the second chuck 650 such that the flat surface 22 of the lens portion 21 faces upward. Accordingly, in the following Step S522, when the secondary molding product 30 is adsorbed to the stationary mold 810, as shown in Fig. 16B, the flat surface 22 of the lens portion 21 faces the movable mold 820.

Next, the alignment machine 630 performs the alignment of the secondary molding product 30 (Step S520). The alignment includes centering and a rotation around a core. In the centering, when viewed in the vertical direction, the center of the secondary molding product 30 coincides with the center of the chuck body 651. In addition, in the rotation around the core, when viewed in the vertical direction, each of the first notch 27, the second notch 28, and the third notch 29 formed in the flange portion 24 is directed in the predetermined angle. By performing the alignment of the secondary molding product 30 inserted into the mold unit 800, the secondary molding product 30 can be adsorbed at a preset position of the stationary mold 810 in a preset direction.

Next, the conveyance machine 500 receives the secondary molding product 30 from the alignment machine 630 and conveys the secondary molding product 30 from the alignment machine 630 to the injection molding machine (Step S521). Meanwhile, the secondary molding product 30 is adsorbed to the second insert material holding unit 534 of the conveyance machine 500. Specifically, in the secondary molding product 30, the flange portion 24 is adsorbed to the plurality of adsorption nozzles 536 such that the lens portion 21 is disposed outside the cylindrical portion 535. Thereafter, the conveyance machine 500 causes the secondary molding product 30 to abut against the stationary mold 810 in the mold open state. In this case, the second insert material holding unit 534 is disposed to face the stationary mold 810 (refer to Fig. 16A).

Next, in the injection molding machine 10, the secondary molding product 30 is adsorbed to the stationary mold 810 in the mold open state (Step S522). Thereafter, the conveyance machine 500 releases the adsorption of the secondary molding product 30 adsorbed by the second insert material holding unit 534 and conveys the secondary molding product 30 the stationary mold 810. In the secondary molding product 30, the flat surface 22 of the lens portion 21 faces the movable mold 820 and is adsorbed to the stationary mold 810. Accordingly, as shown in Fig. 10, the space 41S forming the tertiary lamination portion 41 is formed between the flat surface 22 of the lens portion 21 and the movable mold 820. Thereafter, the second insert material holding unit 534 and the heating unit 540 are rotated by 90° together with the rotary shaft portion 511, and thus, the heating unit 540 is disposed to face the stationary mold 810 (refer to Fig. 16B).

Next, the heating unit 540 heats the surface (for example, the flat surface 22 of the lens portion 21) of the secondary molding product 30 on which the tertiary lamination portion 41 is laminated (Step S523) . The flat surface 22 of the lens portion 21 is melted and a surface tension is generated, and thus, it is possible to remove the wrinkles which are occurred when the primary molding product 20 is cooled. Thereafter, the conveyance machine 500 is retracted from between the stationary mold 810 and the movable mold 820 in the mold open state, and the injection molding machine 10 performs the mold opening, the pressurization, and the mold clamping of the mold unit 800.

Next, the injection molding machine 10 molds the tertiary molding product 40 inside the mold unit 800 in the mold clamping state (Step S524) . The tertiary molding product 40 includes the tertiary lamination portion 41 or the like which is laminated on the secondary molding product 30, in addition to the secondary molding product 30. The tertiary lamination portion 41 is formed to cover the flat surface 22 of the lens portion 21 and the first plate surface 25 of the flange portion 24 of the secondary molding product 30. Thereafter, the injection molding machine 10 performs the depressurization and the mold opening of the mold unit 800. In this case, the tertiary molding product 40 is in close contact with the movable mold 820 and moves together with the movable mold 820.

Next, the conveyance machine 500 enters the portion between the movable mold 820 and the stationary mold 810 in the mold open state and receives the tertiary molding product 40 from the movable mold 820. Accordingly, the conveyance machine 500 extracts the tertiary molding product 40 from the movable mold 820 (Step S525). The tertiary molding product 40 is adsorbed to the third molding product holding unit 527 of the conveyance machine 500 (refer to Fig. 16A). Specifically, in the tertiary molding product 40, the flange portion 24 is adsorbed to the plurality of adsorption nozzles 529 such that the lens portion 21 is inserted into the cylindrical portion 528.

Next, the conveyance machine 500 conveys the tertiary molding product 40 from the injection molding machine 10 to the gate cutting machine 550 (Step S526). Thereafter, the conveyance machine 500 releases the adsorption of the tertiary molding product 40 adsorbed by the third molding product holding unit 527, and as shown in Fig. 17A, places the tertiary molding product 40 on the third support unit 580 of the gate cutting machine 550. Specifically, the flange portion 24 of the tertiary molding product 40 is placed on the plurality of support claws 582 such that the convex curved surface 23 of the lens portion 21 of the tertiary molding product 40 faces upward.

Next, the gate cutting machine 550 cuts a boundary between the tertiary molding product 40 and the disused product 60, and as shown in Fig. 17B, separates the tertiary molding product 40 from the disused product 60 (Step S527). Meanwhile, the tertiary molding product 40 is supported by the third support unit 580 of the gate cutting machine 550.

Unlike the primary molding product 20, the tertiary molding product 40 is not inverted in the up-down direction in the gate cutting machine 550 and is placed on the third support unit 580 such that the flat surface 22 of the lens portion 21 faces downward. Accordingly, in Step S528, the tertiary molding product 40 is placed on the upper surface of the finished product conveyance machine 660 such that the flat surface 22 of the lens portion 21 faces downward.

Next, the conveyance machine 500 receives the tertiary molding product 40 from the gate cutting machine 550 and conveys the tertiary molding product 40 from the gate cutting machine 550 to the finished product conveyance machine 660 (Step S528) . Meanwhile, the tertiary molding product 40 is adsorbed to the third molding product holding unit 527 of the conveyance machine 500. Specifically, in the tertiary molding product 40, the flange portion 24 is adsorbed to the plurality of adsorption nozzles 529 such that the lens portion 21 is inserted into the cylindrical portion 528. Thereafter, the conveyance machine 500 releases the adsorption of the tertiary molding product 40 adsorbed by the third molding product holding unit 527 and places the tertiary molding product 40 on the finished product conveyance machine 660.

Next, the finished product conveyance machine 660 discharges the tertiary molding product 40 to the outside of the injection molding system 1 (Step S529). In this way, the tertiary molding product 40 is manufactured.

Hereinbefore, the embodiments or the like of the injection molding method, the injection molding system, the mold unit, or the like are described. However, the present invention is not limited to the embodiments or the like, and various modifications and improvements are possible within the scope of the present invention described in claims.

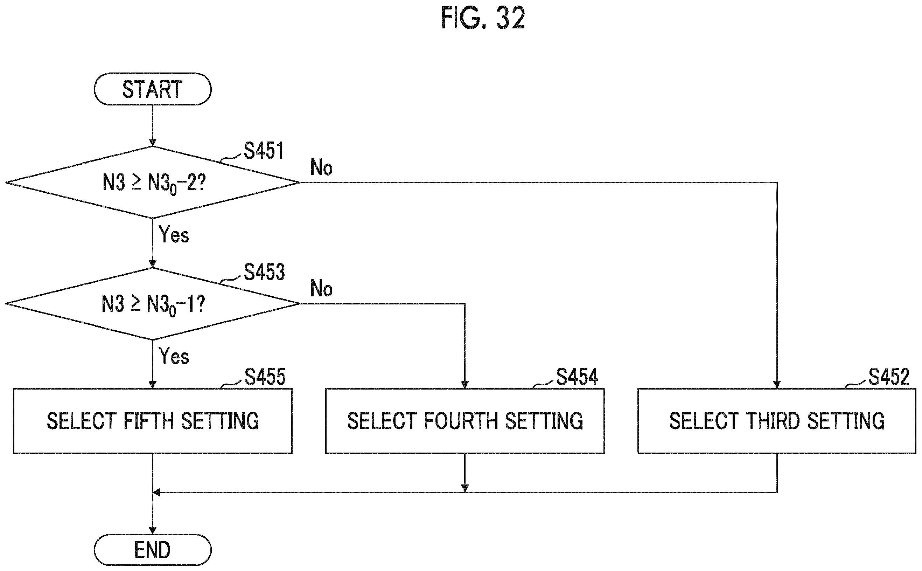

Fig. 32 is a flowchart showing processing of a setting selection unit according to a first modification example. The setting selection unit 732 of the present modification example selects any one of the third setting, the fourth setting, and the fifth setting based on the detection result of the total production number detecting unit 733. The setting storage unit 731 stores a plurality of settings to control the filling with the molding material according to the total production number N3 of the finished products 40. The setting selection unit 732 selects the setting according to N3. For example, the processing after Step S451 shown in Fig. 32 is performed after the use of the third setting starts. As described above, the third setting is used in the control to fill all the first cavity space 831, the second cavity space 833, and the third cavity space 835 with the molding material. The third setting is used to manufacture the first primary molding product 20, the secondary molding product 30, and the tertiary molding product 40. The processing after Step S451 shown in Fig. 32 may be repeated until the total production number N3 of the tertiary molding products 40 reaches the target number N3o.

First, the setting selection unit 732 checks whether or not the total production number N3 of the tertiary molding product 40 is equal to or more than a predetermined number (for example, M3o-2) (Step S451). N3o is the target number of the total production number N3 of the tertiary molding product 40, as described above.

In a case where N3 is less than N3o-2 (No in Step S451), three or more shots remain until the total production number N3 of the tertiary molding product 40 reaches N3₀. In this case, even when the primary molding product 20 and the secondary molding product 30 are manufactured by the next shot, the manufactured primary molding product 20 and the secondary molding product 30 can be made into the tertiary molding product 40 by the remaining two or more shots. In this case, the setting selection unit 732 selects the third setting (Step S452).

Meanwhile, in a case where N3 is N3o-2 or more (Yes in Step S451), two or less shots remain until the total production number N3 of the tertiary molding product 40 reaches N3o. In this case, even when the primary molding product 20 is manufactured by the next shot, it is impossible to make the manufactured primary molding product 20 into the tertiary molding product 40. Therefore, in this case, the setting selection unit 732 selects any one of the fourth setting and the fifth setting as described later. As described above, both the fourth setting and the fifth setting are settings in which the primary molding product 20 is not manufactured. Accordingly, when the mass production of the tertiary molding product 40 ends, it is possible to prevent the primary molding product 20 from remaining.

The setting selection unit 732 checks whether or not the total production number N3 of the tertiary molding product 40 is N3₀-1 to determine whether to select the fourth setting or the fifth setting (Step S453).

When N3 is N3o-2 instead of N3₀-1 (No in Step S453), two shots remain until the total production number N3 of the tertiary molding product 40 reaches N3o. In this case, even when the secondary molding product 30 is manufactured by the next shot, the manufactured secondary molding product 30 can be made into the tertiary molding product 40 by the remaining one shot. Accordingly, in this case, the setting selection unit 732 selects the fourth setting (Step S454) . As described above, the fourth setting is used in the control to fill only the second cavity space 833 and the third cavity space 835 among the first cavity space 831, the second cavity space 833, and the third cavity space 835 with the molding material. The fourth setting is used to manufacture only the secondary molding product 30 and the tertiary molding product 40.

Meanwhile, in a case where N3 is N3₀-1 (Yes in Step S453), one shot remains until the total production number N3 of the tertiary molding product 40 reaches N3o. In this case, even when the secondary molding product 30 is manufactured by the next shot, it is impossible to make the manufactured secondary molding product 30 into the tertiary molding product 40. Moreover, in this case, the setting selection unit 732 selects the fifth setting (Step S455). As described above, the fifth setting is used in the control to fill only the third cavity space 835 among the first cavity space 831, the second cavity space 833, and the third cavity space 835 with the molding material. The fifth setting is used to manufacture only the tertiary molding product 40. Accordingly, when the mass production of the tertiary molding product 40 ends, it is possible to prevent the secondary molding product 30 from remaining.

In this way, the setting selection unit 732 selects the settings used to control the mold unit 800 and the injection unit 300. The setting stored in the setting storage unit 731 in advance is read out and is used as the selected setting. The setting storage unit 731 stores a plurality of settings to control the filling with the molding material according to a difference between the remaining production number (N3o-N3) of the tertiary molding product 40 which is the nth molding product and the number of times of insert molding required until an mth (m is a natural number of 1 or more and n-1 or less) molding product is the finished product. The setting selection unit 732 selects the setting according to the difference between the remaining production number (N3o-N3) of the tertiary molding product 40 which is the nth molding product and the number of times of insert molding required until the mth (m is a natural number of 1 or more and n-1 or less) molding product is the finished product. The molding machine control unit 710 performs the shot once, based on the setting selected by the setting selection unit 732. Thereafter, the processing after Step S451 shown in Fig. 32 may be repeated until the total production number N3 of the tertiary molding products 40 reaches the target number N3₀.

The setting selection unit 732 of the first modification example selects any one of the third setting, the fourth setting, and the fifth setting based on only the detection result of the total production number detecting unit 733. However, the present invention is not limited to this. The setting selection unit 732 may select any one of the third setting, the fourth setting, and the fifth setting based on at least one of the detection result of the total production number detecting unit 733, the monitoring result of the stock number monitoring unit 734, and the detection result of the delivery detection unit 735.

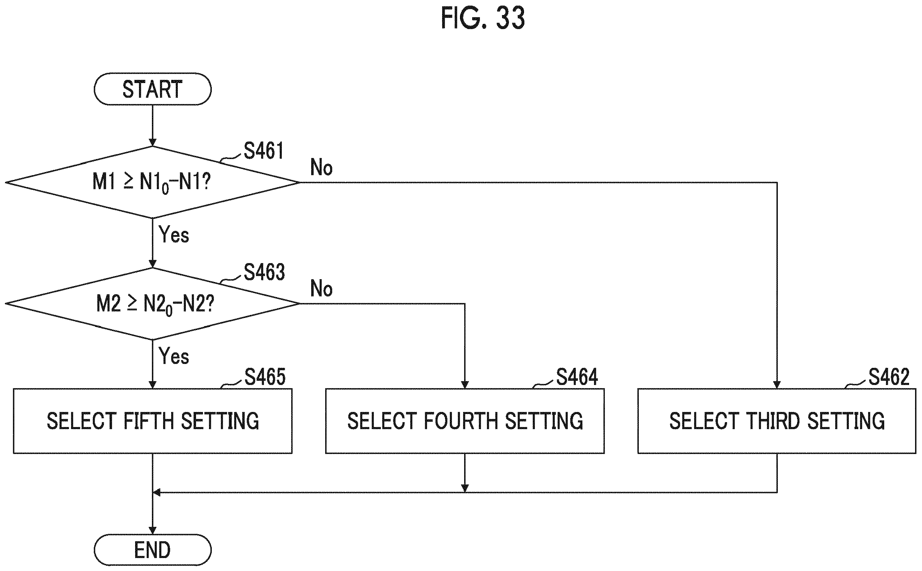

Fig. 33 is a flowchart showing processing of a setting selection unit according to a second modification example. The setting selection unit 732 of the present modification example selects any one of the third setting, the fourth setting, and the fifth setting based on the detection result of the total production number detecting unit 733 and the monitoring result of the stock number monitoring unit 734. For example, the processing after Step S461 shown in Fig. 33 is performed after the use of the third setting starts. As described above, the third setting is used in the control to fill all the first cavity space 831, the second cavity space 833, and the third cavity space 835 with the molding material. The third setting is used to manufacture the first primary molding product 20, the secondary molding product 30, and the tertiary molding product 40. The processing after Step S461 shown in Fig. 33 may be repeated until the total production number N3 of the tertiary molding products 40 reaches the target number N3o.

First, the setting selection unit 732 checks whether or not the number of stocks M1 of the primary molding product 20 which is the insert material for the secondary molding product is equal to or more than a predetermined number (for example, N1₀-N1) (Step S461). As described above, N1 is the total production number of the primary molding product 20. As described above, N1₀ is the target number of the total production number N1 of the primary molding product 20. As described above, N1₀ is equal to a sum of the target number N3₀ of tertiary molding product 40, the number of the defective products generated in the tertiary molding, and the number of the defective products generated in the secondary molding.

In a case where M1 is less than N1₀-N1 (No in Step S461), the number of stocks M1 of the primary molding product 20 which is the insert material for the secondary molding product is insufficient to manufacture N3₀ tertiary molding products 40. Therefore, in this case, in the next shot, the setting selection unit 732 selects the third setting (Step S462). The third setting is a setting for manufacturing the primary molding product 20, and thus, the number of stocks M1 of the primary molding product 20 can be secured.

Meanwhile, in a case where M1 is equal to or more than N1₀-N1 (Yes in Step S461), the number of stocks M1 of the primary molding product 20 which is the insert material for the secondary molding product is sufficient to manufacture N3₀ tertiary molding products 40. Therefore, in this case, the setting selection unit 732 selects any one of the fourth setting and the fifth setting as described later. As described above, both the fourth setting and the fifth setting are the settings in which the primary molding product 20 is not manufactured. Accordingly, when the mass production of the tertiary molding product 40 ends, it is possible to prevent the primary molding product 20 from remaining.

The setting selection unit 732 checks whether or not the number of stocks M2 of the secondary molding product 30 which the insert material for the tertiary molding product is equal to or more than a predetermined number (for example, N2₀-N2) to determine whether to select the fourth setting or the fifth setting (Step S463). As described above, N2 is the total production number of the secondary molding product 30. As described above, N2₀ is the target number of the total production number N2 of the secondary molding product 30. As described above, N2o is equal to a sum of the target number N3o of tertiary molding product 40 and the number of the defective products generated in the tertiary molding.

If M2 is less than N2o-N2 (No in Step S463), the number of stocks M2 of the secondary molding product 30 which is the insert material for the tertiary molding product is insufficient to manufacture N3₀ tertiary molding products 40. Therefore, in this case, in the next shot, the setting selection unit 732 selects the fourth setting (Step S464) . The fourth setting is a setting for manufacturing the secondary molding product 30, and thus, the number of stocks M2 of the secondary molding product 30 can be secured.

Meanwhile, when M2 is equal to or more than N2o-N2 (Yes in Step S463), the number of stocks M2 of the secondary molding product 30 which is the insert material for the tertiary molding product is sufficient to manufacture N3₀ tertiary molding products 40. Therefore, in this case, the setting selection unit 732 selects the fifth setting (Step S465). As described above, the fifth setting is the setting in which the secondary molding product 30 is not manufactured. Accordingly, when the mass production of the tertiary molding product 40 ends, it is possible to prevent the secondary molding product 30 from remaining.

In this way, the setting selection unit 732 selects the settings used to control the mold unit 800 and the injection unit 300. The setting stored in the setting storage unit 731 in advance is read out and is used as the selected setting. The setting storage unit 731 stores a plurality of settings to control the filling with the molding material according to the number of stocks of the mth (m is a natural number of 1 or more and n-1 or less) molding product. The setting selection unit 732 selects a setting according to the number of stocks of the mth (m is a natural number of 1 or more and n-1 or less) molding product. The molding machine control unit 710 performs the shot once, based on the setting selected by the setting selection unit 732. Thereafter, the processing after Step S461 shown in Fig. 33 may be repeated until the total production number N3 of the tertiary molding products 40 reaches the target number N3₀.

### Reference Signs List

- 1: injection molding system
- 10: injection molding machine
- 20: primary molding product
- 30: secondary molding product
- 40: tertiary molding product
- 300: injection unit
- 500: conveyance machine
- 600: cooling table
- 610: primary molding product cooling portion
- 620: secondary molding product cooling portion
- 700: controller
- 731: setting storage unit
- 732: setting selection unit
- 733: total production number detecting unit
- 734: stock number monitoring unit
- 735: delivery detection unit
- 800: mold unit
- 812: injection port
- 831: first cavity space
- 833: second cavity space
- 835: third cavity space
- 841: first valve
- 843: second valve
- 845: third valve

## Claims

1. An injection molding machine (10) comprising:
an injection unit (300) configured to fill a plurality of cavity spaces of a mold unit (800) with a molding material; and
a controller (700) configured to control the injection unit (300), wherein an nth molding product which is obtained by sequentially moving a molding product between n cavity spaces of the plurality of cavity spaces to perform insert molding is molded as a finished product, the n being a natural number of 2 or more,
wherein the controller (700) has a setting storage unit (731) in which a setting of a control to fill the plurality of cavity spaces with the molding material is stored,
wherein the setting storage unit (731) is configured to store a setting of a control of filling a predetermined cavity space of the plurality of cavity spaces with the molding material and of not filling a cavity space other than the predetermined cavity space with the molding material, and
**characterized in that** the controller (700) is configured to monitor the number of stocks of an mth molding product, and select a setting of a control stored in the setting storage unit (731) based on the number of stocks of the mth molding product, the m being a natural number of 1 or more and n-1 or less.

2. The injection molding machine (10) according to claim 1,
wherein the setting storage unit (731) is configured to store a setting of a control, in cavity spaces on which the insert molding is performed, of filling a cavity space having an insert material with the molding material, and of not filling a cavity space without the insert material with the molding material.

3. The injection molding machine (10) according to claim 1 or 2,
wherein the setting storage unit (731) is configured to store a plurality of settings to control the filling with the molding material according to a total production number of finished products.

4. The injection molding machine (10) according to claim 3,
wherein the setting storage unit (731) is configured to store a plurality of settings to control the filling with the molding material according to a difference between a remaining production number of the finished product and the number of times of the insert molding required until an mth molding product is the finished product, the m being a natural number of 1 or more and n-1 or less.

5. The injection molding machine (10) according to claim 3 or 4,
wherein the setting storage unit (731) is configured to store a plurality of settings to control the filling with the molding material according to the number of stocks of an mth molding product, the m being a natural number of 1 or more and n-1 or less.

6. The injection molding machine (10) according to any one of claims 1 to 5,
wherein the mold unit (800) includes
a first cavity space (831) in which a primary molding product is molded, and
a second cavity space (833) into which the primary molding product is inserted and which is filled with the molding material to mold a secondary molding product, and
wherein the setting storage unit (731) is configured to store a setting of a control to fill only the first cavity space (831) with the molding material and a setting of a control to fill the first cavity space (831) and the second cavity space (833) with the molding material.

7. The injection molding machine (10) according to any one of claims 1 to 6,
wherein the mold unit (800) includes
a first cavity space (831) in which a primary molding product is molded, and
a second cavity space (833) into which the primary molding product is inserted and which is filled with the molding material to mold a secondary molding product,
wherein the setting storage unit (731) is configured to store a setting of a control to fill the first cavity space (831) and the second cavity space (833) with the molding material and a setting of a control to fill only the second cavity space (833) with the molding material.

8. An injection molding system (1) comprising:
the injection molding machine (10) according to claim 6 or 7; and
the mold unit (800).

9. The injection molding system (1) according to claim 8, further comprising:
a primary molding product cooling portion (610) configured to cool the primary molding product extracted from the mold unit (800); and
a conveyance machine (500) configured to convey the primary molding product cooled by the primary molding product cooling portion (610) from the primary molding product cooling portion (610) to the mold unit (800) to insert the primary molding product into the second cavity space (833).

10. The injection molding system (1) according to claim 9,
wherein the controller (700) includes
a stock number monitoring unit (734) configured to monitor the number of stocks of the primary molding product which is conveyable from the primary molding product cooling portion (610) to the mold unit (800) so as to be inserted into the second cavity space (833), and
a setting selection unit (732) configured to select a setting of a control stored in the setting storage unit (731) based on the number of stocks of the primary molding product.

11. The injection molding system (1) according to claim 9 or 10,
wherein the controller (700) includes
a delivery detection unit (735) configured to detect delivery of the primary molding product cooled by the primary molding product cooling portion (610) from the conveyance machine (500) to the mold unit (800), and
a setting selection unit (732) configured to select a setting used to control the mold unit (800) and the injection unit (300) based on success or failure of the delivery of the primary molding product cooled by the primary molding product cooling portion (610).

12. The injection molding system (1) according to any one of claims 8 to 11,
wherein the controller (700) includes
a total production number detecting unit (733) configured to detect a total production number of the primary molding products from a preset time, and
a setting selection unit (732) configured to select a setting used to control the mold unit (800) and the injection unit (300) based on the total production number of the primary molding product.

13. The injection molding system (1) according to any one of claims 8 to 12,
wherein the mold unit (800) includes a third cavity space (835) into which the secondary molding product is inserted and which is filled with the molding material to mold a tertiary molding product, and
wherein the injection molding system (1) further comprises:
a secondary molding product cooling portion (620) configured to cool the secondary molding product extracted from the mold unit (800); and
a conveyance machine (500) configured to convey the secondary molding product cooled by the secondary molding product cooling portion (620) from the secondary molding product cooling portion (620) to the mold unit (800) to insert the secondary molding product into the third cavity space (835).

14. The injection molding system (1) according to claim 13,
wherein the controller (700) includes
a stock number monitoring unit (734) configured to monitor the number of stocks of the secondary molding product which is conveyable from the secondary molding product cooling portion (620) to the mold unit (800) so as to be inserted into the third cavity space (835), and
a setting selection unit (732) configured to select a setting used to control the mold unit (800) and the injection unit (300) based on the number of stocks of the secondary molding product.

15. The injection molding system (1) according to claim 13 or 14,
wherein the controller (700) includes
a delivery detection unit (735) configured to detect delivery of the secondary molding product cooled by the secondary molding product cooling portion (620) from the conveyance machine (500) to the mold unit (800), and
a setting selection unit (732) configured to select a setting used to control the mold unit (800) and the injection unit (300) based on success or failure of the delivery of the secondary molding product cooled by the secondary molding product cooling portion (620).

## Patentansprüche

1. Spritzgießmaschine (10), umfassend:
eine Einspritzeinheit (300), die konfiguriert ist, mehrere Kavitätsräume einer Formeinheit (800) mit einem Formmaterial zu befüllen; und
eine Steuerung (700), die konfiguriert ist, die Einspritzeinheit (300) zu steuern,
wobei
ein n-tes Formerzeugnis, das durch sequenzielles Bewegen eines Formerzeugnisses zwischen n Kavitätsräumen der mehreren Kavitätsräume erhalten wird, um Insert-Molding durchzuführen, als ein fertiges Erzeugnis geformt wird, wobei n eine natürliche Zahl von 2 oder größer ist,
wobei die Steuerung (700) eine
Einstellungsspeichereinheit (731) aufweist, in der eine Einstellung einer Steuerung zum Befüllen der mehreren Kavitätsräume mit dem Formmaterial gespeichert ist,
wobei die Einstellungsspeichereinheit (731) konfiguriert ist, eine Einstellung einer Steuerung des Befüllens eines vorbestimmten Kavitätsraums von den mehreren Kavitätsräumen mit dem Formmaterial und des Nichtbefüllens eines anderen Kavitätsraums als der vorbestimmte Kavitätsraum mit dem Formmaterial zu speichern, und
**dadurch gekennzeichnet, dass**
die Steuerung (700) konfiguriert ist, die Anzahl an Beständen eines m-ten Formerzeugnisses zu überwachen, und eine Einstellung einer Steuerung, die in der Einstellungsspeichereinheit (731) gespeichert ist, auf Grundlage der Anzahl an Beständen des m-ten Formerzeugnisses auszuwählen, wobei m eine natürliche Zahl von 1 oder größer und n-1 oder weniger ist.

2. Spritzgießmaschine (10) nach Anspruch 1,
wobei die Einstellungsspeichereinheit (731) konfiguriert ist, in Kavitätsräumen, an welchen das Insert-Molding durchgeführt wird, eine Einstellung einer Steuerung des Befüllens mit dem Formmaterial eines Kavitätsraums, der ein Insertmaterial aufweist, und des Nichtbefüllens mit dem Formmaterial eines Kavitätsraums, der kein Insertmaterial aufweist, zu speichern.

3. Spritzgießmaschine (10) nach Anspruch 1 oder 2, wobei die Einstellungsspeichereinheit (731) konfiguriert ist, mehrere Einstellungen zum Steuern des Befüllens mit dem Füllmaterial gemäß einer Gesamtproduktionsanzahl an fertigen Erzeugnissen zu speichern.

4. Spritzgießmaschine (10) nach Anspruch 3,
wobei die Einstellungsspeichereinheit (731) konfiguriert ist, mehrere Einstellungen zum Steuern des Befüllens mit dem Formmaterial gemäß einer Differenz zwischen einer verbliebenen Produktionsanzahl des fertigen Erzeugnisses und der Anzahl von Malen des benötigten Insert-Moldings, bis ein m-tes Formerzeugnis das fertige Erzeugnis ist, zu speichern, wobei m eine natürliche Zahl von 1 oder größer und n-1 oder kleiner ist.

5. Spritzgießmaschine (10) nach Anspruch 3 oder 4, wobei die Einstellungsspeichereinheit (731) konfiguriert ist, mehrere Einstellungen zum Steuern des Befüllens mit dem Formmaterial gemäß der Anzahl an Beständen eines m-ten Formerzeugnisses zu speichern, wobei m eine natürliche Zahl von 1 oder größer und n-1 oder kleiner ist.

6. Spritzgießmaschine (10) nach einem der Ansprüche 1 bis 5,
wobei die Formeinheit (800)
einen ersten Kavitätsraum (831), in dem ein primäres Formerzeugnis geformt wird; und
einen zweiten Kavitätsraum (833), in welchen das primäre Formerzeugnis eingesetzt wird und welcher mit dem Formmaterial befüllt wird, um ein sekundäres Formerzeugnis zu formen, umfasst und
wobei die Einstellungsspeichereinheit (731) konfiguriert ist, eine Einstellung einer Steuerung zum Befüllen nur des ersten Kavitätsraums (831) mit dem Formmaterial und eine Einstellung einer Steuerung zum Befüllen des ersten Kavitätsraums (831) und des zweiten Kavitätsraums (833) mit dem Formmaterial zu speichern.

7. Spritzgießmaschine (10) nach einem der Ansprüche 1 bis 6,
wobei die Formeinheit (800)
einen ersten Kavitätsraum (831), in dem ein primäres Formerzeugnis geformt wird, und
einen zweiten Kavitätsraum (833), in den das primäre Formerzeugnis eingesetzt wird und der mit dem Formmaterial zum Formen eines sekundären Formerzeugnisses befüllt wird, umfasst,
wobei die Einstellungsspeichereinheit (731) konfiguriert ist, eine Einstellung einer Steuerung zum Befüllen des ersten Kavitätsraums (831) und des zweiten Kavitätsraums (833) mit dem Formmaterial und eine Einstellung einer Steuerung des Befüllens nur des zweiten Kavitätsraums (833) mit dem Formmaterial zu speichern.

8. Spritzgießsystem (1), umfassend:
die Spritzgießmaschine (10) nach Anspruch 6 oder 7; und
die Formeinheit (800).

9. Spritzgießsystem (1) nach Anspruch 8, ferner umfassend:
einen primären Formerzeugniskühlabschnitt (610), der konfiguriert ist, das primäre Formerzeugnis, das aus der Formeinheit (800) extrahiert wird, zu kühlen; und
eine Fördermaschine (500), die konfiguriert ist, das primäre Formerzeugnis, das von dem primären Formerzeugniskühlabschnitt (610) gekühlt wird, von dem primären Formerzeugniskühlabschnitt (610) zu der Formeinheit (800) zu fördern, um das primäre Formerzeugnis in den zweiten Kavitätsraum (833) einzusetzen.

10. Spritzgießsystem (1) nach Anspruch 9,
wobei die Steuerung (700)
eine Bestandsanzahlüberwachungseinheit (734), die konfiguriert ist, die Anzahl an Beständen des primären Formerzeugnisses zu überwachen, das von dem primären Formerzeugniskühlabschnitt (610) zu der Formeinheit (800) förderbar ist, um in den zweiten Kavitätsraum (833) eingesetzt zu werden, und
eine Einstellungsauswahleinheit (732), die konfiguriert ist, eine Einstellung einer Steuerung, die in der Einstellungsspeichereinheit (731) gespeichert ist, auf Grundlage der Anzahl an Beständen des primären Formerzeugnisses auszuwählen, umfasst.

11. Spritzgießsystem (1) nach Anspruch 9 oder 10, wobei die Steuerung (700)
eine Abgabedetektionseinheit (735), die konfiguriert ist, Abgabe des primären Formerzeugnisses, das von dem primären Formerzeugniskühlabschnitt (610) gekühlt wird, von der Fördermaschine (500) an die Formeinheit (800) zu detektieren, und
eine Einstellungsauswahleinheit (732), die konfiguriert ist, eine Einstellung auszuwählen, die dazu verwendet wird, die Formeinheit (800) und die Einspritzeinheit (300) auf Grundlage von Erfolg oder Scheitern der Abgabe des primären Formerzeugnisses, das von dem primären Formerzeugniskühlabschnitt (610) gekühlt wird, zu steuern, umfasst.

12. Spritzgießsystem (1) nach einem der Ansprüche 8 bis 11,
wobei die Steuerung (700)
eine Gesamtproduktionsanzahldetektionseinheit (733), die konfiguriert ist, eine Gesamtproduktionsanzahl der primären Formerzeugnisse ab einer vorbestimmten Zeit zu detektieren, und
eine Einstellungsauswahleinheit (732), die konfiguriert ist, eine Einstellung auszuwählen, die dazu verwendet wird, die Formeinheit (800) und die Einspritzeinheit (300) auf Grundlage der Gesamtproduktionsanzahl des primären Formerzeugnisses zu steuern, umfasst.

13. Spritzgießsystem (1) nach einem der Ansprüche 8 bis 12,
wobei die Formeinheit (800) einen dritten Kavitätsraum (835) umfasst, in den das sekundäre Formprodukt eingesetzt wird und der mit dem Formmaterial zum Formen eines tertiären Formerzeugnisses befüllt wird, und
wobei das Spritzgießsystem (1) ferner umfasst:
einen sekundären Formerzeugniskühlabschnitt (620), der konfiguriert ist, das sekundäre Formerzeugnis, das aus der Formeinheit (800) extrahiert wird, zu kühlen; und
eine Fördermaschine (500), die konfiguriert ist, das sekundäre Formerzeugnis, das von dem sekundären Formerzeugniskühlabschnitt (620) gekühlt wurde, von dem sekundären Formerzeugniskühlabschnitt (620) zu der Formeinheit (800) zu fördern, um das sekundäre Formerzeugnis in den dritten Kavitätsraum (835) einzusetzen.

14. Spritzgießsystem (1) nach Anspruch 13,
wobei die Steuerung (700)
eine Bestandsanzahlüberwachungseinheit (734), die konfiguriert ist, die Anzahl an Beständen des sekundären Formerzeugnisses zu überwachen, die von dem sekundären Formerzeugniskühlabschnitt (620) zu der Formeinheit (800) förderbar ist, um in den dritten Kavitätsraum (835) eingesetzt zu werden, und
eine Einstellungsauswahleinheit (732), die konfiguriert ist, eine Einstellung auszuwählen, die dazu verwendet wird, die Formeinheit (800) und die Einspritzeinheit (300) auf Grundlage der Anzahl an Beständen des sekundären Formerzeugnisses zu steuern, umfasst.

15. Spritzgießsystem (1) nach Anspruch 13 oder 14, wobei die Steuerung (700)
eine Abgabedetektionseinheit (735), die konfiguriert ist, Abgabe des sekundären Formerzeugnisses, das von dem sekundären Formerzeugniskühlabschnitt (620) gekühlt wird, von der Fördermaschine (500) zu der Formeinheit (800) zu detektieren, und
eine Einstellungsauswahleinheit (732), die konfiguriert ist, eine Einstellung auszuwählen, die dazu verwendet wird, die Formeinheit (800) und die Einspritzeinheit (300) auf Grundlage von Erfolg oder Scheitern der Abgabe des sekundären Formerzeugnisses, das von dem sekundären Formerzeugniskühlabschnitt (620) gekühlt wird, zu steuern, umfasst.

## Revendications

1. Une machine de moulage par injection (10) comprenant :
une unité d'injection (300) configurée pour remplir une pluralité d'espaces de cavité d'une unité de moule (800) avec un matériau de moulage ; et
un contrôleur (700) configuré pour contrôler l'unité d'injection (300),
dans laquelle un n^{ième} produit de moulage qui est obtenu en déplaçant séquentiellement un produit de moulage entre n espaces de cavité de la pluralité d'espaces de cavité afin d'effectuer un moulage par insertion est moulé en guise de produit fini, le n étant un entier naturel égal ou supérieur à 2,
dans laquelle le contrôleur (700) possède une unité de stockage de paramètres (731) dans laquelle un paramètre d'une commande de remplissage de la pluralité d'espaces de cavité avec le matériau de moulage est stocké,
dans laquelle l'unité de stockage de paramètres (731) est configurée pour stocker un paramètre d'une commande de remplissage d'un espace de cavité prédéterminé de la pluralité d'espaces de cavité avec le matériau de moulage et de non-remplissage d'un espace de cavité autre que l'espace de cavité prédéterminé avec le matériau de moulage, et
**caractérisée en ce que**
le contrôleur (700) est configuré pour surveiller le nombre de stocks d'un m^{ième} produit de moulage, et pour sélectionner un paramètre d'une commande stocké dans l'unité de stockage de paramètres (731) sur la base du nombre de stocks du m^{ième} produit de moulage, le m étant un entier naturel égal ou supérieur à 1 et égal ou inférieur à n-1.

2. La machine de moulage par injection (10) selon la revendication 1,
dans laquelle l'unité de stockage de paramètres (731) est configurée pour stocker un paramètre d'une commande, dans les espaces de cavité sur lesquels le moulage par insertion est effectué, de remplissage d'un espace de cavité ayant un matériau d'insertion avec le matériau de moulage, et de non-remplissage d'un espace de cavité sans le matériau d'insertion avec le matériau de moulage.

3. La machine de moulage par injection (10) selon la revendication 1 ou 2,
dans laquelle l'unité de stockage de paramètres (731) est configurée pour stocker une pluralité de paramètres destinés à contrôler le remplissage avec le matériau de moulage selon un nombre total de produits finis fabriqués.

4. La machine de moulage par injection (10) selon la revendication 3,
dans laquelle l'unité de stockage de paramètres (731) est configurée pour stocker une pluralité de paramètres destinés à contrôler le remplissage avec le matériau de moulage selon une différence entre un nombre restant de produits finis fabriqués et le nombre de fois où le moulage par injection est nécessaire jusqu'à ce qu'un m^{ième} produit de moulage soit le produit fini, le m étant un entier naturel égal ou supérieur à 1 et égal ou inférieur à n-1.

5. La machine de moulage par injection (10) selon la revendication 3 ou 4,
dans laquelle l'unité de stockage de paramètres (731) est configurée pour stocker une pluralité de paramètres destinés à contrôler le remplissage avec le matériau de moulage selon le nombre de stocks d'un m^{ième} produit de moulage, le m étant un entier naturel égal ou supérieur à 1 et égal ou inférieur à n-1.

6. La machine de moulage par injection (10) selon l'une quelconque des revendications 1 à 5,
dans laquelle l'unité de moule (800) comprend
un premier espace de cavité (831) dans lequel un produit de moulage primaire est moulé, et
un second espace de cavité (833) dans lequel le produit de moulage primaire est inséré et qui est rempli avec le matériau de moulage afin de mouler un produit de moulage secondaire, et
dans laquelle l'unité de stockage de paramètres (731) est configurée pour stocker un paramètre d'une commande de remplissage du premier espace de cavité uniquement (831) avec le matériau de moulage et un paramètre d'une commande de remplissage du premier espace de cavité (831) et du second espace de cavité (833) avec le matériau de moulage.

7. La machine de moulage par injection (10) selon l'une quelconque des revendications 1 à 6,
dans laquelle l'unité de moule (800) comprend
un premier espace de cavité (831) dans lequel un produit de moulage primaire est moulé, et
un second espace de cavité (833) dans lequel le produit de moulage primaire est inséré et qui est rempli avec le matériau de moulage afin de mouler un produit de moulage secondaire,
dans laquelle l'unité de stockage de paramètres (731) est configurée pour stocker un paramètre d'une commande de remplissage du premier espace de cavité (831) et du second espace de cavité (833) avec le matériau de moulage et un paramètre d'une commande de remplissage du second espace de cavité uniquement (833) avec le matériau de moulage.

8. Un système de moulage par injection (1) comprenant :
la machine de moulage par injection (10) selon la revendication 6 ou 7 ; et
l'unité de moule (800).

9. Le système de moulage par injection (1) selon la revendication 8, comprenant en outre :
une partie de refroidissement de produit de moulage primaire (610) configurée pour refroidir le produit de moulage primaire extrait de l'unité de moule (800) ; et
une machine de transport (500) configurée pour transporter le produit de moulage primaire refroidi par la partie de refroidissement de produit de moulage primaire (610) de la partie de refroidissement de produit de moulage primaire (610) jusqu'à l'unité de moule (800) afin d'insérer le produit de moulage primaire dans le second espace de cavité (833).

10. Le système de moulage par injection (1) selon la revendication 9,
dans lequel le contrôleur (700) comprend
une unité de surveillance de nombre de stocks (734) configurée pour surveiller le nombre de stocks du produit de moulage primaire qui peut être transporté de la partie de refroidissement de produit de moulage primaire (610) jusqu'à l'unité de moule (800) de façon à être inséré dans le second espace de cavité (833), et
une unité de sélection de paramètre (732) configurée pour sélectionner un paramètre d'une commande stocké dans l'unité de stockage de paramètres (731) sur la base du nombre de stocks du produit de moulage primaire.

11. Le système de moulage par injection (1) selon la revendication 9 ou 10,
dans lequel le contrôleur (700) comprend
une unité de détection de livraison (735) configurée pour détecter la livraison du produit de moulage primaire refroidi par la partie de refroidissement de produit de moulage primaire (610) par la machine de transport (500) à l'unité de moule (800), et
une unité de sélection de paramètre (732) configurée pour sélectionner un paramètre utilisé pour contrôler l'unité de moule (800) et l'unité d'injection (300) sur la base de la réussite ou de l'échec de la livraison du produit de moulage primaire refroidi par la partie de refroidissement de produit de moulage primaire (610).

12. Le système de moulage par injection (1) selon l'une quelconque des revendications 8 à 11,
dans lequel le contrôleur (700) comprend
une unité de détection de nombre total de production (733) configurée pour détecter un nombre total de produits de moulage primaires fabriqués à partir d'un moment prédéfini, et
une unité de sélection de paramètre (732) configurée pour sélectionner un paramètre utilisé pour contrôler l'unité de moule (800) et l'unité d'injection (300) sur la base du nombre total de produits de moulage primaires fabriqués.

13. Le système de moulage par injection (1) selon l'une quelconque des revendications 8 à 12,
dans lequel l'unité de moule (800) comprend un troisième espace de cavité (835) dans lequel le produit de moulage secondaire est inséré et qui est rempli avec le matériau de moulage afin de mouler un produit de moulage tertiaire, et
dans lequel le système de moulage par injection (1) comprend en outre :
une partie de refroidissement de produit de moulage secondaire (620) configurée pour refroidir le produit de moulage secondaire extrait de l'unité de moule (800) ; et
une machine de transport (500) configurée pour transporter le produit de moulage secondaire refroidi par la partie de refroidissement de produit de moulage secondaire (620) de la partie de refroidissement de produit de moulage secondaire (620) jusqu'à l'unité de moule (800) afin d'insérer le produit de moulage secondaire dans le troisième espace de cavité (835).

14. Le système de moulage par injection (1) selon la revendication 13,
dans lequel le contrôleur (700) comprend
une unité de surveillance de nombre de stocks (734) configurée pour surveiller le nombre de stocks du produit de moulage secondaire qui peut être transporté de la partie de refroidissement de produit de moulage secondaire (620) jusqu'à l'unité de moule (800) de façon à être inséré dans le troisième espace de cavité (835), et
une unité de sélection de paramètre (732) configurée pour sélectionner un paramètre utilisé pour contrôler l'unité de moule (800) et l'unité d'injection (300) sur la base du nombre de stocks du produit de moulage secondaire.

15. Le système de moulage par injection (1) selon la revendication 13 ou 14,
dans lequel le contrôleur (700) comprend
une unité de détection de livraison (735) configurée pour détecter la livraison du produit de moulage secondaire refroidi par la partie de refroidissement de produit de moulage secondaire (620) par la machine de transport (500) à l'unité de moule (800), et
une unité de sélection de paramètre (732) configurée pour sélectionner un paramètre utilisé pour contrôler l'unité de moule (800) et l'unité d'injection (300) sur la base de la réussite ou de l'échec de la livraison du produit de moulage secondaire refroidi par la partie de refroidissement de produit de moulage secondaire (620).
